(19) Europäisches Patentamt
European Patent Office
Office européen des brevets

(11) EP 4 654 689 A1

(12) **EUROPEAN PATENT APPLICATION**
published in accordance with Art. 153(4) EPC

(43) Date of publication:
**26.11.2025 Bulletin 2025/48**

(21) Application number: **24744090.2**

(22) Date of filing: **04.01.2024**

(51) International Patent Classification (IPC):
***H04W 64/00*** *(2009.01)* ***H04W 72/25*** *(2023.01)*

(52) Cooperative Patent Classification (CPC):
**H04W 64/00; H04W 72/0446; H04W 72/25; H04W 72/566**

(86) International application number:
**PCT/CN2024/070618**

(87) International publication number:
**WO 2024/152914 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 CN 202310200744**
**17.02.2023 CN 202310155852**

(71) Applicant: **Huawei Technologies Co., Ltd.**
**Shenzhen, Guangdong 518129 (CN)**

(72) Inventors:
- **LI, Chao**
  **Shenzhen, Guangdong 518129 (CN)**
- **XU, Haibo**
  **Shenzhen, Guangdong 518129 (CN)**
- **YAO, Chuting**
  **Shenzhen, Guangdong 518129 (CN)**
- **XUE, Lixia**
  **Shenzhen, Guangdong 518129 (CN)**
- **HUANG, Can**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS, AND STORAGE MEDIUM, CHIP AND COMPUTER PROGRAM PRODUCT**

(57) A communication method and apparatus, a storage medium, a chip, and a computer program product are provided, to transmit a reference signal used for sidelink positioning between terminal apparatuses, so as to support a sidelink positioning technology. In this application, a first terminal apparatus obtains first configuration information. The first configuration information indicates a transmission parameter of a reference signal used for sidelink positioning. The transmission parameter indicates a quantity of resources for transmitting the reference signal, and the quantity of resources for transmitting the reference signal is associated with a quantity of resources for transmitting data. The first terminal apparatus sends the reference signal based on the transmission parameter. Because the quantity of resources for transmitting the reference signal is associated with the quantity of resources for transmitting the data, the quantity of resources for the reference signal in this application may be proper, so that a probability of a data decoding error can be reduced, and impact of reference signal transmission on data transmission can be reduced.

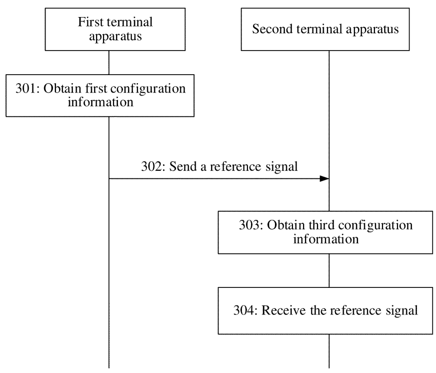


FIG. 3

EP 4 654 689 A1

## Description

### CROSS-REFERENCE TO RELATED APPLICATIONS

This application claims priorities to Chinese Patent Application No. 202310200744.7, filed with the China National Intellectual Property Administration on January 20, 2023 and entitled "MEASUREMENT METHOD", and to Chinese Patent Application No. 202310155852.7, filed with the China National Intellectual Property Administration on February 17, 2023 and entitled "COMMUNICATION METHOD AND APPARATUS, STORAGE MEDIUM, CHIP, AND COMPUTER PROGRAM PRODUCT", both of which are incorporated by reference in their entireties.

### TECHNICAL FIELD

This application relates to the field of mobile communication technologies, and in particular, to a communication method and apparatus, a storage medium, a chip, and a computer program product.

### BACKGROUND

In daily life and applications, location information becomes increasingly important basic information. When a user is located outdoors, a satellite can provide location information for device identification. When a user is in an indoor environment, it is more difficult to obtain an accurate location of a device. For example, in areas such as home entertainment, telemedicine, online learning and education, indoor shopping malls, indoor parking lots, and tunnels, people have a strong demand for precise location information. However, due to factors such as signal blocking, it is difficult for positioning technologies based on satellites and cellular base stations to meet a requirement of an actual application. In addition, even in an outdoor scenario, precision of a current civil satellite is generally within a range of 5 to 10 meters, while in a scenario requiring high-precision positioning, for example, in self-driving, the current satellite cannot meet an actual application requirement in an outdoor scenario.

To meet a requirement of the foregoing application scenario, positioning based on a sidelink (sidelink, SL) between devices is increasingly concerned.

### SUMMARY

This application provides a communication method and apparatus, a storage medium, a chip, and a computer program product, to transmit a reference signal used for sidelink positioning between terminal apparatuses, so as to support a sidelink positioning technology.

In a communication system, a resource pool may support both communication of a legacy (legacy) terminal apparatus and communication of a new (new) terminal apparatus. For example, the legacy terminal apparatus supports 3rd Generation Partnership Project (the 3rd Generation Partnership Project, 3GPP) release (release, Rel)-16 and/or 3GPP Rel-17, but does not support 3GPP Rel-18. The new terminal apparatus supports 3GPP Rel-16 and/or 3GPP Rel-17, and further supports 3GPP Rel-18 (for example, transmission of a sidelink positioning reference signal in 3GPP Rel-18). When a resource in the resource pool supports the new terminal apparatus and the legacy terminal apparatus, or the resource pool supports the new terminal apparatus and supports backward compatibility, the resource pool may be referred to as a shared resource pool in this application. The new terminal apparatus performs sidelink positioning based on the resource in the shared resource pool. For example, the new terminal apparatus sends a message by using the resource in the shared resource pool, where the message includes data and a reference signal used for sidelink positioning. A receive end may measure the reference signal, where an obtained measurement result may be used for sidelink positioning. The reference signal is transmitted in a PSSCH used to carry data (data that needs to be received by the new terminal apparatus and/or data that needs to be received by the legacy terminal apparatus). How to reduce impact of the reference signal on data transmission becomes a problem that needs to be urgently resolved.

For example, a transmit end transmits the reference signal in a puncturing manner. For example, the transmit end punctures a resource location originally used to transmit the data, and maps the reference signal to the punctured resource location, so as to send the data and the reference signal. The receive end needs to perform decoding based on data obtained through puncturing. If the punctured location is improper, a decoding error may occur.

This application provides a solution. In this solution, a new terminal apparatus (for example, a first terminal apparatus) sends a reference signal based on a transmission parameter. The transmission parameter indicates a quantity of resources for transmitting the reference signal. The quantity of resources for transmitting the reference signal is associated with a quantity of resources for transmitting data. The resource for transmitting the reference signal is located in a physical sidelink shared channel (physical sidelink shared channel, PSSCH) for transmitting the data. The resource for transmitting the reference signal is different from the resource for transmitting the data.

Because the quantity of resources for transmitting the reference signal is associated with the quantity of resources for transmitting the data, the quantity of resources for the reference signal in this application may be proper, so that a probability of a data decoding error at a receive end (a new terminal apparatus and/or a legacy terminal apparatus) can be reduced, and impact of reference signal transmission on data transmission can be reduced.

According to a first aspect, this application provides a communication method. The method is applicable to a first terminal apparatus. The first terminal apparatus may be, for example, a terminal device or a unit, a module, or a chip (system) in the terminal device, or may be a road side unit (road side unit, RSU) (or an on board unit (on board unit, OBU) or a relay node having a mobility capability) or a unit, a module, or a chip (system) in the RSU (or the OBU or the relay node having a mobility capability).

In this application, the first terminal apparatus obtains first configuration information. The first configuration information indicates a transmission parameter of a reference signal used for sidelink positioning. The transmission parameter indicates a quantity of resources for transmitting the reference signal, and the quantity of resources for transmitting the reference signal is associated with a quantity of resources for transmitting data. The first terminal apparatus sends the reference signal based on the transmission parameter. The resource for the reference signal is located in the PSSCH for transmitting the data. The resource for transmitting the reference signal is different from the resource for transmitting the data.

Because the quantity of resources for transmitting the reference signal is associated with the quantity of resources for transmitting the data, the quantity of resources for the reference signal in this application may be proper, so that a probability of a data decoding error can be reduced, and impact of reference signal transmission on data transmission can be reduced.

In a possible implementation, the transmission parameter is configured based on information used to determine the quantity of resources for transmitting the data. In this way, the transmission parameter can be configured more properly, so as to achieve a good balance between positioning performance and data transmission.

In a possible implementation, the quantity of resources for transmitting the data is determined based on at least one of the following parameters: a demodulation reference signal (demodulation reference signal, DMRS) pattern, a channel state information reference signal (channel state information reference signal, CSI-RS) pattern, a resource location of feedback information, or a period of a feedback channel. A quantity of resources for transmitting data in a slot may be more accurately determined based on the information, to provide a more accurate reference basis for determining the transmission parameter.

In a possible implementation, the DMRS pattern includes a quantity of time domain symbols of a DMRS and a resource location of the DMRS.

In a possible implementation, the quantity of resources for transmitting the data includes at least one of the following: a quantity of time domain symbols for transmitting the data, a quantity of frequency domain resources for transmitting the data, a quantity of space domain resources, or a quantity of code domain resources.

In a possible implementation, the transmission parameter further indicates a location of the resource for transmitting the reference signal. In this way, the first terminal apparatus may determine, based on the transmission parameter, a location of a resource that needs to be punctured and to which the reference signal is mapped.

In a possible implementation, the first configuration information is further used to configure a time domain gap. A location between two adjacent time domain symbols occupied by the reference signal is not greater than the time domain gap.

It can be learned that the location of the resource for transmitting the reference signal may be indicated in a plurality of manners. For example, the first configuration information is used to configure the time domain gap, and the location between two adjacent time domain symbols occupied by the reference signal set by the first terminal apparatus is not greater than the time domain gap. In this way, an excessively large interval between a plurality of reference signals received by a receive end can be avoided, thereby improving positioning performance.

In a possible implementation, the location of the resource for transmitting the reference signal includes at least one of a subcarrier spacing occupied by the reference signal in frequency domain, a frequency domain offset, or a bandwidth. It can be learned that the location of the resource for transmitting the reference signal may be indicated in a plurality of manners. In this way, flexibility of the solution can be improved.

In a possible implementation, the reference signal includes at least one of a DMRS, a CSI-RS, a beam management reference signal, or a sidelink positioning reference signal (sidelink positioning reference signal, SL-PRS). When the reference signal includes one or more of the DMRS, the CSI-RS, or the beam management reference signal, the first terminal apparatus may use an original signal in the PSSCH and/or a PSCCH as the reference signal. When the reference signal type includes the SL-PRS, the first terminal apparatus may puncture a resource in the PSSCH, and map the SL-PRS. There are many types of solutions, which are flexible.

In this application, the original signal in the PSSCH is used as the reference signal, for example, the DMRS, the CSI-RS, or the beam management reference signal. Alternatively, another original signal in the PSSCH may be used as the reference signal, for example, a possible signal in the PSSCH.

In a possible implementation, the DMRS is a DMRS carried on the PSSCH and/or a DMRS carried on the PSCCH.

In a possible implementation, the first terminal apparatus obtains second configuration information. The second configuration information includes: indication information of a signal type that is allowed to be used as the reference signal, and/or indication information of a signal type that is not allowed to be used as the reference signal. In this way, the first terminal apparatus may use the signal type allowed by the first configuration information as the reference signal, and the first configuration information may configure the type of the reference signal with reference to an actual application scenario, so as to achieve a good balance between transmission performance of the reference signal and transmission performance of the data.

In a possible implementation, the second configuration information further includes information about the CSI-RS and/or information about a PRS. The information about the CSI-RS includes at least one of a time domain period, a time domain location, a frequency domain density, or a quantity of ports of the CSI-RS. The information about the PRS includes time domain information and frequency domain information of the PRS.

The second configuration information configures a large amount of information, so that the first terminal apparatus can more accurately determine the location of the resource of the reference signal, and then the first terminal apparatus can send the reference signal that meets a requirement more accurately.

In a possible implementation, a signal transmitted in the PSSCH may be considered as the reference signal, for example, one or more of the DMRS, the CSI-RS, or the beam management reference signal. The location of the resource for transmitting the reference signal includes a location of a resource used as the reference signal in the PSSCH. In a possible implementation, information about the quantity of resources for transmitting the reference signal includes a quantity of resources of the signal used as the reference signal in the PSSCH.

The first terminal apparatus may further perform puncturing processing on a time domain symbol of the signal transmitted in the PSSCH, for example, one or more of the DMRS, the CSI-RS, or the beam management reference signal, to increase power of the signal considered as the reference signal (for example, one or more of the DMRS, the CSI-RS, or the beam management reference signal), thereby improving positioning performance.

In a possible implementation, the first configuration information further indicates to increase power of the reference signal, or not to increase power of the reference signal. In this way, the first terminal apparatus may increase the power of the reference signal when the first configuration information indicates to increase the power. Because the first configuration information may be configured with reference to an actual situation in a network, determining, based on the first configuration information, whether to increase the power of the reference signal may achieve good network performance.

In a possible implementation, the location of the resource for transmitting the reference signal includes a location of a resource that is punctured in the PSSCH and to which the reference signal needs to be mapped. In a possible implementation, the quantity of resources for transmitting the reference signal includes a quantity of resources that are punctured in the PSSCH and to which the reference signal needs to be mapped. In this way, the first terminal apparatus may puncture, based on the first configuration information, a location that needs to be punctured, and map a reference signal, so as to implement multiplexing of the data and the reference signal in the PSSCH.

In a possible implementation, the first terminal apparatus punctures a resource location in the PSSCH based on the transmission parameter, and sends the reference signal at the punctured resource location.

In a possible implementation, the location of the resource that is punctured in the PSSCH and to which the reference signal needs to be mapped includes at least one of the following: a location of a subcarrier on a DMRS time domain symbol in the PSSCH; a location of a subcarrier on a CSI-RS time domain symbol in the PSSCH; or a location of a subcarrier on a time domain symbol other than the DMRS time domain symbol and the CSI-RS time domain symbol in the PSSCH. It can be learned that a large quantity of locations are selected for the resource that is punctured and to which the reference signal is mapped, so that flexibility of the solution can be improved.

In a possible implementation, the first configuration information further indicates at least one of the following content: information about a measurement window for the terminal apparatus to measure the reference signal; or a location of a resource for transmitting a positioning measurement report associated with the measurement window. In a possible implementation, the information about the measurement window includes information indicating the following content: a period value of the measurement window and/or a time domain offset of the measurement window. In this way, the first terminal apparatus may send measurement-related information to the receive end, so that the receive end performs measurement based on the information, and reports a positioning measurement report based on the information.

In a possible implementation, the first configuration information includes indication information of M reference signal sending manners corresponding to the transmission parameter of the reference signal, and M is an integer greater than 1. The first terminal apparatus sends sidelink control information, where the sidelink control information includes first indication information, and the first indication information indicates that one of the M reference signal sending manners is used as a sending manner of the reference signal. In this way, the first terminal apparatus may select a sending manner of the reference signal with reference to an actual network situation, so as to achieve a good balance between transmission performance of the reference signal and transmission performance of the data.

In a possible implementation, a reference signal sending manner in the M reference signal sending manners is associated with a DMRS pattern. The first indication information is indication information of a first DMRS pattern, and a reference signal sending manner associated with the first DMRS pattern is the reference signal sending manner. In this way, a second terminal apparatus may determine, based on the received first DMRS pattern and a preset association relationship between the first DMRS pattern and a reference signal sending manner, the reference signal sending manner sent by the first terminal apparatus.

In a possible implementation, the first configuration information further indicates that the reference signal and the PSSCH are multiplexed in a slot. Alternatively, the first configuration information further indicates that the reference signal and the PSSCH are not multiplexed in a slot. Alternatively, the first configuration information further indicates that the reference signal and the PSSCH are not multiplexed or multiplexed in a slot.

If the first configuration information indicates that the reference signal and the PSSCH are not multiplexed in a slot, the first terminal apparatus is not allowed to send the reference signal in the PSSCH. For example, the first terminal apparatus may send the reference signal outside the PSSCH. If the first configuration information indicates that the reference signal and the PSSCH are multiplexed in a slot, the first terminal apparatus may send the reference signal in the PSSCH. For example, the first terminal apparatus embeds the reference signal into the PSSCH for sending, or it may be understood that a time domain resource of the reference signal overlaps a time domain resource of the PSSCH.

In a possible implementation, the first configuration information further indicates that the reference signal and the PSSCH are allowed not to be multiplexed in a slot when a first preset condition is met. For example, the first preset condition includes: a priority of the reference signal is higher than a preset first priority. Because the priority of the reference signal is high, the first terminal apparatus may not send the reference signal in the PSSCH, and the first terminal apparatus may separately send the reference signal, so that interference to the reference signal is low, and an apparatus that needs to measure a sidelink positioning reference signal obtains a good measurement result, thereby improving positioning accuracy.

For another example, the first preset condition includes: a channel busy ratio (channel busy ratio, CBR) of a resource pool including the resource used for the reference signal is less than a preset first CBR threshold. When the CBR of the resource pool is less than the first CBR threshold, a congestion degree of the resource pool is low, that is, a small quantity of resources are occupied, and a large quantity of resources can be used. In this case, the reference signal may be separately sent, that is, the reference signal does not need to be sent in the PSSCH, so that impact on data sent in the PSSCH can be reduced.

For another example, the first preset condition includes: a CBR of a resource pool including the resource used for the reference signal is less than a second CBR threshold associated with a priority of the reference signal. Because the CBR threshold may be set based on a priority of a message, a sending manner of a message of each priority may be more flexibly controlled.

In this embodiment of this application, the foregoing several first preset conditions may alternatively be used in combination. When the first preset condition includes a combination of the foregoing several conditions, the first terminal apparatus can determine that the first preset condition is met only when all the combined conditions are met. For example, the first preset condition includes: a priority of the reference signal is higher than a preset first priority, and a network congestion rate (channel busy ratio, CBR) of a resource pool including the resource used for the reference signal is less than a preset first CBR threshold.

In a possible implementation, the first configuration information further indicates that the reference signal and the PSSCH are allowed to be multiplexed in a slot when a second preset condition is met. For example, the second preset condition includes: a priority of the reference signal is lower than a preset second priority. When the priority of the reference signal is lower than the preset second priority, because the priority of the reference signal is lower, the first terminal apparatus may send the reference signal in the PSSCH, that is, the first terminal apparatus does not need to separately select a resource for the reference signal, so that fewer resources in the resource pool can be occupied by the reference signal, and impact of the reference signal on other data transmission can be reduced.

In a possible implementation, the second preset condition includes: a priority of the reference signal is higher than a preset third priority. When the priority of the reference signal is higher than the preset third priority, because the priority of the reference signal is high, the first terminal apparatus may send the reference signal in the PSSCH. Because the priority of the reference signal is high, the first terminal apparatus may send the reference signal in the PSSCH, that is, the first terminal apparatus does not need to separately select a resource for the reference signal, so that fewer resources in the resource pool can be occupied by the reference signal, and impact of the reference signal on other data transmission can be reduced.

For another example, the second preset condition includes: a CBR of a resource pool including the resource used for the reference signal is less than a preset third CBR threshold. When the CBR of the resource pool is less than the third CBR threshold, a congestion degree of the resource pool is low. When the reference signal is sent in the PSSCH, impact on the PSSCH is reduced, and a resource does not need to be separately selected for the reference signal, so that fewer resources in the resource pool can be occupied by the reference signal.

For another example, the second preset condition includes: a CBR of a resource pool including the resource used for the reference signal is less than a fourth CBR threshold associated with a priority of the reference signal. Because the CBR threshold may be set based on a priority of a message, a sending manner of a message of each priority may be more flexibly controlled.

In a possible implementation, the first configuration information further indicates to perform RSRP measurement on the PSCCH that carries first-stage SCI in SCI. It can be learned that, in this solution, a network apparatus may further specifically configure a measurement parameter of the terminal apparatus, thereby improving a management capability of the network apparatus on the terminal apparatus.

In a possible implementation, the first configuration information further indicates a quantity of symbols occupied by the PSSCH that carries second-stage SCI in SCI. It can be learned that, in this solution, a network apparatus may configure the quantity of symbols occupied by the PSSCH, thereby improving a management capability of the network apparatus on the terminal apparatus.

In a possible implementation, the quantity of resources for the reference signal is positively correlated with the quantity of resources for transmitting the data.

For example, a larger quantity of resources for transmitting the data (for example, a larger quantity of time domain symbols for transmitting the data, and/or denser frequency domain resources occupied by the data) may indicate a larger quantity of resources (time domain resources and/or frequency domain resources) occupied by the reference signal. Because the quantity of resources for transmitting the data is large, data transmission is not affected greatly when the quantity of resources occupied by the reference signal is large. Therefore, positioning performance may be improved by increasing the quantity of resources occupied by the reference signal. For another example, a smaller quantity of resources for transmitting the data (for example, a smaller quantity of time domain symbols for transmitting the data, and/or sparser frequency domain resources occupied by the data) may indicate a smaller quantity of resources (time domain resources and/or frequency domain resources) occupied by the reference signal. Because the quantity of resources for transmitting the data is small, data transmission is affected greatly when the quantity of resources occupied by the reference signal is large. Therefore, impact of transmission of the reference signal on the data can be reduced by reducing the quantity of resources occupied by the reference signal.

According to a second aspect, this application provides a communication method. The method is applicable to a second terminal apparatus. The second terminal apparatus may be, for example, a terminal device or a unit, a module, or a chip (system) in the terminal device, or may be a road side unit (road side unit, RSU) (or an on board unit (on board unit, OBU) or a relay node having a mobility capability) or a unit, a module, or a chip (system) in the RSU (or the OBU or the relay node having a mobility capability).

The second terminal apparatus obtains third configuration information, where the third configuration information indicates a transmission parameter of a reference signal used for sidelink positioning, the transmission parameter indicates a quantity of resources for transmitting the reference signal, and the quantity of resources for transmitting the reference signal is associated with a quantity of resources for transmitting data. The second terminal apparatus receives the reference signal based on the transmission parameter, where the resource for the reference signal is located in a PSSCH for transmitting the data, and the resource for transmitting the reference signal is different from the resource for transmitting the data.

Because the quantity of resources for transmitting the reference signal is associated with the quantity of resources for transmitting the data, the quantity of resources for the reference signal in this application may be proper, so that a probability of a data decoding error can be reduced, and impact of reference signal transmission on data transmission can be reduced.

In a possible implementation, the second terminal apparatus measures the reference signal based on the transmission parameter, to obtain a measurement result, where the measurement result is used for sidelink positioning.

In a possible implementation, the second terminal apparatus obtains configuration information indicating the following content: information about a measurement window for the terminal apparatus to measure the reference signal; and/or a location of a resource for transmitting a positioning measurement report associated with the measurement window. The configuration information indicating the content may be the third configuration information, or may be configuration information different from the third configuration information. In this way, the second terminal apparatus may perform measurement in the configured measurement window, and report the positioning measurement report at the location of the resource for the configured positioning measurement report. Because the information may be configured based on an overall network situation, the second terminal apparatus may perform a corresponding operation based on the information, to achieve better positioning performance.

In a possible implementation, the information about the measurement window includes information indicating the following content: a period value of the measurement window and/or a time domain offset of the measurement window.

In a possible implementation, the second terminal apparatus obtains configuration information indicating the following content: identification information of a transmit end of the reference signal that the second terminal apparatus needs to measure. In this way, when identification information of a first terminal apparatus configured to send the reference signal matches the identification information of the transmit end, the second terminal apparatus may measure the reference signal based on the transmission parameter, to obtain the measurement result, where the measurement result is used for sidelink positioning.

In a possible implementation, the transmission parameter is configured based on information used to determine the quantity of resources for transmitting the data. For related descriptions and beneficial effects, refer to the related descriptions in the first aspect. Details are not described.

In a possible implementation, the quantity of resources for transmitting the data is determined based on at least one of the following parameters: a DMRS pattern, a CSI-RS pattern, a resource location of feedback information, or a period of a feedback channel. For related descriptions and beneficial effects, refer to the related descriptions in the first aspect. Details are not described.

In a possible implementation, the DMRS pattern includes a quantity of time domain symbols of a DMRS and a resource location of the DMRS. For related descriptions and beneficial effects, refer to the related descriptions in the first aspect. Details are not described.

In a possible implementation, the quantity of resources for transmitting the data includes at least one of the following: a quantity of time domain symbols for transmitting the data, a quantity of frequency domain resources for transmitting the data, a quantity of space domain resources, or a quantity of code domain resources. For related descriptions and beneficial effects, refer to the related descriptions in the first aspect. Details are not described.

In a possible implementation, the transmission parameter further indicates a location of the resource for transmitting the reference signal. For related descriptions and beneficial effects, refer to the related descriptions in the first aspect. Details are not described.

In a possible implementation, the third configuration information is further used to configure a time domain gap, and a location between two adjacent time domain symbols occupied by the reference signal is not greater than the time domain gap. In a possible implementation, the location of the resource for transmitting the reference signal includes at least one of a subcarrier spacing occupied by the reference signal in frequency domain, a frequency domain offset, or a bandwidth. For related descriptions and beneficial effects, refer to the related descriptions in the first aspect. Details are not described.

In a possible implementation, a value or a value range of the location of the resource and/or the quantity of resources for the reference signal is associated with a quantity of time-frequency resources for transmitting the data. For related descriptions and beneficial effects, refer to the related descriptions in the first aspect. Details are not described.

In a possible implementation, the reference signal includes at least one of a DMRS, a CSI-RS, a beam management reference signal, or an SL-PRS. For related descriptions and beneficial effects, refer to the related descriptions in the first aspect. Details are not described.

In a possible implementation, the DMRS is a DMRS carried on the PSSCH and/or a DMRS carried on the PSCCH. For related descriptions and beneficial effects, refer to the related descriptions in the first aspect. Details are not described.

In a possible implementation, the second terminal apparatus obtains second configuration information. The second configuration information includes: indication information of a signal type that is allowed to be used as the reference signal, and/or indication information of a signal type that is not allowed to be used as the reference signal. For related descriptions and beneficial effects, refer to the related descriptions in the first aspect. Details are not described.

In a possible implementation, the second configuration information further includes information about the CSI-RS and/or information about a PRS (for example, the SL-PRS). The information about the CSI-RS includes at least one of a time domain period, a time domain location, a frequency domain density, or a quantity of ports of the CSI-RS. The information about the PRS (for example, the SL-PRS) includes time domain information and frequency domain information of the PRS (for example, the SL-PRS). For related descriptions and beneficial effects, refer to the related descriptions in the first aspect. Details are not described.

In a possible implementation, the location of the resource for transmitting the reference signal includes a location of a resource for a signal used as the reference signal in the PSSCH (for example, one or more of the DMRS, the CSI-RS, or the beam management reference signal). In a possible implementation, the information about the quantity of resources for transmitting the reference signal includes a quantity of resources for a signal used as the reference signal in the PSSCH (for example, one or more of the DMRS, the CSI-RS, or the beam management reference signal). For related descriptions and beneficial effects, refer to the related descriptions in the first aspect. Details are not described.

In a possible implementation, the third configuration information further indicates to increase power of the reference signal, or not to increase power of the reference signal. For related descriptions and beneficial effects, refer to the related descriptions of the first configuration information in the first aspect. Details are not described.

In a possible implementation, the location of the resource for transmitting the reference signal includes a location of a resource that is punctured in the PSSCH and to which the reference signal needs to be mapped. In a possible implementation, the quantity of resources for transmitting the reference signal includes a quantity of resources that are punctured in the PSSCH and to which the reference signal needs to be mapped. For related descriptions and beneficial effects, refer to the related descriptions in the first aspect. Details are not described.

In a possible implementation, the location of the resource that is punctured in the PSSCH and to which the reference signal needs to be mapped includes at least one of the following: a location of a subcarrier on a DMRS time domain symbol in the PSSCH; a location of a subcarrier on a CSI-RS time domain symbol in the PSSCH; or a location of a subcarrier on a time domain symbol other than the DMRS time domain symbol and the CSI-RS time domain symbol in the PSSCH. For related descriptions and beneficial effects, refer to the related descriptions in the first aspect. Details are not described.

In a possible implementation, the third configuration information includes indication information of M reference signal sending manners corresponding to the transmission parameter of the reference signal, and M is an integer greater than 1. The second terminal apparatus receives sidelink control information, where the sidelink control information includes first indication information, and the first indication information indicates that one of the M reference signal sending manners is used as a sending manner of the reference signal. For related descriptions and beneficial effects, refer to the related descriptions of the first configuration information in the first aspect. Details are not described.

In a possible implementation, a reference signal sending manner in the M reference signal sending manners is associated with a DMRS pattern. The first indication information is indication information of a first DMRS pattern, and a reference signal sending manner associated with the first DMRS pattern is the reference signal sending manner. For related descriptions and beneficial effects, refer to the related descriptions of the first configuration information in the first aspect. Details are not described.

In a possible implementation, the third configuration information includes information about the reference signal sending manner. For related descriptions and beneficial effects, refer to the related descriptions of the first configuration information in the first aspect. Details are not described.

In a possible implementation, the third configuration information further indicates that the reference signal and the PSSCH are multiplexed in a slot. Alternatively, the third configuration information further indicates that the reference signal and the PSSCH are not multiplexed in a slot. Alternatively, the third configuration information further indicates that the reference signal and the PSSCH are not multiplexed or multiplexed in a slot.

For related content and beneficial effects, refer to the foregoing descriptions. Details are not described.

In a possible implementation, the third configuration information further indicates that the reference signal and the PSSCH are allowed not to be multiplexed in a slot when a first preset condition is met. The first preset condition includes one or more of the following content: a priority of the reference signal is higher than a preset first priority; a CBR of a resource pool including the resource used for the reference signal is less than a preset first CBR threshold; or a CBR of a resource pool including the resource used for the reference signal is less than a second CBR threshold associated with a priority of the reference signal.

For related content and beneficial effects, refer to the foregoing descriptions. Details are not described.

In a possible implementation, the third configuration information further indicates that the reference signal and the PSSCH are allowed to be multiplexed in a slot when a second preset condition is met. The second preset condition includes one or more of the following content: a priority of the reference signal is lower than a preset second priority; a priority of the reference signal is higher than a preset third priority; a CBR of a resource pool including the resource used for the reference signal is less than a preset third CBR threshold; or a CBR of a resource pool including the resource used for the reference signal is less than a fourth CBR threshold associated with a priority of the reference signal.

For related content and beneficial effects, refer to the foregoing descriptions. Details are not described.

In a possible implementation, the third configuration information further indicates to perform reference signal received power (reference signal received power, RSRP) measurement on the physical sidelink control channel (physical sidelink control channel, PSCCH), and/or indicates a quantity of symbols occupied by the PSSCH. For related descriptions and beneficial effects, refer to the related descriptions of the first configuration information in the first aspect. Details are not described.

In a possible implementation, the quantity of resources for the reference signal is positively correlated with the quantity of resources for transmitting the data. For related descriptions and beneficial effects, refer to the related descriptions in the first aspect. Details are not described.

According to a third aspect, this application provides a communication method. The method is applicable to a second terminal apparatus. The second terminal apparatus may be, for example, a terminal device or a unit, a module, or a chip (system) in the terminal device, or may be a road side unit (road side unit, RSU) (or an on board unit (on board unit, OBU) or a relay node having a mobility capability) or a unit, a module, or a chip (system) in the RSU (or the OBU or the relay node having a mobility capability).

The second terminal apparatus obtains fifth configuration information, where the fifth configuration information indicates a transmission parameter of a reference signal used for sidelink positioning, the transmission parameter indicates a type of the reference signal, and a transmission type of the reference signal includes a reference signal of a physical sidelink shared channel used to transmit data. The second terminal apparatus receives the reference signal based on the transmission parameter, where a resource for the reference signal is located in the physical sidelink shared channel for transmitting the data, and the resource for transmitting the reference signal is different from a resource for transmitting the data.

The transmission parameter indicates the type of the reference signal, the transmission type of the reference signal includes the reference signal of the physical sidelink shared channel used to transmit the data. Therefore, the second terminal apparatus may perform sidelink positioning based on the reference signal of the physical sidelink shared channel. This solution has relatively small impact on data transmitted in the physical sidelink shared channel, so that a probability of a data decoding error can be reduced, and impact of reference signal transmission on data transmission can be reduced.

In a possible implementation, the reference signal of the physical sidelink shared channel for transmitting the data includes one or more of the following: a DM-RS in the PSSCH, a CSI-RS in the PSSCH, and a beam management reference signal in the PSSCH.

In a possible implementation, the second terminal apparatus measures the reference signal based on the transmission parameter, to obtain a measurement result, where the measurement result is used for sidelink positioning.

In a possible implementation, the second terminal apparatus obtains configuration information indicating the following content: information about a measurement window for the terminal apparatus to measure the reference signal; and/or a location of a resource for transmitting a positioning measurement report associated with the measurement window. The configuration information indicating the content may be the third configuration information and/or the fifth configuration information, or may be configuration information different from the third configuration information and the fifth configuration information. In this way, the second terminal apparatus may perform measurement in the configured measurement window, and report the positioning measurement report at the location of the resource for the configured positioning measurement report. Because the information may be configured based on an overall network situation, the second terminal apparatus may perform a corresponding operation based on the information, to achieve better positioning performance.

In a possible implementation, the information about the measurement window includes information indicating the following content: a period value of the measurement window and/or a time domain offset of the measurement window.

In a possible implementation, the second terminal apparatus obtains configuration information indicating the following content: identification information of a transmit end of the reference signal that the second terminal apparatus needs to measure. In this way, when identification information of a first terminal apparatus configured to send the reference signal matches the identification information of the transmit end, the second terminal apparatus may measure the reference signal based on the transmission parameter, to obtain the measurement result, where the measurement result is used for sidelink positioning.

In a possible implementation, the transmission parameter is configured based on information used to determine the quantity of resources for transmitting the data. For related descriptions and beneficial effects, refer to the related descriptions in the first aspect. Details are not described.

In a possible implementation, the quantity of resources for transmitting the data is determined based on at least one of the following parameters: a DMRS pattern, a CSI-RS pattern, a resource location of feedback information, or a period of a feedback channel. For related descriptions and beneficial effects, refer to the related descriptions in the first aspect. Details are not described.

In a possible implementation, the DMRS pattern includes a quantity of time domain symbols of a DMRS and a resource location of the DMRS. For related descriptions and beneficial effects, refer to the related descriptions in the first aspect. Details are not described.

In a possible implementation, the quantity of resources for transmitting the data includes at least one of the following: a quantity of time domain symbols for transmitting the data, a quantity of frequency domain resources for transmitting the data, a quantity of space domain resources, or a quantity of code domain resources. For related descriptions and beneficial effects, refer to the related descriptions in the first aspect. Details are not described.

In a possible implementation, the transmission parameter further indicates a location of the resource for transmitting the reference signal. For related descriptions and beneficial effects, refer to the related descriptions in the first aspect. Details are not described.

In a possible implementation, the second terminal apparatus further obtains configuration information used to configure a time domain gap, and a location between two adjacent time domain symbols occupied by the reference signal is not greater than the time domain gap. In a possible implementation, the location of the resource for transmitting the reference signal includes at least one of a subcarrier spacing occupied by the reference signal in frequency domain, a frequency domain offset, or a bandwidth. For related descriptions and beneficial effects, refer to the related descriptions in the first aspect. Details are not described.

In a possible implementation, a value or a value range of the location of the resource and/or the quantity of resources for the reference signal is correlated with a quantity of time-frequency resources for transmitting the data. For related descriptions and beneficial effects, refer to the related descriptions in the first aspect. Details are not described.

In a possible implementation, the reference signal includes at least one of a DMRS, a CSI-RS, a beam management reference signal, or an SL-PRS. For related descriptions and beneficial effects, refer to the related descriptions in the first aspect. Details are not described.

In a possible implementation, the DMRS is a DMRS carried on the PSSCH and/or a DMRS carried on the PSCCH. For related descriptions and beneficial effects, refer to the related descriptions in the first aspect. Details are not described.

In a possible implementation, the second terminal apparatus obtains second configuration information. The second configuration information includes: indication information of a signal type that is allowed to be used as the reference signal, and/or indication information of a signal type that is not allowed to be used as the reference signal. For related descriptions and beneficial effects, refer to the related descriptions in the first aspect. Details are not described.

In a possible implementation, the second configuration information further includes information about the CSI-RS and/or information about a PRS (for example, the SL-PRS). The information about the CSI-RS includes at least one of a time domain period, a time domain location, a frequency domain density, or a quantity of ports of the CSI-RS. The information about the PRS (for example, the SL-PRS) includes time domain information and frequency domain information of the PRS (for example, the SL-PRS). For related descriptions and beneficial effects, refer to the related descriptions in the first aspect. Details are not described.

In a possible implementation, the location of the resource for transmitting the reference signal includes a location of a resource for a signal used as the reference signal in the PSSCH (for example, one or more of the DMRS, the CSI-RS, or the beam management reference signal). In a possible implementation, the information about the quantity of resources for transmitting the reference signal includes a quantity of resources for a signal used as the reference signal in the PSSCH (for example, one or more of the DMRS, the CSI-RS, or the beam management reference signal). For related descriptions and beneficial effects, refer to the related descriptions in the first aspect. Details are not described.

In a possible implementation, the fifth configuration information further indicates to increase power of the reference signal, or not to increase power of the reference signal. For related descriptions and beneficial effects, refer to the related descriptions of the first configuration information in the first aspect. Details are not described.

In a possible implementation, the fifth configuration information includes indication information of M reference signal sending manners corresponding to the transmission parameter of the reference signal, and M is an integer greater than 1. The second terminal apparatus receives sidelink control information, where the sidelink control information includes first indication information, and the first indication information indicates that one of the M reference signal sending manners is used as a sending manner of the reference signal. For related descriptions and beneficial effects, refer to the related descriptions of the first configuration information in the first aspect. Details are not described.

In a possible implementation, a reference signal sending manner in the M reference signal sending manners is associated with a DMRS pattern. The first indication information is indication information of a first DMRS pattern, and a reference signal sending manner associated with the first DMRS pattern is the reference signal sending manner. For related descriptions and beneficial effects, refer to the related descriptions of the first configuration information in the first aspect. Details are not described.

In a possible implementation, the fifth configuration information includes information about the reference signal sending manner. For related descriptions and beneficial effects, refer to the related descriptions of the first configuration information in the first aspect. Details are not described.

In a possible implementation, the fifth configuration information further indicates that the reference signal and the PSSCH are multiplexed in a slot. Alternatively, the fifth configuration information further indicates that the reference signal and the PSSCH are not multiplexed in a slot. Alternatively, the fifth configuration information further indicates that the reference signal and the PSSCH are not multiplexed or multiplexed in a slot.

For related content and beneficial effects, refer to the foregoing descriptions. Details are not described.

In a possible implementation, the fifth configuration information further indicates that the reference signal and the PSSCH are allowed not to be multiplexed in a slot when a first preset condition is met. The first preset condition includes one or more of the following content: a priority of the reference signal is higher than a preset first priority; a CBR of a resource pool including the resource used for the reference signal is less than a preset first CBR threshold; or a CBR of a resource pool including the resource used for the reference signal is less than a second CBR threshold associated with a priority of the reference signal.

For related content and beneficial effects, refer to the foregoing descriptions. Details are not described.

In a possible implementation, the fifth configuration information further indicates that the reference signal and the PSSCH are allowed to be multiplexed in a slot when a second preset condition is met. The second preset condition includes one or more of the following content: a priority of the reference signal is lower than a preset second priority; a priority of the reference signal is higher than a preset third priority; a CBR of a resource pool including the resource used for the reference signal is less than a preset third CBR threshold; or a CBR of a resource pool including the resource used for the reference signal is less than a fourth CBR threshold associated with a priority of the reference signal.

For related content and beneficial effects, refer to the foregoing descriptions. Details are not described.

In a possible implementation, the fifth configuration information further indicates to perform reference signal received power (reference signal received power, RSRP) measurement on the physical sidelink control channel (physical sidelink control channel, PSCCH), and/or indicates a quantity of symbols occupied by the PSSCH. For related descriptions and beneficial effects, refer to the related descriptions of the first configuration information in the first aspect. Details are not described.

In a possible implementation, the quantity of resources for the reference signal is positively correlated with the quantity of resources for transmitting the data. For related descriptions and beneficial effects, refer to the related descriptions in the first aspect. Details are not described.

According to a fourth aspect, this application provides a communication method. The method is applicable to a network apparatus. For example, the network apparatus may be an access network device or a unit, a module, or a chip (system) in the access network device, or may be a positioning management device or a unit, a module, or a chip (system) in the positioning management device.

The network apparatus determines configuration information, where the configuration information indicates a transmission parameter of a reference signal used for sidelink positioning, the transmission parameter indicates a quantity of resources for transmitting the reference signal, and the quantity of resources for transmitting the reference signal is associated with a quantity of resources for transmitting data. The network apparatus sends the configuration information. The configuration information is used by a terminal apparatus to transmit the reference signal based on the transmission parameter, where the resource for the reference signal is located in a PSSCH for transmitting the data, and the resource for the reference signal is different from the resource for transmitting the data.

Because the quantity of resources for transmitting the reference signal is associated with the quantity of resources for transmitting the data, the quantity of resources for the reference signal in this application may be proper, so that a probability of a data decoding error can be reduced, and impact of reference signal transmission on data transmission can be reduced.

The configuration information configured by the network apparatus in this application may include one or more of first configuration information, third configuration information, or fifth configuration information. The configuration information may further include second configuration information and some other configuration information. For related content of the first configuration information, the third configuration information, and the second configuration information, refer to the related descriptions in the first aspect, the second aspect, and the third aspect. Details are not described.

The network apparatus may send the first configuration information to a first terminal apparatus. The network apparatus may send the second configuration information to a second terminal apparatus. The network apparatus may send the second configuration information to the first terminal apparatus and/or the second terminal apparatus.

When the first terminal apparatus sends the reference signal by using a resource in a shared resource pool, a receive end may incorrectly decode the data. How to improve a success rate of decoding the data by the receive end is a problem that needs to be urgently resolved.

In this application, the first terminal apparatus may send the data based on fourth configuration information, and the fourth configuration information indicates a data transmission manner of the first terminal apparatus. The transmission manner is rate matching or puncturing. Therefore, when the second terminal apparatus receives the data in the transmission manner indicated by the fourth configuration information, a data decoding success rate can be improved. In addition, when the second terminal apparatus receives the reference signal based on the fourth configuration information, reference signal detection performance can also be improved.

According to a fifth aspect, this application provides a communication method. The method is applicable to a first terminal apparatus. The first terminal apparatus may be, for example, a terminal device or a unit, a module, or a chip (system) in the terminal device, or may be an RSU (or an OBU or a relay node having a mobility capability) or a unit, a module, or a chip (system) in the RSU (or the OBU or the relay node having a mobility capability).

The first terminal apparatus obtains fourth configuration information. The fourth configuration information indicates a transmission manner of data, the transmission manner is rate matching or puncturing, and the data and a reference signal used for sidelink positioning are located in a same slot. The first terminal apparatus sends the data according to the transmission manner.

Because the first terminal apparatus sends the data according to the transmission manner indicated by the fourth configuration information, a receive end may decode the data according to a corresponding transmission manner, thereby improving a success rate.

In a possible implementation, when the transmission manner is rate matching, a code block size of the data is less than a first code block size. When the transmission manner is puncturing, the code block size of the data is the first code block size. The first code block size is a code block size corresponding to a PSSCH. When the transmission manner is rate matching, the code block size of the data is less than a code block size when rate matching is not performed. Therefore, a legacy terminal apparatus cannot identify a data code block obtained after rate matching. Therefore, a rate matching solution is applicable to data transmission between new terminal apparatuses.

In a possible implementation, the first terminal apparatus sends the reference signal according to the transmission manner. Because the first terminal apparatus sends the reference signal according to the transmission manner, the receive end may receive the reference signal according to a corresponding transmission manner, thereby improving a success rate of receiving the reference signal.

In a possible implementation, a resource for the reference signal is located in the PSSCH for transmitting the data, and the resource for the reference signal is different from a resource for transmitting the data.

In a possible implementation, the fourth configuration information further indicates that the reference signal and the PSSCH are multiplexed in a slot. Alternatively, the fourth configuration information further indicates that the reference signal and the PSSCH are not multiplexed in a slot. Alternatively, the fourth configuration information further indicates that the reference signal and the PSSCH are not multiplexed or multiplexed in a slot.

The fourth configuration information may be configured based on an actual network situation, and the first terminal apparatus may transmit the reference signal based on a configuration of the fourth configuration information, to achieve a good balance between impact on data performance (transmission of the reference signal in the PSSCH has large impact on data transmission) and a resource occupation degree in a resource pool (transmission of the reference signal outside the PSSCH has a large resource occupation degree in the resource pool).

In a possible implementation, information indicating the transmission manner of the data includes: indication information indicating that a resource pool for transmitting the reference signal is used for backward compatibility, or indication information indicating that a resource pool for transmitting the reference signal is not used for backward compatibility.

The resource pool needs to be backward compatible (in this case, the resource pool may be referred to as a shared resource pool), data transmitted by the first terminal apparatus in a puncturing manner can be successfully decoded by a legacy terminal apparatus. However, only the new terminal apparatus can successfully decode data transmitted by the first terminal apparatus in a rate matching manner, and the legacy terminal apparatus cannot successfully decode the data. Therefore, when the information indicating the transmission manner of the data includes the indication information indicating that the resource pool is used for backward compatibility, it may be understood that the indication information indicating that the resource pool is used for backward compatibility indicates that a transmission manner corresponding to a resource in the resource pool is puncturing.

Because the resource pool does not need to be backward compatible (in this case, the resource pool cannot be referred to as a shared resource pool), that is, a receive end of data transmitted by the first terminal apparatus by using the resource pool is a new terminal apparatus, it may be understood that a transmission manner corresponding to a resource in the resource pool is rate matching and/or puncturing. When the first terminal transmits data in the rate matching manner, a problem of a decoding layer caused by puncturing can be avoided.

In a possible implementation, the fourth configuration information further indicates at least one of the following content: a scaling factor used to perform rate adaptation on the data, a sending parameter of the PSSCH used to carry the data, or an MCS offset of the data. Setting the foregoing parameters may further reduce impact of reference signal transmission on data transmission performance.

In a possible implementation, the fourth configuration information further indicates that the scaling factor is used by the first terminal apparatus to determine a transport block size of the data.

In a possible implementation, the scaling factor and/or the sending parameter of the PSSCH are/is associated with at least one of the following parameters: a priority of the data; a pattern of a DMRS carried in the PSSCH; a period of a PSFCH; whether there is a PSFCH resource in a slot; or a CBR value of a resource pool in which a resource used to send the data and the reference signal is located. In this way, the scaling factor and/or the sending parameter of the PSSCH may be more properly determined with reference to the foregoing parameters, so that impact of reference signal transmission on data transmission performance can be further reduced.

In a possible implementation, the sending parameter of the PSSCH is associated with at least one of the following parameters: a priority of the reference signal and a channel bandwidth of the reference signal. In this way, the sending parameter of the PSSCH may be more properly determined with reference to the foregoing parameters, so that impact of reference signal transmission on data transmission performance can be further reduced.

In a possible implementation, a priority of an SL-PRS is the same as a priority of the data.

In a possible implementation, the sending parameter of the PSSCH includes at least one of the following: a minimum MCS value for sending the data, a maximum MCS value for sending the data, an MCS table for sending the data, a maximum power for sending the data, a maximum quantity of transmission times for sending the data, or a maximum quantity of sub-channels for sending the data. In this way, setting the foregoing sending parameter of the PSSCH may further reduce impact of reference signal transmission on data transmission performance.

In a possible implementation, the fourth configuration information includes an MCS offset. The first terminal apparatus determines an MCS value of the data based on the MCS offset.

In a possible implementation, the first terminal apparatus obtains the fourth configuration information in a plurality of manners, for example, receives the fourth configuration information from another apparatus, obtains the fourth configuration information by using preconfigured or predefined information, or obtains the fourth configuration information by using a higher layer or an internal module of the first terminal apparatus. In this way, solution flexibility can be improved.

In a possible implementation, the first terminal apparatus sends sidelink control information, where the sidelink control information includes indication information indicating the transmission manner of the data. Because the first terminal apparatus may dynamically indicate, by using the sidelink control information, a transmission manner of the data used by the first terminal apparatus, the first terminal apparatus may more flexibly select a transmission manner of each piece of to-be-transmitted data, thereby improving flexibility of the solution.

In a possible implementation, the fourth configuration information is carried in a system message, a radio resource control (radio resource control, RRC) message, or downlink control information (downlink control information, DCI) scrambled by using a radio network temporary identifier (Radio Network Temporary Identifier, RNTI) related to the SL-PRS. In this way, solution flexibility can be improved.

According to a sixth aspect, this application provides a communication method. The method is applicable to a second terminal apparatus. The second terminal apparatus may be, for example, a terminal device or a unit, a module, or a chip (system) in the terminal device, or may be an RSU (or an OBU or a relay node having a mobility capability) or a unit, a module, or a chip (system) in the RSU (or the OBU or the relay node having a mobility capability).

The second terminal apparatus obtains fourth configuration information. The fourth configuration information indicates a transmission manner of data, the transmission manner is rate matching or puncturing, and the data and a reference signal used for sidelink positioning are located in a same slot. The second terminal apparatus receives the data according to the transmission manner.

Because the second terminal apparatus sends the data according to the transmission manner indicated by the fourth configuration information, a receive end may decode the data according to a corresponding transmission manner, thereby improving a success rate.

In a possible implementation, when the transmission manner is rate matching, a code block size of the data is less than a first code block size. When the transmission manner is puncturing, the code block size of the data is the first code block size. The first code block size is a code block size corresponding to a PSSCH. For related descriptions and beneficial effects, refer to the related descriptions in the fifth aspect. Details are not described.

In a possible implementation, the second terminal apparatus sends the reference signal according to the transmission manner. For related descriptions and beneficial effects, refer to the related descriptions in the fifth aspect. Details are not described.

In a possible implementation, a resource for the reference signal is located in the PSSCH for transmitting the data, and the resource for the reference signal is different from a resource for transmitting the data. For related descriptions and beneficial effects, refer to the related descriptions in the fifth aspect. Details are not described.

In a possible implementation, information indicating the transmission manner of the data includes: indication information indicating that a resource pool for transmitting the reference signal is used for backward compatibility, or indication information indicating that a resource pool for transmitting the reference signal is not used for backward compatibility. For related descriptions and beneficial effects, refer to the related descriptions in the fifth aspect. Details are not described.

In a possible implementation, the obtaining fourth configuration information includes one of the following content: receiving the fourth configuration information from another apparatus, obtaining the fourth configuration information by using preconfigured or predefined information, or obtaining the fourth configuration information by using a higher layer or an internal module of the first terminal apparatus. For related descriptions and beneficial effects, refer to the related descriptions in the fifth aspect. Details are not described.

In a possible implementation, the first terminal apparatus sends sidelink control information SCI, where the SCI includes indication information indicating the transmission manner of the data. For related descriptions and beneficial effects, refer to the related descriptions in the fifth aspect. Details are not described.

For related content of the fourth configuration information, refer to the foregoing description of the fourth configuration information in the fifth aspect. Details are not described.

According to a seventh aspect, this application provides a communication method. The method is applicable to a network apparatus. For example, the network apparatus may be an access network device or a unit, a module, or a chip (system) in the access network device, or may be a positioning management device or a unit, a module, or a chip (system) in the positioning management device.

The network apparatus determines fourth configuration information, where the fourth configuration information indicates a transmission manner of data, the transmission manner is rate matching or puncturing, and the data and a reference signal used for sidelink positioning are located in a same slot. The network apparatus sends the fourth configuration information.

Because the network apparatus configures the fourth configuration information, the data may be transmitted between a first terminal apparatus and a second terminal apparatus according to the transmission manner indicated by the fourth configuration information, and a receive end may decode the data according to a corresponding transmission manner, thereby improving a success rate.

Configuration information configured by the network apparatus may include the fourth configuration information. For related content of the fourth configuration information, refer to the related descriptions in the fifth aspect. Details are not described. The network apparatus may send the fourth configuration information to the first terminal apparatus and/or the second terminal apparatus.

According to an eighth aspect, a communication apparatus is provided. The communication apparatus may be the foregoing first terminal apparatus, second terminal apparatus, third terminal apparatus, or network apparatus. The communication apparatus may include a communication unit and a processing unit, to perform any one of the implementations of the method in any one of the first aspect to the seventh aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the implementations of any method in the first aspect to the seventh aspect.

According to a ninth aspect, a communication apparatus is provided. The communication apparatus may be the foregoing first terminal apparatus, second terminal apparatus, third terminal apparatus, or network apparatus. The communication apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the implementations of any method in the first aspect to the seventh aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a tenth aspect, a communication apparatus is provided. The communication apparatus may be the foregoing first terminal apparatus, second terminal apparatus, third terminal apparatus, or network apparatus. The communication apparatus may include a processor. The processor is coupled to a memory, and may be configured to perform the method according to any one of the first aspect to the seventh aspect and any one of the possible implementations of the first aspect to the seventh aspect. Optionally, the communication apparatus further includes the memory. Optionally, the communication apparatus further includes a communication interface, and the processor is coupled to the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eleventh aspect, a system is provided. The system includes the foregoing first terminal apparatus and second terminal apparatus. In a possible implementation, the system may further include a network apparatus. In another possible implementation, the system may further include a third terminal apparatus.

According to a twelfth aspect, a computer program product is provided. The computer program product includes a computer program (which may also be referred to as code or instructions). When the computer program is run, a computer is enabled to perform the method according to any one of the possible implementations of the first aspect or the method according to any one of the implementations of the first aspect to the seventh aspect.

According to a thirteenth aspect, a computer-readable storage medium is provided. The computer-readable medium stores a computer program (which may also be referred to as code or instructions). When the computer program is run on a computer, the computer is enabled to perform the method according to any one of the possible implementations of the first aspect or the method according to any one of the implementations of the first aspect to the seventh aspect.

According to a fourteenth aspect, a chip system is provided. The chip system may include a processor. The processor is coupled to a memory, and may be configured to perform the method according to any one of the first aspect to the seventh aspect and any one of the possible implementations of any one of the first aspect to the seventh aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method according to any one of the first aspect to the seventh aspect and any one of the possible implementations of any one of the first aspect to the seventh aspect.

According to a fifteenth aspect, a communication apparatus is provided. The communication apparatus may be the foregoing first terminal apparatus, second terminal apparatus, third terminal apparatus, or network apparatus. The communication apparatus may include an interface circuit and a processing circuit. The interface circuit may include an input circuit and an output circuit. The processing circuit is configured to receive a signal through the input circuit, and transmit a signal through the output circuit, so that the method according to any one of the first aspect to the seventh aspect and any one of the possible implementations of any one of the first aspect to the seventh aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a wireless communication device, the wireless communication device may be a terminal such as a smartphone, or may be a radio access network device such as a base station. The interface circuit may be a radio frequency processing chip in the wireless communication device, and the processing circuit may be a baseband processing chip in the wireless communication device.

In another implementation, the communication apparatus may be some components in the wireless communication device, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

## BRIEF DESCRIPTION OF DRAWINGS

FIG. 1 is a diagram of an architecture of a communication system to which an embodiment of this application is applicable;
FIG. 2 is a diagram of an architecture of another communication system to which an embodiment of this application is applicable;
FIG. 3 is a schematic flowchart of a communication method according to an embodiment of this application;
FIG. 4A is a possible diagram of a resource location that is punctured in a PSSCH and to which a reference signal needs to be mapped according to an embodiment of this application;
FIG. 4B is a possible diagram of a resource location that is punctured in a PSSCH and to which a reference signal needs to be mapped according to an embodiment of this application;
FIG. 4C is a possible diagram of a resource location that is punctured in a PSSCH and to which a reference signal needs to be mapped according to an embodiment of this application;
FIG. 5 is a schematic flowchart of another communication method according to an embodiment of this application;
FIG. 6 is a schematic flowchart of another communication method according to an embodiment of this application;
FIG. 7 is a possible diagram of a resource location that is punctured in a PSSCH according to an embodiment of this application;
FIG. 8 is a schematic flowchart of another communication method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

## DESCRIPTION OF EMBODIMENTS

The following first describes nouns or terms in embodiments of this application.

(1) Sidelink (sidelink, SL)

In embodiments of this application, the sidelink may be a link established between devices of different types or a same type, for example, may be a link between terminal devices. The link between terminal devices includes a device-to-device (device-to-device, D2D) link defined by the 3rd Generation Partnership Project (3rd Generation Partnership Project, 3GPP) release (release, Rel)-12/13, and a vehicle-to-vehicle (vehicle-to-vehicle, V2V) link, a vehicle-to-pedestrian (vehicle-to-pedestrian, V2P) link, a vehicle-to-infrastructure (vehicle-to-infrastructure, V2I) link, a vehicle-to-network (vehicle-to-network, V2N) link, and the like defined by 3GPP for the internet of vehicles. The link further includes a V2X link of Rel-14, and NR system-based V2X links of Rel-15, Rel-16, Rel-17, Rel-18, and other releases in the future.

The sidelink in embodiments of this application may also be referred to as a direct link, a secondary link, or the like.

(2) Reference signal

The reference signal in embodiments of this application may be used for resource selection, or may be used for positioning. The reference signal is, for example, a positioning reference signal (positioning reference signal, PRS). When the reference signal is applied to sidelink communication, and is used for positioning based on a sidelink, the reference signal may also be referred to as a sidelink positioning reference signal. The reference signal is, for example, an SL-PRS.

In embodiments of this application, an example in which the reference signal is a sidelink positioning reference signal is used for description. For ease of description, the sidelink positioning reference signal is denoted as an SL-PRS, an SLPRS, an SPRS, or the like in some content of this application. The SL-PRS in embodiments of this application may also be replaced with another signal, a reference signal, a positioning signal, a positioning reference signal, or the like.

(3) New (new) terminal apparatus and legacy (legacy) terminal apparatus

Apparatuses in embodiments of this application may be classified into the new terminal apparatus and the legacy terminal apparatus. A latest protocol release supported by the new terminal apparatus is higher than a latest protocol release supported by the legacy terminal apparatus, or the new terminal apparatus supports more functions than the legacy terminal apparatus.

For example, the new terminal apparatus supports a fifth generation (5th generation, 5G) communication system, a communication system of a release later than 5G (including a sixth generation (6th generation, 6G) communication system), and a communication system earlier than 5G (for example, a fourth generation (4th generation, 4G) communication system).

In a possible implementation, the new terminal apparatus supports systems of Rel-18 and a later release in the 5G communication system. The legacy terminal apparatus supports systems of Rel-17 and an earlier release (for example, Rel-16) in the 4G communication system or the 5G communication system, but does not support systems of Rel-18 and a later release in the 5G communication system.

(4) Resource pool (resource pool)

New radio (new radio, NR) sidelink communication is performed based on the resource pool. The resource pool is a block of time-frequency resources used for SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID). A terminal apparatus performs receiving on a receiving resource pool, and performs sending on a sending resource pool. If resource pools have a same resource pool index, it may be considered that time-frequency resources in the resource pools completely overlap.

In a sidelink on unlicensed spectrum (Sidelink on unlicensed spectrum, SL-U), a frequency band is shared by terminal apparatuses in a plurality of forms, for example, an SL terminal apparatus, a wireless fidelity (wireless fidelity, Wi-Fi) terminal apparatus, and a Bluetooth terminal apparatus perform transmission on a same frequency band. Therefore, a concept of an SL dedicated resource pool does not necessarily exist. The SL resource pool may also be understood as a set of resources that may be used for SL transmission. In embodiments, the resource pool may also be referred to as a channel (channel), an operating channel (operating channel), a nominal channel bandwidth (nominal channel bandwidth), or a bandwidth (bandwidth). In other words, the resource pool, the channel, and the bandwidth all represent the set of resources that may be used for SL transmission.

(5) Time domain resource

The time domain resource includes a symbol (symbol), a slot (slot), a mini-slot (mini-slot), a partial slot (partial slot), a subframe (subframe), a radio frame (frame), a sensing slot (sensing slot), and the like.

One slot may include at least one symbol, for example, 14 symbols or 12 symbols. There may be slots of different slot types, and different slot types include different quantities of symbols. For example, a mini-slot (mini-slot) includes less than 7 symbols, for example, 2 symbols, 3 symbols, or 4 symbols, and a normal slot (slot) includes 7 symbols or 14 symbols.

Based on different subcarrier spacings, symbol lengths may be different. Therefore, slot lengths may be different. For example, a length of one slot corresponding to a subcarrier spacing of 15 kHz is 0.5 ms, and a length of one slot corresponding to a subcarrier spacing of 60 kHz is 0.125 ms.

(6) Frequency domain resource

The frequency domain resource includes a sub-channel, a band (band), a carrier (carrier), a bandwidth part (BandWidth Part, BWP), a resource block (Resource Block, RB), a resource pool, or the like.

The sub-channel is a minimum unit of a frequency domain resource occupied by a physical sidelink shared channel, and one sub-channel may include one or more resource blocks (resource blocks, RBs). A bandwidth of a wireless communication system in frequency domain may include a plurality of RBs. For example, a quantity of physical resource blocks (physical resource block, PRB) included in each possible bandwidth of an LTE system may be 6, 15, 25, or 50. In frequency domain, one RB may include several subcarriers. For example, in the LTE system, one RB includes 12 subcarriers, and each subcarrier spacing may be 15 kHz. Certainly, another subcarrier spacing may alternatively be used, for example, a subcarrier spacing of 3.75 kHz, 30 kHz, 60 kHz, or 120 kHz. This is not limited herein.

For a subcarrier (subcarrier) or resource element (resource element, RE), the subcarrier or the RE is a minimum frequency resource unit on a specific symbol in a multicarrier system. In embodiments of this application, the RE may be a resource unit of a time-frequency resource, for example, may be considered as a minimum time-frequency resource unit. In this application, the subcarrier and the resource element may be used interchangeably, and include same content.

A subcarrier spacing (subcarrier spacing, SCS) is a value of a spacing between center locations or peak locations of two adjacent subcarriers in frequency domain in an OFDM system. In 5G NR, a plurality of subcarrier spacings are introduced. Different carriers may have different subcarrier spacings. The subcarrier spacing has a baseline of 15 kHz, which may be 15 kHz x $2^n$, where n is an integer, and ranges from 3.75 kHz, 7.5 kHz, to 480 kHz.

(7) PSCCH

The PSCCH carries first-stage sidelink control information (sidelink control information, SCI). The first-stage SCI may also be referred to as 1-stage SCI or first-level SCI, or may be SCI-1.

A scheduling granularity of the PSCCH is measured in a unit of one slot in time domain, and is measured in a unit of one or more contiguous sub-channels in frequency domain. In time domain, the PSCCH occupies two or three orthogonal frequency division multiplexing (orthogonal frequency division multiplexing, OFDM) symbols starting from a $2^{nd}$ sidelink symbol; in frequency domain, a PRB carrying the PSCCH starts from a lowest PRB of a lowest sub-channel of an associated PSSCH, and a quantity of PRBs occupied by the PSCCH is within a range of a sub-band of one PSSCH. The PSCCH includes { 10, 12, 15, 20, 25} resource blocks (resource blocks, RBs), and a specific value is preconfigured or configured by a network. The PRB and an RB may be interchanged.

(8) Physical sidelink shared channel (physical sidelink shared channel, PSSCH)

The PSSCH carries at least one of second-stage SCI, data, or a medium access control control element (medium access control, MAC CE). The second-stage SCI may also be referred to as 2-stage SCI or second-level SCI, or may be SCI-2.

A scheduling granularity of the PSSCH is measured in a unit of one slot in time domain, and is measured in a unit of one or more contiguous sub-channels in frequency domain. In time domain, on a resource without a physical sidelink feedback channel (physical sidelink feedback channel, PSFCH), 12 symbols are used to carry the PSSCH; and on a resource with a PSFCH, 9 symbols are used to carry the PSSCH. In frequency domain, the PSSCH occupies $L_{subCh}$ contiguous sub-channels. In addition, in one slot, a $1^{st}$ OFDM symbol copies information sent on a $2^{nd}$ symbol for automatic gain control (automatic gain control, AGC).

(9) Physical sidelink feedback channel (physical sidelink feedback channel, PSFCH)

The PSFCH carries feedback information. On a resource with a PSFCH, a second-to-last OFDM symbol and a third-to-last OFDM symbol are used to carry the PSFCH. A signal on the third-to-last symbol is repetition of a signal on the second-to-last symbol, to help a receive side perform AGC adjustment.

(10) Mapping: The mapping may also be described as "occupying" or "using". For example, that a communication system performs channel mapping on a carrier indicates that the communication system uses or occupies some or all time-frequency resources corresponding to the carrier to transmit information carried in the channel.

(11) Rate matching

The rate matching is typically used on a transmitter side. For the transmitter, the rate matching means that the transmitter determines a code rate of to-be-sent data based on an actually provided available physical resource, and performs channel encoding on the to-be-sent data. Then, the transmitter sends encoded data on the available physical resource. For example, if a total resource is $S_1$, and an unavailable resource is $S_2$, where both $S_1$ and $S_2$ are positive integers, an available resource is ($S_1$-$S_2$). The rate matching is to directly determine a code block size based on the resource of ($S_1$-$S_2$), perform channel encoding on to-be-transmitted data, and map the data to the resource of ($S_1$-$S_2$) and send the data on the resource of ($S_1$-$S_2$).

(12) Puncturing

The puncturing includes puncturing on a transmitter side and puncturing on a receiver side. For the transmitter, the puncturing means that the transmitter determines a code rate of to-be-sent data based on a total nominal sending resource, and performs channel encoding on the to-be-sent data. Then, the transmitter sends encoded data on an available resource, and does not send data on an unavailable resource. For example, if a total resource is $S_1$, and an unavailable resource is $S_2$, where both $S_1$ and $S_2$ are positive integers, an available resource is ($S_1$-$S_2$). The puncturing on the transmitter is to determine a code block size based on the resource of $S_1$, perform channel encoding on to-be-transmitted data, and map the data to the total resource of $S_1$. However, the data is sent only on the resource of ($S_1$-$S_2$) during sending.

On the receiver side, corresponding receiving puncturing is performed. If the transmitter side performs rate matching, the receiver receives only sent symbols. If the transmitter performs puncturing, the receiver also receives only sent symbols, but during decoding, the receiver sets data or signals that correspond to an unsent part and that are in a decoder to 0 in the decoder.

Under a condition of a same total resource $S_1$, a code rate obtained after channel encoding is performed during rate matching on the transmitter side is usually higher than a code rate obtained after puncturing. However, no information bit loss occurs during rate matching, but a corresponding loss occurs because puncturing is performed in a manner of performing encoding before puncturing.

(13) Priority (Priority)

The priority may be a service priority of a terminal device or a priority of a to-be-sent first message, or a transmission priority (transmission priority) of the terminal device. Because the terminal device may send a plurality of services at the same time, priorities of the plurality of services may be different. Therefore, a priority of the terminal device may also be described as the service priority of the terminal device.

The service priority may also be referred to as an L1 priority (L1 priority), a physical layer priority, a priority carried in sidelink control information (sidelink control information, SCI), a priority corresponding to a physical sidelink shared channel (physical sidelink shared channel, PSSCH) associated with SCI, a transmission priority, a priority of sending a PSSCH, a priority for resource determining, a priority of a logical channel, or a highest-level priority of a logical channel. There may be a correspondence between a priority level and a priority value. For example, a higher priority level corresponds to a smaller priority value, or a lower priority level corresponds to a smaller priority value. In an example in which a higher priority level corresponds to a smaller priority value, the priority value may be an integer ranging from 1 to 8 or an integer ranging from 0 to 7. If the priority value ranges from 1 to 8, the priority value 1 indicates a highest priority level.

(14) Congestion control (congestion control)

In a resource pool, a channel busy ratio (channel busy ratio, CBR) and a channel occupancy ratio (channel occupancy ratio, CR) are defined to represent a service density and a channel congestion degree on a resource.

(14.1) CBR

The CBR is a ratio or portion of S-RSSIs that exceed a configured threshold and that are obtained through measurement in a slot n on sub-channels in a resource pool in a slot in which a defined measurement window is located. Optionally, a size of the measurement window may be [n-a, n-b], where a and b are non-negative integers. For example, a=100, and b=1.

Optionally, for the CBR, different channels may be measured to obtain CBRs of the corresponding channels. For example, if a physical sidelink shared channel (physical sidelink shared channel, PSSCH) is measured, a CBR of the PSSCH is obtained; or if a physical sidelink control channel (physical sidelink control channel, PSCCH) is measured, a CBR of the PSCCH is obtained.

For the PSCCH, only a position that is in a resource pool of the PSCCH and that is not adjacent to a resource pool of the PSSCH in frequency domain is measured. During the measurement, a bandwidth of the PSCCH is fixed to two PRBs.

(14.2) CR

The CR is a value obtained, in a slot n, by dividing a quantity of channels used for transmission by a total quantity of configured sub-channels. Optionally, the quantity of channels used for transmission may be a sum of a quantity of sub-channels used for transmission before the slot n and/or a quantity of sub-channels scheduled for transmission after the slot n. Correspondingly, the total quantity of configured sub-channels may be a quantity of sub-channels in a measurement window before the slot n, and may also be a quantity of sub-channels in a measurement window after the slot n. For example, the measurement window before the slot n may be [n-a, n-1], the measurement window after the slot n may be [n, n+b], and the total quantity of configured sub-channels is a total quantity of sub-channels configured in the slots [n-a, n+b].

For example, for the slot n, assuming that a total quantity of sub-channels used for transmission in the slots [n-a, n-1] is S1, a total quantity of sub-channels scheduled for transmission in the slots [n, n+b] is S2, and the total quantity of sub-channels configured in the slots [n-a, n+b] is S, the CR obtained through measurement in the slot n is (S1+S2)/S.

It should be noted that a total quantity of sub-channels scheduled for transmission in the slots [n+1, n+b] is actually sub-channels occupied by subsequent transmission, and may be counted based on a retransmission indicated by scheduling assignment (scheduling assignment, SA) indication information detected in the slot n.

For example, for the slot n, if a total quantity of sub-channels used for transmission in slots [n-500, n-1] is S1=2000, a total quantity of sub-channels scheduled for transmission in slots [n, n+499] is S2=1000, and a total quantity of sub-channels configured in the slots [n-500, n+499] is S=1000*20, the CR obtained through measurement in the slot n is (2000+1000)/20000=0. 15.

FIG. 1 is an example diagram of an architecture of a communication system 1000 to which an embodiment of this application is applicable. As shown in FIG. 1, the communication system includes a radio access network 100 and a core network 200. Optionally, the communication system 1000 may further include the internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to a core network in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely an example diagram. The communication system may further include other network devices, for example, a wireless relay device and a wireless backhaul device, which are not shown in FIG. 1.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a fifth generation (5th generation, 5G) mobile communication system, a next generation base station in a sixth generation (6th generation, 6G) mobile communication system, a base station in a future mobile communication system, an access node in a Wi-Fi system, or the like; or may be a module or a unit that completes some functions of the base station, for example, a central unit (central unit, CU) or a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP).

The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal device may also be referred to as a terminal device, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, a sensor, or the like. A specific technology and a specific device form used by the terminal device are not limited in embodiments of this application.

The terminal device may establish a connection to a carrier network through an interface (for example, N1) provided by the carrier network, and use services such as data and/or voice provided by the carrier network. The terminal device may further access a domain name system (domain name system, DNS) over the carrier network, and use a carrier service deployed on the DNS and/or a service provided by a third party. The third party may be a service party except the carrier network and the terminal device, and may provide a service such as data and/or voice for the terminal device. A specific representation form of the third party may be specifically determined based on an actual application scenario, and is not limited herein.

The terminal device may also be referred to as a terminal device, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, a road side unit (road side unit, RSU), or the like. A specific technology and a specific device form used by the terminal device are not limited in embodiments of this application.

The base station and the terminal device may be fixed or movable. The base station and the terminal device each may be deployed on the land, including an indoor device, an outdoor device, a handheld device, or a vehicle-mounted device; may be deployed on the water; or may be deployed on an airplane, a balloon, and an artificial satellite in the air. Embodiments of this application impose no limitation on application scenarios of the base station and the terminal device.

Roles of the base station and the terminal device may be relative. For example, a helicopter or an uncrewed aerial vehicle 120i in FIG. 1 may be configured as a mobile base station, and for those terminal devices 120j accessing the radio access network 100 by 120i, the terminal device 120i is a base station. However, for the base station 110a, 120i is a terminal device. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal device may be collectively referred to as a communication apparatus, 110a and 110b in FIG. 1 may be referred to as a communication apparatus having a base station function, and 120a to 120j in FIG. 1 may be referred to as a communication apparatus having a terminal device function.

Communication between a base station and a terminal device, between base stations, or between terminal devices may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be simultaneously performed by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal device function may alternatively be performed by a module (for example, a chip or a modem) in a terminal device, or may be performed by an apparatus that has the terminal device function.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further interfered with by a signal from a neighboring cell.

The core network in embodiments of this application may include a network device that processes and forwards signaling and data of a user. The core network includes, for example, an access and mobility management function (access and mobility management function, AMF), a session management function (session management function, SMF), and a core network device such as a user plane gateway and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is generally located on a network side. The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may also include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in the network device, or may be a location server. This is not limited in embodiments of this application. For ease of description, the following embodiments are described by using an example in which the location management device is the LMF.

Based on FIG. 1 and the foregoing other content, FIG. 2 is an example diagram of an architecture of another communication system to which an embodiment of this application is applicable. As shown in FIG. 2, the communication system includes at least one gNB, at least one UE (a UE-1 and a UE-2 are used as examples in FIG. 2), an RSU, an LMF, and the like.

In FIG. 2, the gNB may communicate with the UE (the UE-1 and the UE-2) and the RSU through a link, and the LMF may communicate with the UE (the UE-1 and the UE-2) and the RSU through a link. The UE (the UE-1 or the UE-2) may also communicate with the RSU, and the UEs (the UE-1 and the UE-2) may also communicate with each other.

A sidelink in embodiments of this application may be a link between the UEs (the UE-1 and the UE-2), or may be a link between the UE (the UE-1 or the UE-2) and the RSU. The gNB in FIG. 2 may be replaced with the access network management device shown in FIG. 1, or a unit, a module, or a chip (system) in the access network management device. The UE (the UE-1 and the UE-2) may be the terminal device in FIG. 1, or a unit, a module, or a chip (system) in the terminal device, or may be a device that may be considered as the terminal in FIG. 1, or a unit, a module, or a chip in the device that may be considered as the terminal in FIG. 1. The RSU may be the RSU in FIG. 1 or a unit, a module, or a chip (system) in the RSU. The RSU in FIG. 2 may be replaced with another device, for example, an on board unit (on board unit, OBU) or a relay node having a mobility capability. In FIG. 2, the RSU is used as an example for illustration. The communication system is merely an example for description, and is not intended to limit the communication system in this application.

Based on the content shown in FIG. 1 and FIG. 2 and the foregoing other content, FIG. 3 is an example of a schematic flowchart of a communication method according to an embodiment of this application.

For ease of understanding, the solution provided in FIG. 3 is described from a perspective of interaction between a plurality of apparatuses. Any one of a first terminal apparatus, a second terminal apparatus, and a third terminal apparatus in embodiments of this application may be the UE (for example, the UE-1 and the UE-2) in FIG. 2 or a chip (system) in the UE, or the RSU in FIG. 2 or a chip (system) in the RSU; may be an OBU or a chip (system) in the OBU, or a relay node having a mobility capability or a chip (system) in the relay node; may be the terminal device in FIG. 1, or a chip (system) in the terminal device; or may be a device that may be considered as the terminal in FIG. 1, or a chip (system) in the device that may be considered as the terminal in FIG. 1.

Any two of the first terminal apparatus, the second terminal apparatus, and the third terminal apparatus may be devices of a same type (or chips in the device), or may be different devices. For example, the first terminal apparatus and the second terminal apparatus may be respectively the two UEs, the two RSUs (the RSU may be replaced with the OBU, the relay node having a mobility capability, or the like), or the UE and the RSU in FIG. 2.

As shown in FIG. 3, the method includes the following step 301 to step 304. The following further describes the method with reference to the accompanying drawings.

Step 301: The first terminal apparatus obtains first configuration information.

Step 302: The first terminal apparatus sends a reference signal based on the first configuration information.

The first terminal apparatus in this embodiment of this application may be considered as a new terminal apparatus, and the first terminal apparatus may support transmission of a reference signal used for sidelink positioning and transmission of data.

In this embodiment of this application, a resource in a PSSCH may be punctured, and a reference signal (for example, an SL-PRS) may be remapped. In step 302, the first terminal apparatus may puncture a resource location in the PSSCH based on the first configuration information (for example, a transmission parameter), and send the reference signal at the punctured resource location. It may also be understood that a resource in the PSSCH is punctured, and a resource that is vacant after the puncturing is used to map a reference signal (for example, an SL-PRS), so that the reference signal and the PSSCH are multiplexed.

A resource for the reference signal is located in the PSSCH for transmitting the data, and the resource for the reference signal is different from a resource for transmitting the data. For example, the resource for transmitting the reference signal is not used to send the PSSCH. For another example, a resource for transmitting the PSSCH is not used to transmit the SL-PRS. For another example, the resource for transmitting the reference signal and the resource for transmitting the data are in time division multiplexing, frequency division multiplexing, code division multiplexing, or space division multiplexing.

In this embodiment of this application, that the resource for transmitting the reference signal and the resource for transmitting the data are in time division multiplexing may mean that the resource for transmitting the reference signal and the resource for transmitting the data do not overlap in time domain. Optionally, the resource for transmitting the reference signal and the resource for transmitting the data may overlap in frequency domain.

In this embodiment of this application, that the resource for transmitting the reference signal and the resource for transmitting the data are in frequency division multiplexing may mean that the resource for transmitting the reference signal and the resource for transmitting the data do not overlap in frequency domain and overlap in time domain.

In this embodiment of this application, that the resource for transmitting the reference signal and the resource for transmitting the data are in code division multiplexing may mean that used sequences are different, which may overlap or may not overlap in time domain, and may overlap or may not overlap in frequency domain.

In this embodiment of this application, that the resource for transmitting the reference signal and the resource for transmitting the data are in space division multiplexing may mean that spatial beam information (or a precoded code word) of the reference signal and spatial beam information (or a precoded code word) of the data are different, which may overlap or may not overlap in time domain, and may overlap or may not overlap in frequency domain.

In this embodiment of this application, the resource for transmitting the reference signal may also be written as a resource for the reference signal, a resource used to transmit the reference signal, or the like. In this embodiment of this application, the resource for transmitting the data may also be written as a resource for the data, a resource used to transmit the data, or the like.

In this embodiment of this application, the data is carried in the PSSCH, and the reference signal is also carried in the PSSCH. Alternatively, it may be understood that the reference signal is embedded in the PSSCH for transmission. An actual resource used to transmit the reference signal is different from an actual resource used to transmit the data.

In this embodiment of this application, the first terminal apparatus may map the reference signal to a resource location that is originally used to transmit the data in the PSSCH. In other words, the resource location is no longer used to send the data, but used to transmit the reference signal, so that the second terminal apparatus measures the reference signal, to obtain a measurement result. The measurement result may be used for sidelink positioning, for example, positioning for the first terminal apparatus and/or the second terminal apparatus.

In this embodiment of this application, the reference signal and the data may be located in a same slot. In this case, a quantity of resources for transmitting the reference signal may be associated with a quantity of resources for transmitting the data in the slot. In another possible implementation, the reference signal and the data may occupy a plurality of slots. In this case, a quantity of resources for transmitting the reference signal may be associated with a quantity of resources for transmitting the data in the plurality of slots. In some content of this embodiment of this application, an example in which the reference signal and the data may be located in a same slot is used for description.

In this embodiment of this application, the first configuration information may indicate at least one of the following: content A1, content A2, content A3, content A4, content A5, content A6, content A7, or content A8. In this embodiment of this application, one or more of the content A1, the content A2, the content A3, the content A4, the content A5, the content A6, the content A7, or the content A8 may be configured by using one piece of configuration information, or may be separately configured by using a plurality of pieces of configuration information. In this embodiment of this application, an example in which the foregoing information is configured by using the first configuration information is used for description.

Content A1: Transmission parameter of the reference signal.

The transmission parameter of the reference signal may indicate the following content A1.1 and/or content A1.2, or the transmission parameter may include information indicating content A1.1 and/or content A1.2. Content A1.1 is a quantity of resources for transmitting the reference signal, and content A1.2 is a location of a resource for transmitting the reference signal.

In this embodiment of this application, "used for" does not mean "used only for", but represents "one purpose of", and does not limit another purpose of "used for". For example, the transmission parameter in this application indicates the quantity of resources for transmitting the reference signal, but does not indicate that the transmission parameter indicates only the quantity of resources for transmitting the reference signal, and may further indicate other content, for example, a location of a resource for transmitting the reference signal. A meaning of "used for" in other content is similar to that of the transmission parameter, and details are not described.

Content A1.1: Quantity of resources for transmitting the reference signal.

The quantity of resources for transmitting the reference signal in this embodiment of this application includes any one or more of the following: a quantity of slot symbols used for transmitting the reference signal, a Comb-N value on each slot symbol used for transmitting the reference signal, a quantity of REs occupied on each time domain symbol used for transmitting the reference signal, a quantity of REs occupied for transmitting the reference signal, or a quantity of sequences used for transmitting the reference signal.

In this embodiment of this application, a resource in a PSSCH may be punctured, and a reference signal (for example, an SL-PRS) may be remapped. The quantity of resources for transmitting the reference signal may include a quantity of resources that are punctured in the PSSCH and to which the reference signal needs to be mapped.

In this embodiment of this application, the resource for the reference signal may include at least one of a time domain resource, a frequency domain resource, a space domain resource, or a code domain resource of the reference signal. The quantity of resources for the reference signal in this embodiment of this application may include, for example, one or more of a quantity of time domain symbols (a quantity of time domain resources) occupied by the reference signal, a quantity of subcarriers (a quantity of frequency domain resources) occupied by the reference signal, a quantity of beams of the reference signal (for example, a quantity of beams with different directions, which may be considered as a quantity of space domain resources), or a quantity of sequences of the reference signal (a quantity of code domain resources, for example, a quantity of orthogonal cover codes, a quantity of cyclic shifts, a quantity of root sequences, or a quantity of different initial values of a pseudo-random sequence).

Information indicating the quantity of resources for transmitting the reference signal may be information about a quantity of resources, for example, information about a quantity of time domain symbols and/or frequency domain subcarriers for transmitting the reference signal. In another possible implementation, information indicating the quantity of resources for transmitting the reference signal may be some other information, which indirectly indicates the quantity of resources for transmitting the reference signal. For example, the information indicating the quantity of resources for transmitting the reference signal may indicate a density of frequency domain resources occupied by the reference signal. For example, the information indicating the quantity of resources for transmitting the reference signal may indicate a value of comb-N.

For Comb-N in this embodiment of this application, descriptions are as follows: Optionally, for Comb-N, a mapped reference signal (for example, an SL-PRS) appears at an interval of N REs in frequency domain, and is not transmitted on remaining N-1 REs. Optionally, a maximum of floor(10 $\log_{10}$ N) bits are required to indicate which RE in the Comb-N is occupied, where floor(x) represents rounding down x. If comb-N is 1, it indicates that the reference signal occupies one subcarrier at an interval of one subcarrier in a frequency domain direction. If comb-N is 4, it indicates that the reference signal occupies one subcarrier at an interval of four subcarriers in a frequency domain direction. A smaller value of comb-N indicates denser frequency domain resources occupied by the reference signal, and a larger value of comb-N indicates sparser frequency domain resources occupied by the reference signal. For another example, the first configuration information indicates a pattern of the reference signal, the pattern of the reference signal may indicate a location of a resource occupied by the reference signal, and the pattern of the reference signal may indirectly indicate the quantity of resources for transmitting the reference signal.

In this embodiment of this application, the quantity of resources for transmitting the reference signal is associated with a quantity of resources for transmitting the data.

In this embodiment of this application, the resource for transmitting the data may include at least one of a time domain resource, a frequency domain resource, a space domain resource, or a code domain resource for transmitting the data.

The quantity of resources for transmitting the data in this embodiment of this application includes any one or more of the following: a quantity of slot symbols used for transmitting the data, a quantity of REs occupied on each time domain symbol used for transmitting the data, a quantity of REs occupied for transmitting the data, or a quantity of DMRS sequences used for transmitting the data.

The quantity of resources for the data in this embodiment of this application may include, for example, one or more of a quantity of time domain symbols (a quantity of time domain resources) occupied by the data, a quantity of subcarriers (a quantity of frequency domain resources) occupied by the data, a quantity of beams of the data (for example, a quantity of beams with different directions, which may be considered as a quantity of space domain resources), or a quantity of coding schemes of the data (a quantity of code domain resources).

In this embodiment of this application, the resource for transmitting the data is a resource originally configured to transmit the data in the PSSCH, and may also be referred to as a resource that may be used to transmit the data, or the like. A quantity of resources originally configured to carry the data in the PSSCH may be equal to or not equal to a quantity of resources actually used to carry the data. For example, the quantity of resources originally configured to transmit the data is $N_0$, where $N_0$ is a positive integer, and a reference signal may be mapped to $N_1$ resources in the $N_0$ resources, where $N_1$ is a positive integer. Then, the reference signal is transmitted by using the $N_1$ resources, and the $N_1$ resources are actually not used to transmit the data. In this case, the quantity of resources actually used to transmit the data is ($N_0$-N1). However, in this embodiment of this application, the quantity of resources for transmitting the reference signal (which may be $N_1$ resources, or may be more resources than the $N_1$ resources) is always related to the quantity ($N_0$) of resources that may be used to transmit the data.

There are a plurality of examples in which the quantity of resources for transmitting the reference signal is associated with the quantity of resources for transmitting the data.

That the quantity of resources for transmitting the reference signal is associated with the quantity of resources for transmitting the data may include one or more of the following content 1, content 2, or content 3.

Content 1: The first configuration information includes information about the quantity of resources for transmitting the reference signal and information about the quantity of resources for transmitting the data.

In this embodiment of this application, the information about the quantity of resources for transmitting the reference signal may include, for example, information about the quantity of resources for the reference signal, for example, the quantity of time domain symbols occupied by the reference signal and the quantity of frequency domain subcarriers occupied by the reference signal. The information about the quantity of resources for transmitting the data may include, for example, information about the quantity of resources for the data, for example, the quantity of time domain symbols occupied by the data and the quantity of frequency domain subcarriers occupied by the data.

The information about the quantity of resources for transmitting the reference signal and the information about the quantity of resources for transmitting the data may be configured together (for example, in the first configuration information, the quantity of resources for transmitting the reference signal and the quantity of resources for transmitting the data are configured together, or the quantity of resources for transmitting the reference signal and the quantity of resources for transmitting the data are correlated, for example, positively correlated or negatively correlated).

Content 2: The first configuration information includes information about the quantity of resources for transmitting the reference signal. The first configuration further includes some parameters, and these parameters may indirectly indicate information about the quantity of resources for transmitting the data.

In this embodiment of this application, the parameter indirectly indicating the quantity of resources for transmitting the data includes, for example, a demodulation reference signal pattern, a channel state information reference signal pattern, a resource location of feedback information, or a period of a feedback channel. These parameters may be associated with the information about the quantity of resources for transmitting the reference signal.

The parameter indirectly indicating the quantity of resources for transmitting the data and the information about the quantity of resources for transmitting the reference signal may be configured together (for example, in the first configuration information, the parameter indirectly indicating the quantity of resources for transmitting the data and the information about the quantity of resources for transmitting the reference signal may be configured together, or the parameter indirectly indicating the quantity of resources for transmitting the data and the information about the quantity of resources for transmitting the reference signal are correlated, for example, positively correlated or negatively correlated).

Content 3: The first configuration information includes information about a parameter indirectly indicating the quantity of resources for transmitting the data, and information about a parameter indirectly indicating the quantity of resources for transmitting the reference signal.

In this embodiment of this application, the parameter indirectly indicating the quantity of resources for transmitting the reference signal may, for example, include a demodulation reference signal pattern, a channel state information reference signal pattern, a resource location of feedback information, or a period of a feedback channel. These parameters may be associated with the information about the quantity of resources for transmitting the reference signal.

The parameter indirectly indicating the quantity of resources for transmitting the data and the parameter indirectly indicating the quantity of resources for transmitting the reference signal may be configured together (for example, in the first configuration information, the parameter indirectly indicating the quantity of resources for transmitting the data and the parameter indirectly indicating the quantity of resources for transmitting the reference signal may be configured together, or the parameter indirectly indicating the quantity of resources for transmitting the data and the parameter indirectly indicating the quantity of resources for transmitting the reference signal are correlated, for example, positively correlated or negatively correlated).

In this embodiment of this application, positive correlation (Positive correlation) means that two variables change in a same direction. For example, one variable changes in descending order, and the other variable also changes in descending order. For another example, when one variable changes in ascending order, and the other variable also changes in ascending order. Change coefficients of the two variables may be different. In this embodiment of this application, negative correlation means that two variables change in opposite directions. For example, one variable changes in descending order, and the other variable changes in ascending order. For another example, when one variable changes in ascending order, and the other variable changes in descending order. Change coefficients of the two variables may be different.

For example, a larger quantity of resources used to transmit the data (for example, a larger quantity of time domain symbols for transmitting the data, and/or denser frequency domain resources occupied by the data) may indicate a larger quantity of resources (time domain resources and/or frequency domain resources) occupied by the reference signal. Because the quantity of resources for transmitting the data is large, data transmission is not affected greatly when the quantity of resources occupied by the reference signal is large. Therefore, positioning performance may be improved by increasing the quantity of resources occupied by the reference signal. For another example, a smaller quantity of resources used to transmit the data (for example, a smaller quantity of time domain symbols for transmitting the data, and/or sparser frequency domain resources occupied by the data) may indicate a smaller quantity of resources (time domain resources and/or frequency domain resources) occupied by the reference signal. Because the quantity of resources for transmitting the data is small, data transmission is affected greatly when the quantity of resources occupied by the reference signal is large. Therefore, impact of transmission of the reference signal on the data can be reduced by reducing the quantity of resources occupied by the reference signal.

For another example, the quantity of resources for transmitting the reference signal may be related to a level corresponding to the quantity of resources for transmitting the data, a quantity of time domain resources, a quantity of frequency domain resources, or a quantity of time-frequency resources. For example, a plurality of levels may be set, a quantity of resources for the reference signal corresponding to each level is set, and each level corresponds to a range of a quantity of resources for transmitting the data. The quantity of resources for transmitting the reference signal may be a quantity of resources for transmitting the reference signal that is set at a level corresponding to the quantity of resources for transmitting the data. For example, the level corresponding to the quantity of resources for transmitting the data is set relatively flexibly. For example, a larger quantity of resources for transmitting the data may correspond to a higher level (or a lower level), and a larger quantity of resources for the reference signal corresponding to the level.

In this embodiment of this application, the quantity of resources for transmitting the reference signal is correlated with a quantity of resources for transmitting the data. It may also be understood that the transmission parameter (for example, the quantity of resources for transmitting the reference signal) may be configured based on information used to determine the quantity of resources for transmitting the data. It may also be understood that a value or a value range of the quantity of resources for the reference signal is correlated with a quantity of time-frequency resources used to transmit the data in a slot. In this way, the transmission parameter can be configured more properly, so as to achieve a good balance between positioning performance and data transmission.

The quantity of resources for transmitting the data may be determined based on at least one of the following: a parameter B1, a parameter B2, a parameter B3, or a parameter B4. A quantity of resources for transmitting data in a slot may be more accurately determined based on the information, to provide a more accurate reference basis for determining the transmission parameter.

Parameter B1: DMRS pattern.

The DMRS pattern includes a quantity of time domain symbols of a DMRS and/or a resource location of the DMRS.

The DMRS pattern may affect the quantity of resources for transmitting the data. When the DMRS pattern indicates that a DMRS occupies a larger quantity of resource locations (for example, a quantity of time domain symbols and/or a quantity of frequency domain REs) in one slot, a quantity of resources used to transmit the data in the slot may be reduced. When the DMRS pattern indicates that a DMRS occupies a smaller quantity of resource locations in one slot, a quantity of resources used to transmit the data in the slot may be increased.

Parameter B2: CSI-RS pattern.

The CSI-RS pattern includes a quantity of time domain symbols of a CSI-RS and/or a resource location of the CSI-RS.

The CSI-RS pattern may affect the quantity of resources for transmitting the data. When the CSI-RS pattern indicates that a CSI-RS occupies a larger quantity of resource locations (for example, a quantity of time domain symbols and/or a quantity of frequency domain REs) in one slot, a quantity of resources used to transmit the data in the slot may be reduced. When the CSI-RS pattern indicates that a CSI-RS occupies a smaller quantity of resource locations in one slot, a quantity of resources used to transmit the data in the slot may be increased.

Parameter B3: Resource location of feedback information.

The parameter B3 may be replaced with whether feedback information exists in a slot, or replaced with whether a PSFCH resource exists in a slot. Alternatively, the parameter B3 may be replaced with that no feedback information exists in a slot.

The resource location of the feedback information may affect the quantity of resources for transmitting the data. When the resource location of the feedback information exists in one slot, that is, the feedback information exists in the slot, a quantity of resources used to transmit the data in the slot may be reduced. When the resource location of the feedback information does not exist in one slot, that is, the feedback information does not exist in the slot, a quantity of resources used to transmit the data in the slot may be increased.

Parameter B4: Period of a feedback channel.

The period of the feedback channel may affect the quantity of resources for transmitting the data. When the feedback channel exists in one slot, a quantity of resources used to transmit the data in the slot may be reduced. When the feedback channel does not exist in one slot, a quantity of resources used to transmit the data in the slot may be increased. Alternatively, when a period is shorter, a PSFCH occurs at a higher frequency, and fewer resources may be available during initial transmission and/or retransmission of data transmission. Alternatively, when a period is longer, a PSFCH occurs at a lower frequency, and more resources may be available during initial transmission and/or retransmission of data transmission.

In this embodiment of this application, the quantity of resources used to transmit the data may alternatively be determined based on a plurality of the parameter B1, the parameter B2, the parameter B3, or the parameter B4. For example, a quantity of resources that can be used to transmit the data in a slot is comprehensively determined by comprehensively considering content such as a quantity of resource locations occupied by a DMRS in the slot and whether the slot includes a feedback channel.

In this embodiment of this application, in addition to at least one of the parameter B1, the parameter B2, the parameter B3, or the parameter B4, a parameter such as a quantity of symbols occupied by first-stage SCI and second-stage SCI and/or a quantity of frequency domain REs or RBs may be further considered to determine the resource location for transmitting the reference signal, so that a more proper resource location of the reference signal can be obtained.

Content A1.2: Location of the resource for transmitting the reference signal.

The location of the resource for transmitting the reference signal may include related information about a time domain resource and/or a frequency domain resource for the reference signal. For example, the reference signal includes a DMRS, and the location of the resource for transmitting the reference signal may include a location of a time domain symbol occupied by the DMRS in a slot for transmitting the PSSCH.

The resource for transmitting the reference signal is located in a time domain symbol occupied by the PSSCH. The resource for transmitting the reference signal may occupy one or more time domain symbols in the PSSCH. When the resource for transmitting the reference signal occupies a plurality of time domain symbols in the PSSCH, the resource for transmitting the reference signal may occupy a plurality of consecutive time domain symbols, or may occupy a plurality of inconsecutive symbols. The location of the resource for transmitting the reference signal may include a location of a time domain symbol occupied by the reference signal in a slot.

In a possible implementation, the first configuration information may indicate time domain symbols that are in time domain symbols occupied by the DMRS in the slot and on which puncturing processing can be performed. For example, the first configuration information is indicated by using a bitmap (bitmap), and the bitmap indicates a resource location on a specific time domain symbol in a PSSCH that needs to be punctured. Each bit may correspond to a location of a time domain symbol of one DMRS. For example, when a time domain symbol of one DMRS needs to be punctured, a bit corresponding to the time domain symbol of the DMRS in the bitmap may be set to 1. When a time domain symbol of one DMRS does not need to be punctured, a bit corresponding to the time domain symbol of the DMRS in the bitmap may be set to 0.

For one of the one or more time domain symbols occupied by the resource for transmitting the reference signal, the resource for transmitting the reference signal may occupy some or all frequency domain resources in the time domain symbol. The location of the resource for transmitting the reference signal may also include at least one of a subcarrier spacing occupied by the reference signal in frequency domain, a frequency domain offset, or a bandwidth. It can be learned that the location of the resource for transmitting the reference signal may be indicated in a plurality of manners. In this way, flexibility of the solution can be improved.

A resource in a PSSCH may be punctured, and a reference signal (for example, an SL-PRS) may be remapped. The location of the resource for transmitting the reference signal includes a location of a resource that is punctured in the PSSCH and to which the reference signal needs to be mapped.

The location of the resource that is punctured in the PSSCH and to which the reference signal needs to be mapped may include a location of a resource that can be originally used to map the data and that is on the time domain symbol occupied by the data in the PSSCH, and/or a location of a resource that can be originally used to map the data and that is on the time domain symbol occupied by the DMRS in the PSSCH. It may also be understood that a data resource on a data symbol and/or a DMRS symbol in the PSSCH is punctured, and a reference signal (for example, an SL-PRS) is mapped at a punctured resource location.

It may also be understood that the location of the resource that is punctured in the PSSCH and to which the reference signal needs to be mapped includes at least one of the following: a location of a subcarrier on a DMRS time domain symbol in the PSSCH; a location of a subcarrier on a CSI-RS time domain symbol in the PSSCH; or a location of a subcarrier on a time domain symbol other than the DMRS time domain symbol and the CSI-RS time domain symbol in the PSSCH. A time domain symbol in the PSSCH other than a DMRS time domain symbol and a CSI-RS time domain symbol may also include a time domain symbol occupied by data in the PSSCH. It can be learned that a large quantity of locations are selected for the resource that is punctured and to which the reference signal is mapped, so that flexibility of the solution can be improved.

FIG. 4A, FIG. 4B, and FIG. 4C each show an example of a resource location that is punctured in a PSSCH and to which a reference signal needs to be mapped according to an embodiment of this application. As shown in FIG. 4A, FIG. 4B, and FIG. 4C, the PSSCH includes a time domain symbol occupied by a DMRS, and a time domain symbol occupied by data in the PSSCH. The PSSCH further includes a GAP and a time domain symbol occupied by a PSFCH.

FIG. 4A shows an example of puncturing a time domain symbol occupied by a DMRS and mapping a reference signal. As shown in FIG. 4A, time domain symbols occupied by a DMRS in a PSSCH include a time domain symbol 1, a time domain symbol 5, and a time domain symbol 9. In this embodiment of this application, time domain symbols occupied by some or all DMRSs in the PSSCH may be punctured. FIG. 4A is shown by using an example in which the time domain symbol 5 is punctured. The time domain symbol occupied by the DMRS in the PSSCH may carry the DMRS and data. In this embodiment of this application, a subcarrier that is used to carry data and that is in subcarriers on the time domain symbol occupied by the DMRS may be punctured. For example, in FIG. 4A, a subcarrier 1, a subcarrier 3, a subcarrier 5, a subcarrier 7, a subcarrier 9, and a subcarrier 11 on the time domain symbol 5 are punctured, and the subcarrier 1, the subcarrier 3, the subcarrier 5, the subcarrier 7, the subcarrier 9, and the subcarrier 11 are subcarriers that are on the time domain symbol 5 and that are used to carry data. Other subcarriers on the time domain symbol 5 may carry data, or may carry a DMRS.

FIG. 4B shows an example of puncturing a time domain symbol occupied by data (a time domain symbol other than a DMRS time domain symbol and a CSI-RS time domain symbol in a PSSCH) and mapping a reference signal. As shown in FIG. 4B, time domain symbols occupied by the data in the PSSCH include a time domain symbol 2, a time domain symbol 3, a time domain symbol 4, a time domain symbol 6, a time domain symbol 7, and a time domain symbol 8. In this embodiment of this application, time domain symbols occupied by some or all data in the PSSCH may be punctured. FIG. 4B is shown by using an example in which the time domain symbol 6 is punctured. The time domain symbol occupied by the data in the PSSCH may carry the data. In this embodiment of this application, a subcarrier that is used to carry data and that is in subcarriers on the time domain symbol occupied by the data may be punctured. For example, a subcarrier 0, a subcarrier 3, a subcarrier 6, and a subcarrier 9 on the time domain symbol 6 in FIG. 4B are punctured.

FIG. 4C shows an example of puncturing a time domain symbol occupied by a DMRS and a time domain symbol occupied by data (a time domain symbol other than a DMRS time domain symbol and a CSI-RS time domain symbol in a PSSCH) and mapping a reference signal. For an example of mapping the DMRS time domain symbol to the reference signal in FIG. 4C, refer to the related descriptions in FIG. 4A. For an example of mapping the time domain symbol occupied by the data to the reference signal in FIG. 4C, refer to the related descriptions in FIG. 4B. Details are not described.

In this embodiment of this application, a value or a value range of the location of the resource for the reference signal is correlated with a quantity of time-frequency resources used to transmit the data in a slot. For example, the quantity of resources for transmitting the data may be determined based on at least one of the following: a parameter B1, a parameter B2, a parameter B3, or a parameter B4. For related content, refer to the foregoing descriptions. Details are not described.

Content A2: Time domain gap.

The first configuration information is further used to configure the time domain gap. Alternatively, it may be understood that the first configuration information includes information indicating the time domain gap. A location between two adjacent time domain symbols occupied by the reference signal in a slot is not greater than the time domain gap. It can be learned that the location of the resource for transmitting the reference signal may be indicated in a plurality of manners. For example, the first configuration information is used to configure the time domain gap, and the location between two adjacent time domain symbols occupied by the reference signal set by the first terminal apparatus is not greater than the time domain gap. In this way, an excessively large interval between a plurality of reference signals received by a receive end can be avoided, thereby improving positioning performance.

Content A3: Allow puncturing a PSSCH resource on a time domain symbol of a PSSCH in a slot.

The first configuration information may further configure the content A3. When the first configuration information is configured to allow puncturing the PSSCH resource on the time domain symbol of the PSSCH in the slot, the first terminal apparatus is allowed to puncture the time domain symbol of the PSSCH.

In this embodiment of this application, the first configuration information may alternatively be configured not to allow puncturing the PSSCH resource on the time domain symbol of the PSSCH in the slot. The content A3 may be replaced with: Not allow puncturing a PSSCH resource on a time domain symbol of a PSSCH in a slot. When the first configuration information is configured not to allow puncturing the PSSCH resource on the time domain symbol of the PSSCH in the slot, the first terminal apparatus is not allowed to puncture the time domain symbol of the PSSCH.

For example, the first configuration information may be configured not to allow only puncturing a resource in the PSCCH. In this way, transmission of the reference signal can be prevented from affecting information carried on the PSCCH, thereby improving a success rate of data decoding.

For another example, the first configuration information may be configured not to allow puncturing a resource on a time domain symbol of a DMRS of a PSSCH carrying second-stage SCI. In this way, transmission of the reference signal can be prevented from affecting transmission of the DMRS signal in the PSSCH carrying the second-stage SCI, thereby improving a success rate of data decoding.

Content A4: Increase power of the reference signal, or not increase power of the reference signal.

The first configuration information may be configured to increase the power of the reference signal. In this case, the first terminal apparatus needs to increase the power of the mapped reference signal. The first configuration information may further configure a value by which the power is increased, for example, the power of the reference signal needs to be increased by 3 dB. Because the power of the reference signal is increased, positioning performance of positioning performed based on the reference signal may be improved.

In another possible implementation, the first configuration information may be configured not to increase the power of the reference signal. In this case, the first terminal apparatus does not need to increase the power of the mapped reference signal. In this way, impact on data transmission can be reduced.

Content A5: The reference signal and the PSSCH are not multiplexed in a slot.

In this embodiment of this application, that the reference signal and the PSSCH used to carry data are not multiplexed in a slot may also be understood as one of the following content:

the reference signal is located in the PSSCH, a time domain resource occupied by the data in the PSSCH does not overlap a time domain resource occupied by the reference signal, and the reference signal and the data in the PSSCH respectively occupy different time domain symbols in a slot;
the reference signal is not sent in the PSSCH;
the reference signal and the PSSCH used to carry the data are not multiplexed in a slot;
no PSSCH is transmitted in a slot in which the reference signal is located;
a time domain symbol on which the reference signal is located is different from a time domain symbol occupied by the PSSCH; or
a time domain symbol on which the reference signal is located is different from a time domain symbol occupied by the PSSCH, and the time domain symbol on which the reference signal is located is not located in the middle of the symbol on which the PSSCH is located.

If the first configuration information indicates that the reference signal and the PSSCH are not multiplexed in a slot, the first terminal apparatus is not allowed to send the reference signal in the PSSCH. For example, the first terminal apparatus may send the reference signal outside the PSSCH.

That the first terminal apparatus sends the reference signal outside the PSSCH may also be understood as follows: The first terminal apparatus separately sends the reference signal, or sends the reference signal and the PSSCH in a time division multiplexing manner. Alternatively, it may be understood that a time domain resource for sending the reference signal does not overlap a time domain resource for sending the PSSCH, or it may be understood that the reference signal is not embedded in the PSSCH for sending. In a possible implementation, in this embodiment of this application, that time division multiplexing is performed on two pieces of information (for example, a reference signal and a PSSCH) may be understood as that time domain resources of the two pieces of information do not overlap, and frequency domain resources of the two pieces of information overlap.

In a possible implementation, the first configuration information may further indicate the following content A5.1: Content A5.1: The reference signal and the PSSCH are allowed not to be multiplexed in a slot when a first preset condition is met.

The first preset condition includes one or more of the following: a condition A5.1.1, a condition A5.1.2, or a condition A5.1.3.

Condition A5.1.1: A priority of the reference signal is higher than a preset first priority.

The first priority may be preconfigured, or may be sent by a network apparatus to the first terminal apparatus. When the priority of the reference signal is higher than the preset first priority, because the priority of the reference signal is higher, the first terminal apparatus may separately find a resource outside the PSSCH to send the reference signal, so that interference to the reference signal is less, and then an apparatus that needs to measure an SL-PRS in the reference signal obtains a better measurement result, thereby improving positioning accuracy.

Condition A5.1.2: A CBR of a resource pool including the resource used for the reference signal is less than a preset first CBR threshold.

When the CBR of the resource pool is less than the first CBR threshold, a congestion degree of the resource pool is low, that is, a small quantity of resources are occupied, and a large quantity of resources can be used. In this case, the reference signal may be separately sent, that is, the reference signal does not need to be sent in the PSSCH, so that impact on data sent in the PSSCH can be reduced.

Condition A5.1.3: A CBR of a resource pool including the resource used for the reference signal is less than a second CBR threshold associated with a priority of the reference signal.

In a possible implementation, different CBR threshold ranges (or thresholds) may be set for different priorities. For example, a higher priority indicates a higher CBR threshold range (or threshold), and a lower priority indicates a lower CBR threshold range (or threshold). Alternatively, a higher priority indicates a lower CBR threshold range (or threshold), and a lower priority indicates a higher CBR threshold range (or threshold). Alternatively, some priority ranges may be set. One priority range includes one or more priorities, one priority range may correspond to one CBR threshold range (or threshold), and two CBR threshold ranges (or thresholds) corresponding to two priority ranges are different.

Because the CBR threshold may be set based on a priority of a message, a sending manner of a message of each priority may be more flexibly controlled.

For example, if the priority has a positive correlation with the CBR threshold, a reference signal with a higher priority has a larger second CBR threshold, and a reference signal with a lower priority has a smaller second CBR threshold. A reference signal with a higher priority is configured with a larger second CBR threshold. Therefore, a reference signal with a higher priority has a higher probability of meeting the first preset condition, and a probability of separately sending the reference signal (not sending the reference signal in the PSSCH) is higher. In this case, a transmit end may separately send the reference signal at a higher probability, that is, does not need to send the reference signal in the PSSCH, thereby improving positioning performance. A reference signal with a lower priority is configured with a smaller second CBR threshold. Therefore, a reference signal with a lower priority has a lower probability to meet the first preset condition, and a probability of sending the reference signal outside the PSSCH is lower. In this case, the transmit end may separately send the reference signal at a lower probability, that is, sends the reference signal in the PSSCH, thereby reducing impact on communication performance of legacy UE in the resource pool.

For example, if the priority has a negative correlation with the CBR threshold, a reference signal with a higher priority has a smaller second CBR threshold, and a reference signal with a lower priority has a larger second CBR threshold. A reference signal with a higher priority is configured with a smaller second CBR threshold. Therefore, a reference signal with a higher priority has a lower probability of meeting the first preset condition, and a probability of sending the reference signal outside the PSSCH is lower. In this case, the transmit end may separately send the reference signal at a lower probability, that is, send the reference signal in the PSSCH at a higher probability, thereby occupying fewer resources. A probability that a second CBR threshold is configured for a reference signal with a lower priority is higher. Therefore, a probability that a reference signal with a lower priority meets the first preset condition is also higher, and a probability that the reference signal is not sent in the PSSCH is also higher. In this case, the transmit end may separately send the reference signal at a higher probability, that is, may send the reference signal outside the PSSCH at a higher probability, thereby reducing impact on data sent in the PSSCH and improving positioning performance.

In this embodiment of this application, the foregoing several first preset conditions may alternatively be used in combination. When the first preset condition includes a combination of the foregoing several conditions, the first terminal apparatus can determine that the first preset condition is met only when all the combined conditions are met. For example, the first preset condition includes: a priority of the reference signal is higher than a preset first priority, and a CBR of a resource pool including the resource used for the reference signal is less than a preset first CBR threshold.

Content A6: The reference signal and the PSSCH are multiplexed in a slot.

In this embodiment of this application, that the resource for the reference signal is located in the physical sidelink shared channel for transmitting the data may be understood as that the reference signal and the PSSCH are multiplexed in the slot.

In this embodiment of this application, that the reference signal and the PSSCH are multiplexed in a slot may also be understood as one or more of the following content:

the reference signal is located in the PSSCH, a time domain resource occupied by the data in the PSSCH overlaps a time domain resource occupied by the reference signal, and the reference signal and the data in the PSSCH are in frequency division multiplexing in a slot;
the reference signal is sent in the PSSCH;
the reference signal and the PSSCH used to carry the data are multiplexed in a slot;
the reference signal is sent on all or some of sub-channels on which the PSSCH is located;
a time domain symbol on which the reference signal is located is the same as a time domain symbol on which the PSSCH is located, and occupies some subcarriers or REs on the time domain symbol; or
no PSSCH is transmitted on a time domain symbol on which the reference signal is located, and the time domain symbol on which the reference signal is located is located in the middle of a time domain symbol occupied by the PSSCH.

If the first configuration information indicates that the reference signal and the PSSCH are multiplexed in a slot, the first terminal apparatus may send the reference signal in the PSSCH. For example, the first terminal apparatus embeds the reference signal into the PSSCH for sending, or it may be understood that a time domain resource of the reference signal overlaps a time domain resource of the PSSCH.

In a possible implementation, the first configuration information may further indicate the following content A6.1: Content A6.1: Information indicating the following content: The reference signal and the PSSCH are allowed to be multiplexed in a slot when a second preset condition is met.

The second preset condition includes one or more of the following: a condition A6.1.1, a condition A6.1.2, a condition A6.1.3, or a condition A6.1.4.

Condition A6.1.1: A priority of the reference signal is lower than a preset second priority.

The second priority may be preconfigured, or may be sent by a network apparatus to the first terminal apparatus. When the priority of the reference signal is lower than the preset second priority, because the priority of the reference signal is lower, the first terminal apparatus may send the reference signal in the PSSCH, that is, the first terminal apparatus does not need to separately select a resource for the reference signal, so that fewer resources in the resource pool can be occupied by the reference signal, and impact of the reference signal on other data transmission can be reduced.

Condition A6.1.2: A priority of the reference signal is higher than a preset third priority.

The third priority may be preconfigured, or may be sent by a network apparatus to the first terminal apparatus. When the priority of the reference signal is higher than the preset third priority, because the priority of the reference signal is higher, the first terminal apparatus may send the reference signal in the PSSCH, that is, the first terminal apparatus does not need to separately select a resource for the reference signal, so that fewer resources in the resource pool can be occupied by the reference signal, and impact of the reference signal on other data transmission can be reduced.

In this embodiment of this application, any two of the first priority, the second priority, and the third priority may be the same, or may be different. For example, the second priority may be higher than the third priority, or the second priority is lower than the third priority, or the second priority is equal to the third priority.

Condition A6.1.3: A CBR of a resource pool including the resource used for the reference signal is less than a preset third CBR threshold.

When the CBR of the resource pool is less than the third CBR threshold, a congestion degree of the resource pool is low. When the reference signal is sent in the PSSCH, impact on the PSSCH is reduced, and a resource does not need to be separately selected for the reference signal, so that fewer resources in the resource pool can be occupied by the reference signal.

Condition A6.1.4: A CBR of a resource pool including the resource used for the reference signal is less than a fourth CBR threshold associated with a priority of the reference signal.

In a possible implementation, different CBR thresholds may be set for different priorities. For example, a higher priority indicates a higher CBR threshold, and a lower priority indicates a lower CBR threshold. Alternatively, a higher priority indicates a lower CBR threshold, and a lower priority indicates a higher CBR threshold. Alternatively, some priority ranges may be set. One priority range includes one or more priorities, one priority range may correspond to one CBR threshold, and two CBR thresholds corresponding to two priority ranges are different.

Because the CBR threshold may be set based on a priority of a message, a sending manner of a message of each priority may be more flexibly controlled.

For example, if the priority is positively correlated with the CBR threshold, a reference signal with a higher priority has a larger fourth CBR threshold, and a reference signal with a lower priority has a smaller fourth CBR threshold. A probability that a reference signal with a higher priority is less than the fourth CBR threshold is higher. Therefore, a probability that a reference signal with a higher priority meets the second preset condition is also higher, and a probability that the reference signal is sent in the PSSCH is also higher, thereby occupying fewer resources. A probability that a reference signal with a lower priority is less than the fourth CBR threshold is higher. Therefore, a probability that a reference signal with a lower priority meets the second preset condition is also higher, and a probability that the reference signal is sent in the PSSCH is also higher, thereby occupying fewer resources.

For example, if the priority is negatively correlated with the CBR threshold, a reference signal with a higher priority has a smaller fourth CBR threshold, and a reference signal with a lower priority has a larger fourth CBR threshold. A probability that a reference signal with a higher priority is less than the fourth CBR threshold is lower. Therefore, a probability that a reference signal with a higher priority meets the second preset condition is also lower, and a probability that the reference signal is sent in the PSSCH is also lower. In this case, the transmit end may separately send the reference signal at a higher probability, that is, may send the reference signal outside the PSSCH at a higher probability, thereby reducing impact on data sent in the PSSCH and improving positioning performance. A probability that a reference signal with a lower priority is less than the fourth CBR threshold is higher. Therefore, a probability that a reference signal with a lower priority meets the second preset condition is also higher, and a probability that the reference signal is sent in the PSSCH is also higher, thereby occupying fewer resources.

In this embodiment of this application, any two of the first CBR threshold, the second CBR threshold, the third CBR threshold, or the fourth CBR threshold may be the same or different.

Content A7: Perform RSRP measurement on the PSCCH that carries first-stage SCI in SCI.

When the first configuration information indicates the content A7, it means that a receive end (for example, the second terminal apparatus or a fourth terminal apparatus) is allowed to perform RSRP measurement on the PSCCH in the resource pool.

In a possible implementation, when the first configuration information includes the content A7, it means that the receive end (for example, the second terminal apparatus or the fourth terminal apparatus) is allowed to perform only (only) reference signal received power (reference signal received power, RSRP) measurement on the PSCCH in the resource pool. Alternatively, it may be understood that only PSCCH-RSRP measurement may be performed in the resource pool (Only PSCCH-RSRP is only allowed in the resource pool). It can be learned that, in this solution, a measurement parameter of the terminal apparatus may be indicated by using signaling configured or preconfigured by a network apparatus, so that behavior of the terminal apparatus can be aligned with behavior of a legacy terminal apparatus, and impact on measurement on the legacy UE can be reduced.

Content A8: Quantity of symbols occupied by the PSSCH that carries second-stage SCI in SCI.

When the first configuration information indicates the content A8, the first terminal apparatus may send the PSSCH based on the quantity of symbols occupied by the PSSCH that is configured by using the first configuration information. It can be learned that, in this solution, a network apparatus may configure the quantity of symbols occupied by the PSSCH, thereby improving a management capability of the network apparatus on resources used by the terminal apparatus, and improving performance of an entire system.

In this embodiment of this application, the content A5 and the content A6 may be configured in the first configuration information, so that the first terminal apparatus selects to send the reference signal in the PSSCH or outside the PSSCH. In this embodiment (for example, FIG. 3) of this application, an example in which the first terminal apparatus selects to send the reference signal in the PSSCH is used for description.

After the first configuration information configures the related information of the reference signal, for example, the information such as the quantity of resources for transmitting the reference signal and/or the location of the resource for transmitting the reference signal, the first terminal apparatus needs to send the reference signal based on the configuration of the first configuration information. For example, the first terminal apparatus needs to send the reference signal at the location of the resource for transmitting the reference signal that is configured by using the first configuration information. For another example, the quantity of resources occupied by the reference signal sent by the first terminal apparatus needs to meet the quantity of the resources for transmitting the reference signal that is configured by using the first configuration information.

In this application, the first configuration information is obtained in a plurality of manners. For example, the first terminal apparatus receives the first configuration information from another apparatus, and the another apparatus may be, for example, a network apparatus (for example, an access network device or a location management apparatus) or another terminal apparatus. For example, the network apparatus generates configuration information, where the configuration information is the first configuration information, and the network apparatus sends the configuration information to the first terminal apparatus. Correspondingly, the first terminal apparatus receives the configuration information, to obtain the first configuration information. In this embodiment of this application, the first configuration information may be carried at a plurality of locations, for example, may be carried in a system message, an RRC message, or DCI scrambled by using an RNTI related to an SL-PRS.

For another example, the first terminal apparatus may obtain the first configuration information by using preconfigured or predefined information. It may also be understood that the first configuration information may be preconfigured in the first terminal apparatus; or it may be understood that the first configuration information may be predefined information and preconfigured in the first terminal apparatus. For another example, the first terminal apparatus obtains the first configuration information by using a higher layer module or an internal module of the first terminal apparatus. The first configuration information may be preconfigured in the first terminal apparatus, and the first terminal apparatus may obtain the first configuration information by using the higher layer module or the internal module.

The reference signal in embodiments of this application is a signal that can be used for sidelink positioning. There are multiple types of reference signals. For example, the reference signal may include at least one of a DMRS, a CSI-RS, or an SL-PRS. In the implementation related to FIG. 3, an example in which the reference signal is an SL-PRS is used for description. The type of the reference signal may further include one or more of a sounding reference signal (sounding reference signal, SRS), a phase-tracking reference signal (phase-tracking reference signal, PTRS), and a synchronization signal and physical sidelink broadcast channel block (synchronization signal and physical sidelink broadcast channel block, SSB).

In this embodiment of this application, the first terminal apparatus may further obtain second configuration information. The second configuration information may include information indicating the following content C1 and/or content C2. In this embodiment of this application, the content C1 and/or the content C2 may be configured by using one piece of configuration information, or may be separately configured by using a plurality of pieces of configuration information. In this embodiment of this application, an example in which the foregoing information is configured by using the second configuration information is used for description.

Content C1: Signal type that is allowed to be used as the reference signal.

Information indicating the signal type of the reference signal (or referred to as indication information of the signal type of the reference signal) may indicate a type of a signal that can be used for sidelink positioning, or the indication information of the signal type of the reference signal indicates a signal type that can be considered as the reference signal. In this way, the first terminal apparatus may use the signal type allowed by the first configuration information as the reference signal, and the first configuration information may configure the type of the reference signal with reference to an actual application scenario, so as to achieve a good balance between transmission performance of the reference signal and transmission performance of the data.

In another possible implementation, if the type of the reference signal further includes a CSI-RS, the second configuration information may further include information about the CSI-RS. The information about the CSI-RS includes at least one of a time domain period, a time domain location, a frequency domain density, or a quantity of ports of the CSI-RS. In another possible implementation, if the type of the reference signal further includes a PRS (for example, an SL-PRS), the second configuration information may further include information about the PRS (for example, the SL-PRS). The information about the PRS (for example, the SL-PRS) includes time domain information and/or frequency domain information of the PRS (for example, the SL-PRS). The second configuration information configures a large amount of information, so that the first terminal apparatus can more accurately determine the location of the resource of the reference signal, and then the first terminal apparatus can send the reference signal that meets a requirement more accurately.

Content C2: Signal type that is not allowed to be used as the reference signal.

Information indicating the signal type that is not allowed to be used as the reference signal (or referred to as indication information of the signal type that is not allowed to be used as the reference signal) may indicate a reference signal that cannot be used for sidelink positioning. In this way, the first terminal apparatus cannot use this type of signal to perform sidelink positioning. The first configuration information may be used to configure the type that is allowed to be used as the reference signal, or may be used to configure the type that is not allowed to be used as the reference signal. There are many configuration manners, so that flexibility of the solution can be improved.

Similarly, in this application, the second configuration information is obtained in a plurality of manners. For example, the first terminal apparatus receives the second configuration information from another apparatus, and the another apparatus may be, for example, a network apparatus (for example, an access network device or a location management apparatus) or another terminal apparatus. In this embodiment of this application, the second configuration information may be carried at a plurality of locations, for example, may be carried in a system message, an RRC message, or DCI scrambled by using an RNTI (radio network temporary identifier, Radio Network Temporary Identifier) related to an SL-PRS. The corresponding DCI is scrambled by using the RNTI related to the SL-PRS, so that the first terminal apparatus can know, after performing a CRC check, whether the currently detected DCI indicates information related to transmission of the SL-PRS. In this way, detection complexity of the first terminal apparatus is reduced. For another example, the first terminal apparatus may obtain the second configuration information by using preconfigured or predefined information. For another example, the first terminal apparatus obtains the second configuration information by using a higher layer module or an internal module of the first terminal apparatus.

In this embodiment of this application, the second configuration information and the first configuration information may be one piece of configuration information, or may be two pieces of configuration information.

Step 303: The second terminal apparatus obtains third configuration information.

The second terminal apparatus is a receive end. Therefore, for the second terminal apparatus, the third configuration information obtained by the second terminal may include related information for indicating the second terminal apparatus to measure the reference signal. For example, the third configuration information may include one or more of the content A1, the content A2, the content A3, the content A4, the content A5, the content A6, the content A7, and the content A8.

In this embodiment of this application, the second terminal apparatus may further indicate configuration information of at least one of content D1, content D2, or content D3. One or more of the foregoing content may be configured by using the third configuration information, or may be configured by using other configuration information, or may be configured by using the third configuration information and other configuration information together. In this embodiment of this application, an example in which information in the content D1, the content D2, or the content D3 is configured by using sixth configuration information is used for description. The three pieces of content may alternatively be separately configured by using a plurality of pieces of configuration information. The sixth configuration information and the third configuration information may be same configuration information, or may be different configuration information.

Content D1: Measurement window for measuring the reference signal.

After information about the measurement window is configured, the second terminal apparatus may measure the reference signal in the measurement window.

The information about the measurement window includes information indicating the following content:

a period value of the measurement window, and/or a time domain offset of the measurement window.

Content D2: Location of a resource for transmitting a positioning measurement report associated with the measurement window.

The first configuration information may indicate the location of the resource for the positioning measurement report. The location of the resource may include, for example, a time domain location and/or a frequency domain location. The second terminal apparatus may report the positioning measurement report at the location of the resource. The location of the resource for the positioning measurement report may include one or more specific time domain symbols, or may be a range of one time domain resource. The second terminal apparatus may feed back the positioning measurement report within the range.

Similarly, the location of the resource for the positioning measurement report may include one or more specific frequency domain subcarriers, or may be a range of one frequency domain subcarrier. The second terminal apparatus may feed back the positioning measurement report within the range.

After measuring the reference signal, the second terminal apparatus may report the positioning measurement report, where the positioning measurement report may include a measurement result obtained by measuring the reference signal by the second terminal apparatus. The positioning measurement report may be reported to the network apparatus and the location management apparatus, or may be reported to the first terminal apparatus.

There may be a plurality of measurement results in this embodiment of this application. For example, the measurement result includes measurement results required by the following positioning technologies: a time difference of arrival (time difference of arrival, TDOA), an angle of departure (angle of departure, AOD), an angle of arrival (angle of arrival, AOA), a round trip time (round trip time, RTT), and a carrier phase (carrier phase). Optionally, the measurement result in this embodiment of this application may alternatively be a measurement result required by a possible positioning technology in the future. This is not limited in this embodiment of this application.

Content D3: Identification information of a transmit end of the reference signal that needs to be measured by the second terminal apparatus.

Reference signals of a plurality of terminal apparatuses may be sent in a frequency division multiplexing or time division multiplexing manner.

A terminal apparatus sending a reference signal may indicate, by using SCI, a source identifier of the reference signal, that is, an identifier of the terminal apparatus sending the reference signal, and then the second terminal apparatus may identify the source identifier of the reference signal with reference to the SCI, that is, identify identification information of a transmit end of the reference signal. In one measurement window, the second terminal apparatus may receive reference signals from a plurality of terminal apparatuses in the measurement window, and the second apparatus measures the reference signals when identification information of the first terminal apparatus configured to send the reference signals matches (for example, is the same as) identification information of a transmit end of the reference signals to be measured by the second terminal apparatus, where the measurement result is used for sidelink positioning. In another possible implementation, when the second apparatus receives, in the measurement window, a reference signal that is not sent by a transmit end of a reference signal that needs to be measured, the second apparatus may not measure the reference signal, or a measurement result obtained through measurement is not used for sidelink positioning, and the reference signal may be used for another purpose.

In this application, the third configuration information is obtained in a plurality of manners. For example, the second terminal apparatus receives the third configuration information from another apparatus, and the another apparatus may be, for example, a network apparatus (for example, an access network device or a location management apparatus) or another terminal apparatus. For example, the network apparatus generates configuration information, where the configuration information is the third configuration information, and the network apparatus sends the configuration information to the second terminal apparatus. Correspondingly, the second terminal apparatus receives the configuration information, to obtain the third configuration information. In this embodiment of this application, the third configuration information may be carried at a plurality of locations, for example, may be carried in a system message, an RRC message, or DCI scrambled by using an RNTI related to an SL-PRS.

For another example, the second terminal apparatus may obtain the third configuration information by using preconfigured or predefined information. It may also be understood that the third configuration information may be preconfigured in the second terminal apparatus; or it may be understood that the third configuration information may be predefined information and preconfigured in the second terminal apparatus. For another example, the second terminal apparatus obtains the third configuration information by using a higher layer module or an internal module of the second terminal apparatus. The third configuration information may be preconfigured in the second terminal apparatus, and the second terminal apparatus may obtain the third configuration information by using the higher layer module or the internal module. In this embodiment of this application, the sixth configuration information is obtained in a plurality of manners, which are similar to the manners of obtaining the third configuration information. Details are not described.

The first configuration information obtained by the first terminal apparatus may include at least one of the content D1, the content D2, or the content D3. In this way, the first terminal apparatus may send measurement-related information to the receive end, so that the receive end performs measurement based on the information, and reports a positioning measurement report based on the information. The first configuration information obtained by the first terminal apparatus may not include at least one of the content D1, the content D2, or the content D3.

The third configuration information and the first configuration information may be one piece of configuration information, or may be two pieces of different configuration information.

The second terminal apparatus may also obtain type information of the reference signal. For example, the second terminal apparatus may also obtain the second configuration information, and the second configuration information may indicate the content C1 and/or the content C2. The second configuration information may be, for example, configured or preconfigured by another apparatus. An obtaining manner is similar to the manner in which the first terminal apparatus obtains the second configuration information, and details are not described. The third configuration information and the second configuration information may be one piece of configuration information, or may be two pieces of different configuration information.

Step 304: The second terminal apparatus receives the reference signal.

In step 304, the second terminal apparatus may receive the reference signal based on one or more of the second configuration information, the third configuration information, or the sixth configuration information. For example, the second terminal apparatus receives the reference signal at a corresponding location based on the location of the resource for the reference signal configured based on the second configuration information. In step 304, the second terminal apparatus may measure the reference signal, where an obtained measurement result may be used for sidelink positioning.

In this embodiment of this application, the reference signal sent by the first terminal apparatus may be sent in the PSSCH, the PSSCH further includes data, and the data may be received by the terminal apparatus, for example, the third terminal apparatus receives the data. After receiving the data (in the embodiment in FIG. 3, the third terminal apparatus may be a new terminal apparatus or a legacy terminal apparatus), the third terminal apparatus may decode the data carried in the PSSCH with reference to the information in the PSCCH and the PSSCH.

In this embodiment of this application, there may be one or more terminal apparatuses that receive data. For a data processing manner, refer to the processing manner of the third terminal apparatus. Details are not described. The terminal apparatus that receives the data may be the second terminal apparatus (the third terminal apparatus and the second terminal apparatus may be considered as a same terminal apparatus), or include the second terminal apparatus (the third terminal apparatus and the second terminal apparatus are two different apparatuses). For a manner of processing data by another terminal apparatus, refer to an example of the manner of processing the data by the third terminal apparatus. Details are not described.

Because the quantity of resources for transmitting the reference signal is associated with the quantity of resources for transmitting the data, the quantity of resources for the reference signal in this application may be proper, so that a probability of a data decoding error can be reduced, and impact of reference signal transmission on data transmission can be reduced.

For example, a PSSCH resource element (resource element, RE) on a time domain symbol occupied by data in a discrete PSSCH is punctured, so that impact on data transmission performance can be limited. When the punctured PSSCH resources are scattered in an entire slot, this implementation can further reduce impact on a single time domain symbol, so that impact on decoding performance of a single code block can be reduced.

Based on the content shown in FIG. 1, FIG. 2, FIG. 3, FIG. 4A, FIG. 4B, and FIG. 4C and the foregoing other content, FIG. 5 is an example of a schematic flowchart of another communication method according to an embodiment of this application. The solution provided in FIG. 5 is described from a perspective of interaction between a plurality of apparatuses. For descriptions of an execution body, refer to the related descriptions in FIG. 3. Details are not described.

In the implementation shown in FIG. 5, a reference signal used for sidelink positioning may be a signal that originally exists in a channel, and data and a signal that are sent by a first terminal apparatus (which may also be referred to as a transmit end) may not be modified. For example, some or all of signals (for example, DMRSs or CSI-RSs) sent by the first terminal apparatus may be considered as the reference signal. In the embodiment shown in FIG. 5, it may also be understood that a location of a resource for transmitting the reference signal includes a location of a resource for a signal (for example, one or more of a DMRS, a CSI-RS, or a beam management reference signal) used as the reference signal in a PSSCH; and/or information about a quantity of resources for transmitting the reference signal includes a quantity of resources for a signal (for example, one or more of a DMRS, a CSI-RS, or a beam management reference signal) used as the reference signal in a PSSCH. A second terminal apparatus (a new terminal apparatus) may measure a signal considered as the reference signal in received signals, and an obtained measurement result may be used for sidelink positioning. A third terminal apparatus (a new terminal apparatus or a legacy terminal apparatus) may decode received data. Because a transmit end does not change the sent data and signal, the third terminal apparatus may decode the data according to an original data decoding manner, and an obtained decoding result is not affected by the reference signal. The following provides descriptions with reference to the implementation in FIG. 5.

As shown in FIG. 5, the method includes the following step 501 to step 504.

Step 501: The first terminal apparatus sends a reference signal.

In step 501, in a possible implementation, the first terminal apparatus may send the reference signal and data. The data sent by the first terminal apparatus is carried in a PSSCH, and the first terminal apparatus may send a PSCCH and the PSSCH. The PSCCH and the PSSCH further include some signals, and some or all of these signals may be considered as reference signals. For example, a signal (for example, one or more of a DMRS, a CSI-RS, or a beam management reference signal) sent by the first terminal apparatus may be considered as a reference signal by the second terminal apparatus. For another example, a DMRS in the PSCCH and/or the PSSCH may be considered as a reference signal by the second terminal apparatus.

A resource for the reference signal is located in the PSSCH and/or the PSCCH for transmitting the data, and the resource for the reference signal is different from a resource for transmitting the data.

Step 502: The second terminal apparatus obtains fifth configuration information.

The fifth configuration information indicates a transmission parameter of a reference signal used for sidelink positioning, the transmission parameter indicates a type of the reference signal, and a transmission type of the reference signal includes a reference signal of a physical sidelink shared channel used to transmit the data.

The transmission parameter indicates the type of the reference signal, the transmission type of the reference signal includes the reference signal of the physical sidelink shared channel used to transmit the data. Therefore, the second terminal apparatus may perform sidelink positioning based on the reference signal of the physical sidelink shared channel. This solution has relatively small impact on data transmitted in the physical sidelink shared channel, so that a probability of a data decoding error can be reduced, and impact of reference signal transmission on data transmission can be reduced.

The reference signal of the physical sidelink shared channel used to transmit the data may include one or more of the following: a DM-RS in the PSSCH, a CSI-RS in the PSSCH, and a beam management reference signal in the PSSCH.

The second terminal apparatus may further obtain configuration information indicating at least one of content D1, content D2, or content D3. An example in which the second terminal apparatus obtains, by using sixth configuration information, the configuration information indicating at least one of the content D1, the content D2, or the content D3 is used for further description. During actual application, the second terminal apparatus may further obtain, by using a plurality of pieces of configuration information, configuration information indicating at least one of the content D1, the content D2, or the content D3.

In the implementation shown in FIG. 5, when the type of the reference signal includes a DMRS, the DMRS considered as the reference signal may be a DMRS carried in the PSSCH, or may be a DMRS carried in the PSCCH, or may be a DMRS carried in the PSSCH and the PSCCH.

The second terminal apparatus may also obtain second configuration information. In a possible implementation, when the reference signal includes a DMRS, the second configuration information may further indicate that some (or all) DMRSs in the PSSCH and/or the PSCCH may be considered as reference signals used for sidelink positioning. The second terminal apparatus may determine, based on the second configuration information, which signals are used as reference signals. For other related content, refer to the foregoing descriptions. Details are not described.

For related content in step 502, refer to the foregoing descriptions in step 303. Details are not described.

Step 503: The second terminal apparatus receives the reference signal.

In step 503, the second terminal apparatus may receive the reference signal based on one or more of the second configuration information, the third configuration information, or the sixth configuration information, and measure the reference signal, where an obtained measurement result may be used for sidelink positioning.

For example, the second terminal apparatus measures, based on the sixth configuration information, the reference signal in a measurement window configured by using the sixth configuration information.

For another example, the second terminal apparatus measures, based on the sixth configuration information, a reference signal (an identifier indicated by identification information of a transmit end of the reference signal is the same as an identifier indicated by identification information of the transmit end configured by using the sixth configuration information) that matches the identification information of the transmit end configured by using the sixth configuration information.

For another example, the second terminal apparatus sends a positioning measurement report at a location of a resource for the positioning measurement report configured by using the sixth configuration information, where the positioning measurement report includes a measurement result of measurement performed by the second terminal apparatus on the reference signal.

For related content in step 503, refer to the foregoing content in step 304. Details are not described.

In this embodiment of this application, the reference signal sent by the first terminal apparatus may be sent in the PSSCH, the PSSCH further includes data, and the data may be received by the terminal apparatus, for example, the third terminal apparatus receives the data. After receiving the data (in the embodiment in FIG. 3, the third terminal apparatus may be a new terminal apparatus or a legacy terminal apparatus), the third terminal apparatus may decode the data carried in the PSSCH with reference to the information in the PSCCH and the PSSCH.

In this embodiment of this application, there may be one or more terminal apparatuses that receive data. For a data processing manner, refer to the processing manner of the third terminal apparatus. Details are not described. The terminal apparatus that receives the data may be the second terminal apparatus (the third terminal apparatus and the second terminal apparatus may be considered as a same terminal apparatus), or include the second terminal apparatus (the third terminal apparatus and the second terminal apparatus are two different apparatuses). For a manner of processing data by another terminal apparatus, refer to an example of the manner of processing the data by the third terminal apparatus. Details are not described.

In this implementation, a signal originally carried in the PSCCH and/or the PSSCH is used as the reference signal, and the second terminal apparatus may measure the reference signal. A measurement result may be used for sidelink positioning. In addition, because the first terminal apparatus does not modify the information carried in the PSCCH and/or the PSSCH, the third terminal apparatus side is not affected, and may still decode the received information in an original decoding manner. It may also be understood that the solution is completely transparent to a terminal apparatus (for example, a legacy terminal apparatus and/or a new terminal apparatus) that needs to decode data, and does not cause any negative impact, and no performance loss occurs during data transmission.

Based on the content shown in FIG. 1, FIG. 2, FIG. 3, FIG. 4A, FIG. 4B, FIG. 4C, and FIG. 5 and the foregoing other content, FIG. 6 is an example of a schematic flowchart of another communication method according to an embodiment of this application. The solution provided in FIG. 6 is described from a perspective of interaction between a plurality of apparatuses. For descriptions of an execution body, refer to the related descriptions in FIG. 3. Details are not described.

In the implementation shown in FIG. 6, a first terminal apparatus may process a sent signal (for example, a signal carried in a PSSCH and/or a PSCCH (for example, one or more of a DMRS, a CSI-RS, or a beam management reference signal), for example, perform puncturing on a time domain symbol occupied by the sent signal in the PSSCH, or perform power increase on a signal considered as a reference signal. The first terminal apparatus sends the processed signal and data. A second terminal apparatus (a new terminal apparatus) may measure a signal considered as the reference signal in received signals, and an obtained measurement result may be used for sidelink positioning. A third terminal apparatus (a new terminal apparatus or a legacy terminal apparatus) may decode the received data. Because a transmit end performs puncturing on the sent signal, this solution may affect a decoding result of the third terminal apparatus. However, in this embodiment of this application, a punctured resource location is associated with some information (for example, may be associated with a quantity of resources for transmitting the data). Therefore, in this embodiment of this application, impact of the puncturing on the decoding result of the third terminal apparatus can be reduced, and a probability of a decoding error of the third terminal apparatus can be reduced. The following provides descriptions with reference to the implementation in FIG. 6.

As shown in FIG. 6, the method includes the following step 601 to step 605.

Step 601: The first terminal apparatus obtains seventh configuration information.

Step 602: The first terminal apparatus sends a reference signal based on the seventh configuration information.

In step 602, the first terminal apparatus may further send the reference signal and data. The data sent by the first terminal apparatus is carried in a PSSCH. The first terminal apparatus may send a PSCCH and the PSSCH. The PSCCH and the PSSCH further include some signals, and some or all of these signals may be considered as reference signals. For example, a signal (for example, one or more of a DMRS, a CSI-RS, or a beam management reference signal) sent by the first terminal apparatus may be considered as a reference signal by the second terminal apparatus. For another example, a DMRS in the PSCCH and/or the PSSCH may be considered as a reference signal by the second terminal apparatus.

The first terminal apparatus processes the to-be-sent signal based on the seventh configuration information. For example, the first terminal apparatus performs, based on the seventh configuration information, puncturing processing on a resource location that needs to be punctured in the PSCCH and/or the PSSCH, and the first terminal apparatus may no longer send any information at the punctured resource location.

For another example, the first terminal apparatus performs, based on the seventh configuration information, power increase processing on a signal that is in the PSCCH and/or the PSSCH and that needs to be considered as a reference signal.

In this embodiment of this application, the seventh configuration information may indicate at least one of the following: content E1, content E2, content A3, content A4, content A5, content A6, content A7, or content A8. For the content A3, the content A4, and the content A5, refer to the foregoing descriptions, and details are not described. In this embodiment of this application, the content E1, the content E2, the content A3, the content A4, the content A5, the content A6, the content A7, or the content A8 may be configured by using one piece of configuration information, or may be separately configured by using a plurality of pieces of configuration information. In this embodiment of this application, an example in which the foregoing information may be configured by using the seventh configuration information is used for description.

Content E1: Quantity of resources that need to be punctured.

In this embodiment of this application, a resource in the PSSCH and/or the PSCCH may be punctured.

Information indicating the quantity of resources that need to be punctured may be information about a quantity of resources, for example, information about a quantity of time domain symbols and/or frequency domain subcarriers of the resources that need to be punctured.

In this embodiment of this application, the quantity of resources that need to be punctured is associated with a quantity of resources for transmitting a signal (for example, one or more of a DMRS, a CSI-RS, or a beam management reference signal). It may also be understood that the quantity of resources that need to be punctured may be configured based on information about a quantity of resources for determining a transmission signal (for example, one or more of a DMRS, a CSI-RS, or a beam management reference signal). It may also be understood that a value or a value range of the quantity of resources that need to be punctured is associated with a quantity of resources for transmitting a signal (for example, one or more of a DMRS, a CSI-RS, or a beam management reference signal) in a slot.

The quantity of resources that need to be punctured may be determined based on at least one of a parameter B1, a parameter B2, a parameter B3, or a parameter B4.

For descriptions of the parameter B 1, the parameter B2, the parameter B3, and the parameter B4, refer to the foregoing content. The following describes a relationship between each parameter and a quantity of resources that need to be punctured by using an example.

For example, when a DMRS pattern indicates that a DMRS occupies a larger quantity of resource locations in a slot, a quantity of resources that can be punctured in the slot may be appropriately increased, so as to increase power of a signal (for example, one or more of a DMRS, a CSI-RS, or a beam management reference signal) that is considered as a reference signal. When a DMRS pattern indicates that a DMRS occupies a smaller quantity of resource locations in a slot, a quantity of resources that can be punctured in the slot may be appropriately reduced, so as to reserve sufficient signals (for example, one or more of a DMRS, a CSI-RS, or a beam management reference signal) as reference signals.

For another example, when a CSI-RS pattern indicates that a CSI-RS occupies a larger quantity of resource locations in a slot, a quantity of resources that can be punctured in the slot may be appropriately increased, so as to increase power of a signal (for example, one or more of a DMRS, a CSI-RS, or a beam management reference signal) that is considered as a reference signal. When a CSI-RS pattern indicates that a CSI-RS occupies a smaller quantity of resource locations in a slot, a quantity of resources that can be punctured in the slot may be appropriately reduced, so as to reserve sufficient signals (for example, one or more of a DMRS, a CSI-RS, or a beam management reference signal) as reference signals.

For another example, the resource location of the feedback information may affect the quantity of resources for transmitting the data. When the resource location of the feedback information exists in one slot, that is, the feedback information exists in the slot, a quantity of resources that can be punctured in the slot may be reduced. When the resource location of the feedback information does not exist in one slot, that is, the feedback information does not exist in the slot, a quantity of resources that can be punctured in the slot may be increased.

For another example, the period of the feedback channel may affect the quantity of resources that can be punctured. When the feedback channel exists in one slot, a quantity of resources that can be punctured in the slot may be reduced. When the feedback channel does not exist in one slot, a quantity of resources that can be punctured in the slot may be increased.

Content E2: Location of a resource that needs to be punctured.

The location of the resource that needs to be punctured may include related information about a time domain resource and/or a frequency domain resource for the reference signal.

The resource that needs to be punctured is located in a time domain symbol occupied by a signal (for example, one or more of a DMRS, a CSI-RS, or a beam management reference signal) in the PSSCH and/or the PSCCH. The resource that needs to be punctured may occupy a plurality of consecutive time domain symbols, or may occupy a plurality of inconsecutive symbols. The location of the resource that needs to be punctured may also include a time domain gap. An interval between two adjacent resources that need to be punctured in a slot is not greater than the time domain gap.

In a possible implementation, the seventh configuration information may indicate time domain symbols that are in time domain symbols occupied by the DMRS in the slot and on which puncturing processing can be performed. For example, the seventh configuration information is indicated by using a bitmap (bitmap), and the bitmap indicates a resource location on a specific time domain symbol in a PSSCH that needs to be punctured. Each bit may correspond to a location of a time domain symbol of one DMRS. For example, when a time domain symbol of one DMRS needs to be punctured, a bit corresponding to the time domain symbol of the DMRS in the bitmap may be set to 1. When a time domain symbol of one DMRS does not need to be punctured, a bit corresponding to the time domain symbol of the DMRS in the bitmap may be set to 0.

For one of the one or more time domain symbols occupied by the resource that needs to be punctured, the resource that needs to be punctured may occupy some or all frequency domain resources in the time domain symbol. The location of the resource that needs to be punctured may also include at least one of a subcarrier spacing occupied by the resource that needs to be punctured in frequency domain, a frequency domain offset, or a bandwidth.

The resource that needs to be punctured includes at least one of the following: a location of a subcarrier on a DMRS time domain symbol (in the PSSCH and/or PSCCH); or a location of a subcarrier on a CSI-RS time domain symbol in the PSSCH.

FIG. 7 shows an example of a resource location that is punctured in a PSSCH according to an embodiment of this application. As shown in FIG. 7, the PSSCH includes a time domain symbol occupied by a DMRS, and a time domain symbol occupied by data in the PSSCH. The PSSCH further includes a GAP and a time domain symbol occupied by a PSFCH.

FIG. 7 shows an example of puncturing a time domain symbol occupied by a DMRS. As shown in FIG. 7, time domain symbols occupied by a DMRS in a PSSCH include a time domain symbol 1, a time domain symbol 5, and a time domain symbol 9. In this embodiment of this application, time domain symbols occupied by some or all DMRSs in the PSSCH may be punctured. FIG. 7 is shown by using an example in which the time domain symbol 5 is punctured. The time domain symbol occupied by the DMRS in the PSSCH may carry the DMRS and data. In this embodiment of this application, a subcarrier that is used to carry data and that is in subcarriers on the time domain symbol occupied by the DMRS may be punctured. For example, in FIG. 7, a subcarrier 1, a subcarrier 3, a subcarrier 5, a subcarrier 7, a subcarrier 9, and a subcarrier 11 on the time domain symbol 5 are punctured, the subcarrier 1, the subcarrier 3, the subcarrier 5, the subcarrier 7, the subcarrier 9, and the subcarrier 11 are subcarriers that are on the time domain symbol 5 and that are used to carry data and/or a DMRS, and remaining subcarriers on the time domain symbol 5 may carry data or a DMRS. The first terminal apparatus may increase power of subcarriers (the subcarrier 0, the subcarrier 2, the subcarrier 4, the subcarrier 6, the subcarrier 8, and the subcarrier 10) that are not punctured on the time domain symbol 5. The second terminal apparatus may measure DMRSs on the subcarriers that are not punctured on the time domain symbol 5, and obtained measurement results are used for sidelink positioning.

In this application, the seventh configuration information is obtained in a plurality of manners. For example, the first terminal apparatus receives the seventh configuration information from another apparatus, and the another apparatus may be, for example, a network apparatus (for example, an access network device or a location management apparatus) or another terminal apparatus. In this embodiment of this application, the seventh configuration information may be carried at a plurality of locations, for example, may be carried in a system message, an RRC message, or DCI scrambled by using an RNTI related to an SL-PRS. Alternatively, the first terminal apparatus may obtain the seventh configuration information by using preconfigured or predefined information. For related content, refer to the manner of obtaining the first configuration information. Details are not described.

In this embodiment, the reference signal may include a demodulation reference signal (demodulation reference signal, DMRS) or a channel state information reference signal (channel state information reference signal, CSI-RS). In this embodiment of this application, the first terminal apparatus may further obtain second configuration information. The second configuration information may include information indicating the content C1 and/or the content C2. The seventh configuration information and the second configuration information may be one piece of configuration information, or may be two pieces of configuration information. For related content, refer to the foregoing descriptions. Details are not described.

Step 603: The second terminal apparatus obtains fifth configuration information.

The fifth configuration information indicates a transmission parameter of a reference signal used for sidelink positioning, the transmission parameter indicates a type of the reference signal, and a transmission type of the reference signal includes a reference signal of a physical sidelink shared channel used to transmit the data.

The transmission parameter indicates the type of the reference signal, the transmission type of the reference signal includes the reference signal of the physical sidelink shared channel used to transmit the data. Therefore, the second terminal apparatus may perform sidelink positioning based on the reference signal of the physical sidelink shared channel. This solution has relatively small impact on data transmitted in the physical sidelink shared channel, so that a probability of a data decoding error can be reduced, and impact of reference signal transmission on data transmission can be reduced.

The reference signal of the physical sidelink shared channel used to transmit the data may include one or more of the following: a DM-RS in the PSSCH, a CSI-RS in the PSSCH, and a beam management reference signal in the PSSCH.

The second terminal apparatus may further obtain the configuration information indicating at least one of the content E1, the content E2, the content A3, the content A4, the content A7, or the content A8. An example in which the second terminal apparatus obtains, by using third configuration information, the configuration information indicating at least one of the content E1, the content E2, the content A3, the content A4, the content A7, or the content A8 is used for further description. During actual application, the second terminal apparatus may further obtain, by using a plurality of pieces of configuration information, configuration information indicating at least one of the content E1, the content E2, the content A3, the content A4, the content A7, or the content A8.

The second terminal apparatus may further obtain configuration information indicating at least one of the content D1, the content D2, or the content D3. An example in which the second terminal apparatus obtains, by using sixth configuration information, the configuration information indicating at least one of the content D1, the content D2, or the content D3 is used for further description. During actual application, the second terminal apparatus may further obtain, by using a plurality of pieces of configuration information, configuration information indicating at least one of the content D1, the content D2, or the content D3.

For related content in step 603, refer to the foregoing content in step 502. Details are not described.

Step 604: The second terminal apparatus receives the reference signal.

The second terminal apparatus measures the received reference signal based on the third configuration information and/or the sixth configuration information. A difference from step 503 lies in that the first terminal apparatus no longer sends a signal at resource locations that need to be punctured. Therefore, the second terminal apparatus cannot receive a reference signal at these resource locations. The first terminal apparatus may increase power of some signals, and the second terminal apparatus performs sidelink positioning based on the signals whose power is increased, so that positioning performance can be improved. For related content in step 604, refer to the foregoing content in step 503. Details are not described.

In this embodiment of this application, the reference signal sent by the first terminal apparatus may be sent in the PSSCH, the PSSCH further includes data, and the data may be received by the terminal apparatus, for example, the third terminal apparatus receives the data. After receiving the data (in the embodiment in FIG. 3, the third terminal apparatus may be a new terminal apparatus or a legacy terminal apparatus), the third terminal apparatus may decode the data carried in the PSSCH with reference to the information in the PSCCH and the PSSCH.

In this embodiment of this application, there may be one or more terminal apparatuses that receive data. For a data processing manner, refer to the processing manner of the third terminal apparatus. Details are not described. The terminal apparatus that receives the data may be the second terminal apparatus (the third terminal apparatus and the second terminal apparatus may be considered as a same terminal apparatus), or include the second terminal apparatus (the third terminal apparatus and the second terminal apparatus are two different apparatuses). For a manner of processing data by another terminal apparatus, refer to an example of the manner of processing the data by the third terminal apparatus. Details are not described.

A receive end (for example, a third terminal apparatus, where the third terminal apparatus may be a new terminal apparatus or a legacy terminal apparatus) may decode the received data. Because a transmit end performs puncturing on the sent signal, this solution may affect a decoding result of the third terminal apparatus. However, in this embodiment of this application, a punctured resource location is associated with some information (for example, may be associated with a quantity of resources for transmitting the data). Therefore, in this embodiment of this application, impact of the puncturing on the decoding result of the third terminal apparatus can be reduced, and a probability of a decoding error of the third terminal apparatus can be reduced.

Based on the content shown in FIG. 1, FIG. 2, FIG. 3, FIG. 4A, FIG. 4B, FIG. 4C, FIG. 5, FIG. 6, and FIG. 7 and the foregoing other content, an embodiment of this application further provides a possible implementation. In this implementation, a plurality of reference signal sending manners may be configured for a first terminal apparatus by using configuration information. For example, first configuration information includes indication information of M reference signal sending manners corresponding to a transmission parameter of a reference signal, and M is an integer greater than 1.

In a possible implementation, the first terminal apparatus may send sidelink control information, and the sidelink control information may be first-stage SCI, or may be first-stage SCI and second-stage SCI, or may be second-stage SCI. The sidelink control information includes first indication information, and the first indication information indicates that one of the M reference signal sending manners is used as a sending manner of the reference signal. Correspondingly, a second terminal apparatus receives the sidelink control information, and determines, based on the obtained first indication information, the sending manner of the reference signal sent by the first terminal apparatus. The first indication information may be used for indication by using a bit in reserved bits in the first-stage SCI, so that impact on other information in the first-stage SCI can be reduced.

For example, the M reference signal sending manners may include, for example, the plurality of transmission manners shown in FIG. 3 (the first terminal apparatus punctures a resource location in a PSSCH and maps a reference signal), the transmission manner shown in FIG. 5 (the first terminal apparatus does not change a sent signal and data), and the transmission manner shown in FIG. 6 (the first terminal apparatus only punctures a resource location in a sent PSSCH and/or PSCCH).

For another example, the M reference signal sending manners may include, for example, a plurality of transmission manners related to FIG. 3. The plurality of transmission manners include: The first terminal apparatus performs puncturing on a subcarrier on a time domain symbol in a DMRS (or a CSI-RS, a beam management reference signal, or the like) and maps a reference signal, the first terminal apparatus performs puncturing on a time domain symbol occupied by data and maps a reference signal, and the first terminal apparatus performs puncturing on time domain symbols occupied by data and a DMRS (or a CSI-RS, a beam management reference signal, or the like) and maps a reference signal.

For another example, the M reference signal sending manners may include, for example, a plurality of puncturing manners related to FIG. 3. A pattern of a resource location (a resource location that needs to be punctured and to which a reference signal needs to be mapped) for transmitting a reference signal may correspond to a sending manner of a reference signal. In other words, a sending manner of one reference signal uses one pattern of a resource location (a resource location that needs to be punctured and to which a reference signal needs to be mapped) for transmitting a reference signal, and sending manners of two reference signals may use two different patterns of a resource location (a resource location that needs to be punctured and to which a reference signal needs to be mapped) for transmitting a reference signal. In a possible implementation, a reference signal sending manner in the M reference signal sending manners is associated with a DMRS pattern. The first indication information is indication information of a first DMRS pattern, and a reference signal sending manner associated with the first DMRS pattern is the reference signal sending manner. In this way, a second terminal apparatus may determine, based on the received first DMRS pattern and a preset association relationship between the first DMRS pattern and a reference signal sending manner, the reference signal sending manner sent by the first terminal apparatus.

Based on the content shown in FIG. 1, FIG. 2, FIG. 3, FIG. 4A, FIG. 4B, FIG. 4C, FIG. 5, FIG. 6, and FIG. 7 and the foregoing other content, FIG. 8 is an example of a schematic flowchart of another communication method according to an embodiment of this application. The solution provided in FIG. 8 is described from a perspective of interaction between a plurality of apparatuses. For descriptions of an execution body, refer to the related descriptions in FIG. 8. Details are not described.

When a first terminal apparatus sends a reference signal by using a resource in a shared resource pool, a receive end may incorrectly decode data. How to improve a success rate of decoding the data by the receive end is a problem that needs to be urgently resolved.

In the implementation shown in FIG. 8, the first terminal apparatus sends the data and the reference signal, and the reference signal is used for sidelink positioning. The first terminal apparatus may select a plurality of manners to transmit the data, for example, may select a puncturing manner or a rate matching manner to transmit the data. When the first terminal apparatus selects the puncturing manner to transmit the data, the first terminal apparatus may transmit the data by using the method shown in FIG. 3, and map the reference signal at a punctured resource location in a PSSCH. When the first terminal apparatus selects the rate matching manner to transmit the data, the first terminal apparatus may perform rate matching on the data, and use a resource originally used to carry the data to carry the reference signal. Because the first terminal apparatus may select a plurality of transmission manners, in the implementation shown in FIG. 8, the first terminal apparatus may send the data based on fourth configuration information, where the fourth configuration information indicates a transmission manner of the data of the first terminal apparatus. Therefore, when the second terminal apparatus receives the data in the transmission manner indicated by the fourth configuration information, a data decoding success rate can be improved. In addition, when the second terminal apparatus receives the reference signal based on the fourth configuration information, a success rate of reference signal receiving can also be improved. The following provides descriptions with reference to the implementation in FIG. 8.

As shown in FIG. 8, the method includes the following step 801 to step 806.

Step 801: The first terminal apparatus obtains fourth configuration information.

The fourth configuration information indicates a transmission manner of data, and the transmission manner is rate matching or puncturing.

The data and a reference signal used for sidelink positioning are located in a same slot. A resource for the reference signal is located in the PSSCH used to transmit the data, and the resource for the reference signal is different from a resource used to transmit the data.

In this application, an optional code block size may also be referred to as a transport block size (TBS: Transport Block size)).

When the transmission manner is rate matching, a code block size of the data is less than a first code block size. When the transmission manner is puncturing, the code block size of the data is the first code block size. The first code block size is a code block size corresponding to the PSSCH.

In this embodiment of this application, the code block size corresponding to the PSSCH may be a size of a code block obtained by performing encoding when rate matching is not performed on the PSSCH. The code block size corresponding to the PSSCH may also be understood as a size of a code block before the reference signal is transmitted on the PSSCH, or may be understood as a size of a code block when the reference signal is not transmitted on the PSSCH.

For example, if a total resource is $S_1$, and $S_1$ is a positive integer, channel encoding is directly performed on the to-be-transmitted data based on the resource of $S_1$. If a code block size of an obtained code block is the first code block size, the code block size may also be referred to as the code block size corresponding to the PSSCH. The first terminal apparatus maps the data and sends the data to the resource of $S_1$ for sending. If the transmission manner is rate matching, an unavailable resource is $S_2$, and $S_2$ is a positive integer, an available resource is ($S_1$-$S_2$), and channel encoding is performed on the to-be-transmitted data based on the resource ($S_1$-$S_2$). A code length size of an obtained code block is less than the first code block size, and the first terminal apparatus maps the data and sends the data to the resource of ($S_1$-$S_2$) for sending.

In this embodiment of this application, the fourth configuration information may indicate at least one of the following: content F1, content F2, content F3, content F4, or content F5. In this embodiment of this application, the content F1, the content F2, the content F3, the content F4, or the content F5 may be configured by using one piece of configuration information, or may be separately configured by using a plurality of pieces of configuration information. In this embodiment of this application, an example in which the foregoing information may be configured by using the fourth configuration information is used for description.

Content F1: Transmission manner of the data.

Information used to indicate the transmission manner of the data may include at least one of the following: information F1.1 and/or information F1.2.

Information F1.1: Indication information indicating that the resource pool is used for backward compatibility.

The resource pool in embodiments of this application is a resource pool used to transmit the reference signal.

The indication information indicating that the resource pool is not used for backward compatibility may indicate, for example, that the resource pool supports R18 sidelink positioning, and supports R16 and/or R17 sidelink communication.

The resource pool needs to be backward compatible (in this case, the resource pool may be referred to as a shared resource pool), data transmitted by the first terminal apparatus in a puncturing manner can be successfully decoded by a legacy terminal apparatus. However, only a new terminal apparatus can successfully decode data transmitted by the first terminal apparatus in a rate matching manner, and the legacy terminal apparatus cannot successfully decode the data (the rate matching changes a size of a code block, and the new terminal apparatus can identify a new code block size, but the legacy terminal apparatus cannot identify the new code block size). Therefore, when the information indicating the transmission manner of the data includes the indication information indicating that the resource pool is used for backward compatibility, it may be understood that the indication information indicating that the resource pool is used for backward compatibility indicates that a transmission manner corresponding to a resource in the resource pool is puncturing. In this way, when the first terminal transmits the reference signal by using the resource in the resource pool, the first terminal needs to transmit the reference signal in a puncturing manner (for example, the manner provided in FIG. 3 or FIG. 6 may be used).

Information F1.2: Indication information indicating that the resource pool is not used for backward compatibility.

The resource pool in embodiments of this application is a resource pool used to transmit the reference signal.

The indication information indicating that the resource pool is not used for backward compatibility may indicate, for example, that the resource pool supports R18 sidelink positioning, but does not support R16 and/or R17 sidelink communication.

The resource pool does not need to be backward compatible (in this case, the resource pool cannot be referred to as a shared resource pool), that is, a receive end of the data transmitted by the first terminal apparatus by using the resource pool is a new terminal apparatus, and the new terminal apparatus can successfully decode the data transmitted in a rate matching manner. Therefore, when the information indicating the transmission manner of the data includes the indication information indicating that the resource pool is not used for backward compatibility, it may be understood that the indication information indicating that the resource pool is not used for backward compatibility indicates that a transmission manner corresponding to a resource in the resource pool is rate matching. In this way, when the first terminal transmits the reference signal by using the resource in the resource pool, the first terminal needs to transmit the data in a rate matching manner, so that saved bits are used to transmit the reference signal. In addition, a problem of a decoding layer caused by puncturing can be avoided in a rate matching manner. Therefore, when the resource pool does not need to be backward compatible, the first terminal apparatus may select the rate matching manner to transmit the data.

In another possible implementation, the resource pool does not need to be backward compatible (in this case, the resource pool cannot be referred to as a shared resource pool), that is, a receive end of the data transmitted by the first terminal apparatus by using the resource pool is a new terminal apparatus, and the new terminal apparatus can successfully decode the data transmitted in a rate matching manner, and can also successfully decode the data transmitted in a puncturing manner. Therefore, when the information indicating the transmission manner of the data includes the indication information indicating that the resource pool is not used for backward compatibility, it may be understood that the indication information indicating that the resource pool is not used for backward compatibility indicates that a transmission manner corresponding to a resource in the resource pool includes puncturing and rate matching. In this way, when the first terminal transmits the reference signal by using the resource in the resource pool, the first terminal may select a manner from the puncturing manner and the rate matching manner. In this way, flexibility of the solution can be improved.

Content F2: The reference signal and the PSSCH are not multiplexed in a slot, or the reference signal and the PSSCH are multiplexed in a slot.

For the content F2, refer to the foregoing descriptions of the content A5 and the content A6. Details are not described.

Content F3: Scaling factor used to perform rate adaptation on the data.

When the fourth configuration information indicates the content F3, the fourth configuration information may indicate that the scaling factor is used by the first terminal apparatus to determine the size of the transport block of the data.

The scaling factor is used to determine a parameter $N_{RE}$, and $N_{RE}$ is used to determine the size of the transport block of the data, where the parameter $N_{RE}$ meets the following condition:

$$N_{RE} = \max(floor(N'_{RE} \cdot \alpha_{TBS}), 1) \cdot n_{PRB} - N_{RE}^{SCI,1} - N_{RE}^{SCI,2};$$

or

$$N_{RE} = \max(floor(N'_{RE} \cdot \alpha_{TBS}), 1) \cdot n_{PRB} - N_{RE}^{SCI,1}.$$

$N_{RE}$ indicates a total quantity of REs allocated to the PSSCH, max() indicates a maximum value among a plurality of numbers, floor() indicates rounding down to the nearest integer, $n_{PRB}$ indicates a total quantity of PRBs allocated to the PSSCH, $N_{RE}^{SCI,1}$ indicates a quantity of REs occupied by first-stage SCI, and $N_{RE}^{SCI,2}$ indicates a quantity of REs occupied by second-stage SCI.

By limiting the scaling factor, impact of reference signal transmission on data receiving performance may be further limited. For example, a larger scaling factor indicates a larger quantity of resources that can be used to transmit the data, and a smaller scaling factor indicates a smaller quantity of resources that can be used to transmit the data. In a possible implementation, a value of the scaling factor is a positive number not greater than 1.

In this embodiment of this application, the scaling factor may be associated with at least one of the parameter B1, the parameter B2, the parameter B3, the parameter B4, a parameter G1, or a parameter G2.

Parameter G1: Priority of the data.

The priority of the data may affect the scaling factor.

Parameter G2: CBR value of a resource pool in which a resource used to send the data and the reference signal is located.

The parameter G2 may include a CBR range. The CBR may affect the scaling factor.

For the parameter B1, the parameter B2, the parameter B3, and the parameter B4, refer to the foregoing descriptions.

A DMRS pattern may affect the scaling factor. A larger quantity of REs occupied by a DMRS indicated by the DMRS pattern indicates fewer available resources and a smaller scaling factor, and vice versa.

A CSI-RS pattern may affect the scaling factor. A larger quantity of REs occupied by a DMRS indicated by the CSI-RS pattern indicates fewer available resources and a smaller scaling factor, and vice versa.

A location of a resource for feedback information may affect the scaling factor. A larger quantity of REs occupied by the resource for the feedback information indicates fewer available resources and a smaller scaling factor, and vice versa.

A period of a feedback channel may affect the scaling factor. A larger quantity of REs occupied by the period of the feedback channel indicates fewer available resources and a smaller scaling factor, and vice versa.

It may also be understood that a value or a value range of the scaling factor is determined based on at least one of the parameter B1, the parameter B2, the parameter B3, the parameter B4, the parameter G1, or the parameter G2.

The first terminal apparatus may determine a scaling factor based on at least one of the parameter B1, the parameter B2, the parameter B3, the parameter B4, the parameter G1, or the parameter G2, and then encode the data. Correspondingly, the second terminal apparatus may determine a scaling factor by using a similar method, for example, based on at least one of the parameter B1, the parameter B2, the parameter B3, the parameter B4, the parameter G1, or the parameter G2, and then decode the data. The scaling factors determined by the first terminal apparatus and the second terminal apparatus are the same, so that a decoding success rate of the second terminal apparatus can be improved.

In this embodiment of this application, the first terminal apparatus may obtain a plurality of scaling factors (calculated by the first terminal apparatus according to a preset rule, preconfigured, or obtained from another apparatus), and the first terminal apparatus may select one scaling factor for use. Further, the first terminal apparatus may indicate (for example, by using sidelink control information), to the second terminal apparatus, the scaling factor used for the data transmitted by the first terminal apparatus, for example, the first terminal apparatus indicates the used scaling factor by using a reserved bit in the sidelink control information (for example, first-stage SCI) or a bit in another field. In this solution, the first terminal apparatus may select a better scaling factor, so as to obtain better decoding performance when overheads of the reference signal are considered.

Content F4: Sending parameter of the PSSCH that carries the data.

The sending parameter of the PSSCH includes at least one of the following: a parameter H1, a parameter H2, a parameter H3, a parameter H4, a parameter H5, or a parameter H6.

Parameter H1: Minimum MCS value for sending the data.

Parameter H2: Maximum MCS value for sending the data.

Parameter H3: MCS table for sending the data.

The MCS table may be one or more MCS tables used for transmission. When the transmission parameter of the PSSCH includes a plurality of MCS tables, two MCS tables in the plurality of MSC tables correspond to different robustness. In this way, when a higher data decoding success rate is expected, an MCS table with a higher robustness value and a table with a lower MCS value may be selected, so as to improve a decoding success rate of the receive end.

Parameter H4: Maximum power for sending the data.

Parameter H5: Maximum quantity of transmissions for sending the data.

Parameter H6: Maximum quantity of sub-channels for sending the data.

In this embodiment of this application, the sending parameter of the PSSCH may be associated with at least one of the following: the parameter B1, the parameter B2, the parameter B3, the parameter B4, the parameter G1, the parameter G2, a parameter I1, or a parameter I2.

Parameter I1: Priority of the reference signal.

The priority of the reference signal may be indicated (by another device) or preset. The priority of the reference signal is lower than the priority of the data; or the priority of the reference signal is higher than the priority of the data. Alternatively, the priority of the reference signal is the same as the priority of the data.

The priority of the reference signal may be considered as a condition for determining whether the reference signal and the data are sent together. For example, when the priority of the reference signal is higher than or equal to a preset priority, the reference signal and the data may be allowed to be sent together (occupy a same slot). If the priority of the reference signal is lower and less important, the reference signal may not be sent together with the data, so as to reduce impact on the data as much as possible. The preset priority in this embodiment of this application may be the priority of the data or a configured priority threshold.

In another possible implementation, if the priority of the reference signal is lower than or equal to a preset priority, the reference signal and the data are sent together, thereby saving resources. If the priority of the reference signal is higher and more important, the reference signal is separately sent, and is not sent together with the data, so that positioning performance can be improved.

Parameter I2: Channel bandwidth of the reference signal. For the channel bandwidth of the reference signal, a larger quantity of occupied REs in a transmission resource of the PSSCH indicates fewer resources for transmitting the PSSCH, so that fewer resources can be allowed to send a positioning reference signal, and vice versa.

It may also be understood that a value or a value range of the sending parameter of the PSSCH is determined based on at least one of the parameter B1, the parameter B2, the parameter B3, the parameter B4, the parameter G1, the parameter G2, the parameter I1, or the parameter I2. In this way, the sending parameter of the PSSCH may be adjusted downwards, to reserve more margins to provide performance assurance for additional transmission of the reference signal in the PSSCH, so as to reduce impact on performance of the receive end.

The first terminal apparatus may determine a sending parameter of the PSSCH based on at least one of the parameter B1, the parameter B2, the parameter B3, the parameter B4, the parameter G1, the parameter G2, the parameter I1, or the parameter I2, and then send the data based on the sending parameter. Correspondingly, the second terminal apparatus may determine a sending parameter of the PSSCH by using a similar method, for example, based on at least one of the parameter B1, the parameter B2, the parameter B3, the parameter B4, the parameter G1, the parameter G2, the parameter I1, or the parameter 12, and then receive the data. The sending parameters of the PSSCH determined by the first terminal apparatus and the second terminal apparatus are the same, so that a decoding success rate of the second terminal apparatus can be improved.

In this solution, the first terminal apparatus may select a better sending parameter of the PSSCH, so as to obtain better decoding performance when overheads of the reference signal are considered.

Content F5: Indication information of an MCS.

The indication information of the MCS may indicate a value of the MSC of the data. For example, the indication information of the MCS may indicate the following content F5.1 and/or content F5.2.

Content F5.1: MCS offset of the data.

An MCS value of the data is determined based on the MCS offset.

The MCS value of the data meets the following condition:

$$MCS = \max(MCS_{link} - MCS_{offset}, MCS_0)$$

$MCS_{offset}$ represents the MCS offset, and is a positive integer; $MCS_0$ represents a lowest available MCS value in an MCS table; and $MCS_{link}$ represents a currently available MCS value determined by the first terminal apparatus, and may be a value used when the first terminal apparatus performs link adaptation.

By using the MCS offset of the data, transmit and receive performance can be aligned between different terminal apparatus manufacturers, so that a receive end (for example, the second terminal apparatus) can also successfully decode the data when a resource is occupied in the PSSCH to transmit the reference signal.

Content F5.2: MCS value setting manner.

The MCS value setting manner may indicate whether an MCS value is a normal value or a conservative value. For example, if the indication information of the MCS is 1, it is identified that the MCS value is a normal value. For example, if the indication information of the MCS is 0, it is identified that the MCS value is a conservative value.

When the MCS value is a conservative value, the first terminal apparatus may determine a currently available MCS value by using the configured MCS offset.

In another possible implementation, when the MCS value is a conservative value, the first terminal apparatus may determine an MCS value actually used by the first terminal apparatus, or use a configured MCS value, where the MCS value is less than a normal MCS value.

In this application, the fourth configuration information is obtained in a plurality of manners. For example, the first terminal apparatus receives the fourth configuration information from another apparatus, and the another apparatus may be, for example, a network apparatus (for example, an access network device or a location management apparatus) or another terminal apparatus. For example, the network apparatus generates configuration information, where the configuration information is the fourth configuration information, and the network apparatus sends the configuration information to the first terminal apparatus. Correspondingly, the first terminal apparatus receives the configuration information, to obtain the fourth configuration information. In this embodiment of this application, the fourth configuration information may be carried at a plurality of locations, for example, may be carried in a system message, an RRC message, or DCI scrambled by using an RNTI related to an SL-PRS.

For another example, the first terminal apparatus may obtain the fourth configuration information by using preconfigured or predefined information. It may also be understood that the fourth configuration information may be preconfigured in the first terminal apparatus; or it may be understood that the fourth configuration information may be predefined information and preconfigured in the first terminal apparatus. For another example, the first terminal apparatus obtains the fourth configuration information by using a higher layer module or an internal module of the first terminal apparatus. The fourth configuration information may be preconfigured in the first terminal apparatus, and the first terminal apparatus may obtain the fourth configuration information by using the higher layer module or the internal module.

Step 802: The first terminal apparatus sends the data based on the fourth configuration information.

Step 803: The first terminal apparatus sends the reference signal based on the fourth configuration information.

Step 803 may be an optional step. The implementation shown in FIG. 8 may not include step 803, and correspondingly, may not include step 806.

Step 804: The second terminal apparatus obtains the fourth configuration information.

For related content of the fourth configuration information, refer to the foregoing descriptions.

The second terminal apparatus may obtain the fourth configuration information in a plurality of manners. For example, the fourth configuration information may be received from another apparatus, or may be preconfigured or predefined. For related content, refer to the manner of obtaining the fourth configuration information by the first terminal apparatus. Details are not described.

In this embodiment of this application, the second terminal apparatus may obtain, by using the fourth configuration information, the transmission manner of the data sent by the first terminal apparatus. In another possible implementation, the second terminal apparatus may determine, by receiving the sidelink control information from the first terminal apparatus, the transmission manner of the data sent by the first terminal apparatus. For example, the first terminal apparatus may further send sidelink control information. The sidelink control information may be first-stage SCI, or may be first-stage SCI and second-stage SCI, or may be second-stage SCI. The sidelink control information includes the indication information of the transmission manner of the data, and the indication information of the transmission manner of the data indicates the transmission manner of the data (the foregoing content F1). Correspondingly, the second terminal apparatus receives the sidelink control information, and determines, based on the obtained indication information of the transmission manner of the data, the transmission manner of the data sent by the first terminal apparatus. The first indication information may be used for indication by using a bit in reserved bits in the first-stage SCI, so that impact on other information in the first-stage SCI can be reduced. Because the first terminal apparatus may dynamically indicate, by using the sidelink control information, a transmission manner of the data used by the first terminal apparatus, the first terminal apparatus may more flexibly select a transmission manner of each piece of to-be-transmitted data, thereby improving flexibility of the solution.

Step 805: The second terminal apparatus receives the data based on the fourth configuration information.

Step 806: The second terminal apparatus receives the reference signal based on the fourth configuration information.

In the implementation shown in FIG. 8, step 806 is an optional step, and is not a mandatory step.

In this embodiment of this application, the data sent by the first terminal apparatus may include one or more receive ends, and the reference signal sent by the first terminal apparatus may also include one or more receive ends. The receive end of the data may be the same as or may be different from the receive end of the reference signal. In this embodiment of this application, an example in which the second terminal apparatus receives the data and the reference signal is used for description. In actual application, the reference signal may be received by another apparatus, for example, the reference signal may be received by the third terminal apparatus. This is not limited in this embodiment of this application.

Because the receive end may obtain the indication information of the transmission manner of the data in a slot, the receive end may decode the data in the transmission manner, thereby improving a decoding success rate. For example, when the transmission manner is rate matching, the code block size changes, and the receive end learns of the change in advance, so that the data can be successfully decoded. For another example, when the transmission manner is the puncturing manner, the code block size does not change, and the receive end may perform decoding based on the code block size in this manner, so that the decoding can be successful.

In a possible implementation, when the first terminal apparatus transmits the data in the rate matching manner, the code block size changes. If the legacy terminal apparatus still performs decoding based on a code block size before the rate matching, a decoding error occurs. Therefore, when the first terminal apparatus transmits the data in the rate matching manner, a terminal apparatus that needs to decode the data may be a new terminal apparatus that is the same as the first terminal apparatus. In this way, a data decoding error can be avoided.

When the first terminal apparatus transmits the data in the puncturing manner, the code block size does not change. Even though both the legacy terminal apparatus and/or the new terminal apparatus may perform decoding based on the code block size before rate matching, the decoding is successful. In addition, when the first terminal apparatus performs puncturing in this application in the implementation shown in FIG. 3, a punctured location is associated with the resource for transmitting the data. Therefore, in this embodiment of this application, impact of puncturing on data performance can be controlled, and a decoding error probability can be reduced.

In addition, because the receive end (for example, the second terminal apparatus) obtains the indication information of the transmission manner, the receive end (for example, the second terminal apparatus) may receive the reference signal based on the indication information, thereby improving a success rate of receiving the reference signal and improving positioning performance.

In this embodiment of this application, a plurality of pieces of content may be indicated by a plurality of pieces of information, or may be indicated by one piece of information. In this embodiment of this application, a plurality of pieces of content configured by using one piece of configuration information may also be configured by using a plurality of different pieces of configuration information. For ease of understanding, an example in which a plurality of pieces of content are configured by using one piece of configuration information is used for description in some content in this embodiment of this application.

It should be noted that, in this embodiment of this application, that a network element (for example, a network element A) receives information from another network element (for example, a network element B) may mean that the network element A directly receives information from the network element B, or may mean that the network element A receives information from the network element B through another network element (for example, a network element C). When the network element A receives the information from the network element B via the network element C, the network element C may transparently transmit the information, or may process the information, for example, add the information to different messages for transmission, or screen the information, and send only information obtained through screening to the network element A. Similarly, in various embodiments of this application, that the network element A sends information to the network element B may mean that the network element A directly sends the information to the network element B, or may mean that the network element A sends the information to the network element B via another network element (for example, the network element C).

The terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of objects, and are not used to limit a sequence, a time sequence, priorities, or importance of the plurality of objects.

It should be noted that, names of the foregoing messages are merely examples. With evolution of communication technologies, the name of any one of the foregoing messages may change. However, regardless of how the names of the messages change, the messages fall within the protection scope of this application provided that meanings of the messages are the same as those of the foregoing messages in this application.

According to the foregoing method, FIG. 9 is a diagram of a structure of a communication apparatus according to an embodiment of this application. As shown in FIG. 9, the communication apparatus may be a first terminal apparatus, a second terminal apparatus, a third terminal apparatus, or a network apparatus, or may be a chip or a circuit, for example, a chip or a circuit that may be disposed in the first terminal apparatus, the second terminal apparatus, the third terminal apparatus, or the network apparatus.

The communication apparatus 1801 includes a processor 1802 and a transceiver 1803.

Further, the communication apparatus 1801 may include a memory 1804. In the figure, the memory 1804 is shown by dashed lines. This further indicates that the memory is optional.

Further, the communication apparatus 1801 may further include a bus system. The processor 1802, the memory 1804, and the transceiver 1803 may be connected through the bus system.

It should be understood that the processor 1802 may be a chip. For example, the processor 1802 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing method may be completed through a hardware integrated logic circuit in the processor 1802, or by using instructions in a form of software. The steps in the method disclosed with reference to embodiments of this application may be directly performed and completed by a hardware processor, or may be performed and completed by using a combination of hardware in the processor 1802 and a software module. A software module may be located in a mature storage medium in the art, such as a random access memory, a flash memory, a read-only memory, a programmable read-only memory, an electrically erasable programmable memory, or a register. The storage medium is located in the memory 1804. The processor 1802 reads information in the memory 1804 and completes the steps in the foregoing method in combination with hardware in the processor 1802.

It should be noted that, the processor 1802 in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware in the processor.

It may be understood that the memory 1804 in embodiments of this application may be a volatile memory or a nonvolatile memory, or may include both a volatile memory and a nonvolatile memory. For related descriptions of the memory in embodiments of this application, refer to the foregoing content. Details are not described herein again.

When the communication apparatus 1801 is the foregoing first terminal apparatus, in a possible implementation, the processor 1802 is configured to obtain first configuration information. The processor 1802 is configured to send a reference signal by using the transceiver 1803, for example, send the reference signal based on the first configuration information.

In a possible implementation, the processor 1802 is configured to receive the first configuration information by using the transceiver 1803.

In a possible implementation, the processor 1802 is configured to obtain second configuration information or receive second configuration information by using the transceiver 1803.

In a possible implementation, the processor 1802 is configured to send sidelink control information by using the transceiver 1803, where the sidelink control information includes first indication information.

When the communication apparatus 1801 is the foregoing second terminal apparatus, in a possible implementation, the processor 1802 is configured to obtain third configuration information. The processor 1802 is configured to receive a reference signal by using the transceiver 1803, for example, receive the reference signal based on the third configuration information.

In a possible implementation, the processor 1802 is configured to obtain second configuration information or receive second configuration information by using the transceiver 1803.

In a possible implementation, the processor 1802 is configured to receive sidelink control information by using the transceiver 1803, where the sidelink control information includes first indication information.

In a possible implementation, the processor 1802 is configured to obtain sixth configuration information or receive sixth configuration information by using the transceiver 1803.

When the communication apparatus 1801 is the foregoing first terminal apparatus, in a possible implementation, the processor 1802 is configured to obtain fourth configuration information. The processor 1802 is configured to send data by using the transceiver 1803, for example, send the data based on the fourth configuration information.

When the communication apparatus 1801 is the foregoing first terminal apparatus, in a possible implementation, the processor 1802 is configured to send a reference signal by using the transceiver 1803, for example, send the reference signal based on fourth configuration information.

When the communication apparatus 1801 is the foregoing first terminal apparatus, in a possible implementation, the processor 1802 is configured to obtain fourth configuration information or receive fourth configuration information by using the transceiver 1803.

When the communication apparatus 1801 is the foregoing second terminal apparatus, in a possible implementation, the processor 1802 is configured to obtain fourth configuration information. The processor 1802 is configured to receive data by using the transceiver 1803, for example, receive the data based on the fourth configuration information.

When the communication apparatus 1801 is the foregoing second terminal apparatus, in a possible implementation, the processor 1802 is configured to receive a reference signal by using the transceiver 1803, for example, receive the reference signal based on fourth configuration information.

When the communication apparatus 1801 is the foregoing second terminal apparatus, in a possible implementation, the processor 1802 is configured to obtain fourth configuration information or receive fourth configuration information by using the transceiver 1803.

When the communication apparatus 1801 is the foregoing network apparatus, the processor 1802 is configured to obtain configuration information. The processor 1802 is configured to send the configuration information by using the transceiver 1803. The configuration information may include one or more of the first configuration information, the second configuration information, the third configuration information, the fourth configuration information, the seventh configuration information, or the sixth configuration.

For concepts, explanations, detailed descriptions, and other steps of the communication apparatus that are related to the technical solutions provided in embodiments of this application, refer to descriptions of the content in the foregoing methods or other embodiments. Details are not described herein.

According to the foregoing method, FIG. 10 is a diagram of a structure of a communication apparatus according to an embodiment of this application. As shown in FIG. 10, the communication apparatus 1901 may include a communication interface 1903 and a processor 1902. Further, the communication apparatus 1901 may include a memory 1904. In the figure, the memory 1904 is shown by dashed lines. This further indicates that the memory is optional. The communication interface 1903 is configured to input and/or output information. The processor 1902 is configured to execute a computer program or instructions, so that the communication apparatus 1901 implements the method on a side of the first terminal apparatus, the second terminal apparatus, the third terminal apparatus, or the network apparatus in any one of the related solutions in FIG. 3, FIG. 5, FIG. 6, or FIG. 8. In this embodiment of this application, the communication interface 1903 may implement the solution implemented by the transceiver 1803 in FIG. 9, the processor 1902 may implement the solution implemented by the processor 1802 in FIG. 9, and the memory 1904 may implement the solution implemented by the memory 1804 in FIG. 9. Details are not described herein again.

According to the foregoing embodiments and a same concept, FIG. 11 is a diagram of a communication apparatus according to an embodiment of this application. As shown in FIG. 11, the communication apparatus 2001 may be a first terminal apparatus, a second terminal apparatus, a third terminal apparatus, or a network apparatus, or may be a chip or a circuit, for example, a chip or a circuit that may be disposed in the first terminal apparatus, the second terminal apparatus, the third terminal apparatus, or the network apparatus.

The communication apparatus 2001 includes a processing unit 2002 and a communication unit 2003. Further, the communication apparatus 2001 may include a storage unit 2004, or may not include a storage unit 2004. In the figure, the storage unit 2004 is shown by dashed lines. This further indicates that the memory is optional.

The communication unit 2003 is configured to input and/or output information. The processing unit 2002 is configured to execute a computer program or instructions, so that the communication apparatus 2001 implements the method on a side of the first terminal apparatus, the second terminal apparatus, the third terminal apparatus, or the network apparatus in any one of the related solutions in FIG. 3, FIG. 5, FIG. 6, or FIG. 8. In this embodiment of this application, the communication unit 2003 may implement the solution implemented by the transceiver 1803 in FIG. 9, the processing unit 2002 may implement the solution implemented by the processor 1802 in FIG. 9, and the storage unit 2004 may implement the solution implemented by the memory 1804 in FIG. 9. Details are not described herein again.

According to the methods provided in embodiments of this application, this application further provides a computer program product. The computer program product includes computer program code or instructions. When the computer program code or the instructions are run on a computer, the computer is enabled to perform the method in any one of the embodiments shown in FIG. 3, FIG. 5, FIG. 6, or FIG. 8.

According to the methods provided in embodiments of this application, this application further provides a computer-readable storage medium. The computer-readable storage medium stores program code. When the program code is run on a computer, the computer is enabled to perform the method in any one of the embodiments shown in FIG. 3, FIG. 5, FIG. 6, or FIG. 8.

According to the methods provided in embodiments of this application, this application further provides a chip system. The chip system may include a processor. The processor is coupled to a memory, and may be configured to perform the method in any one of the embodiments shown in FIG. 3, FIG. 5, FIG. 6, or FIG. 8. Optionally, the chip system further includes the memory. The memory is configured to store a computer program (which may also be referred to as code or instructions). The processor is configured to invoke the computer program from the memory and run the computer program, so that a device on which the chip system is installed performs the method in any one of the embodiments shown in FIG. 3, FIG. 5, FIG. 6, or FIG. 8.

According to the methods provided in embodiments of this application, this application further provides a system, including the foregoing one or more first terminal apparatuses and one or more second terminal apparatuses. The system may further include a third terminal apparatus, and may further include a network apparatus.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid-state drive, SSD)), or the like.

It should be noted that a part of this patent application document includes content protected by copyright. Except for making copies of patent documents of the Patent Office or recorded content of patent documents, the copyright owner reserves the copyright.

The first terminal apparatus, the second terminal apparatus, the third terminal apparatus, or the network apparatus in the foregoing apparatus embodiments corresponds to the first terminal apparatus, the second terminal apparatus, the third terminal apparatus, or the network apparatus in the method embodiments, and corresponding modules or units perform corresponding steps. For example, a communication unit (transceiver) performs a receiving or sending step in the method embodiments, and other steps except sending and receiving may be performed by a processing unit (processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A communication method, wherein the method is applicable to a first terminal apparatus, and the method comprises:

obtaining first configuration information, wherein the first configuration information indicates a transmission parameter of a reference signal used for sidelink positioning, the transmission parameter indicates a quantity of resources for transmitting the reference signal, and the quantity of resources for transmitting the reference signal is associated with a quantity of resources for transmitting data; and
sending the reference signal based on the transmission parameter, wherein the resource for the reference signal is located in a physical sidelink shared channel for transmitting the data, and the resource for transmitting the reference signal is different from the resource for transmitting the data.

**2.** The method according to claim 1, wherein the quantity of resources for transmitting the data is determined based on at least one of the following parameters:

a demodulation reference signal pattern;
a channel state information reference signal pattern;
a resource location of feedback information; or
a period of a feedback channel.

**3.** The method according to claim 1 or 2, wherein the transmission parameter further indicates a location of the resource for transmitting the reference signal.

**4.** The method according to any one of claims 1 to 3, wherein the reference signal comprises at least one of a demodulation reference signal, a channel state information reference signal, a beam management reference signal, or a sidelink positioning reference signal.

**5.** The method according to any one of claims 1 to 4, wherein the method further comprises:

obtaining second configuration information, wherein
the second configuration information comprises: indication information of a signal type that is allowed to be used as the reference signal, and/or indication information of a signal type that is not allowed to be used as the reference signal.

**6.** The method according to any one of claims 1 to 5, wherein the location of the resource for transmitting the reference signal comprises a location of a resource for the demodulation reference signal and/or the channel state information reference signal used as the reference signal in the physical sidelink shared channel; and/or
information about the quantity of resources for transmitting the reference signal comprises a quantity of resources for the demodulation reference signal and/or the channel state information reference signal used as the reference signal in the physical sidelink shared channel.

**7.** The method according to any one of claims 1 to 6, wherein the location of the resource for transmitting the reference signal comprises a location of a resource that is punctured in the physical sidelink shared channel and to which the reference signal needs to be mapped;
and/or
the quantity of resources for transmitting the reference signal comprises a quantity of resources that are punctured in the physical sidelink shared channel and to which the reference signal needs to be mapped.

**8.** The method according to any one of claims 1 to 7, wherein the first configuration information comprises indication information of M reference signal sending manners corresponding to the transmission parameter of the reference signal, and M is an integer greater than 1; and
the method further comprises:
sending sidelink control information, wherein the sidelink control information comprises first indication information, and the first indication information indicates that one of the M reference signal sending manners is used as a sending manner of the reference signal.

**9.** A communication method, wherein the method is applicable to a second terminal apparatus, and the method comprises:

obtaining third configuration information, wherein the third configuration information indicates a transmission parameter of a reference signal used for sidelink positioning, the transmission parameter indicates a quantity of resources for transmitting the reference signal, and the quantity of resources for transmitting the reference signal is associated with a quantity of resources for transmitting data; and
receiving the reference signal based on the transmission parameter, wherein the resource for the reference signal is located in a physical sidelink shared channel for transmitting the data, and the resource for transmitting the reference signal is different from the resource for transmitting the data.

**10.** The method according to claim 9, wherein the quantity of resources for transmitting the data is determined based on at least one of the following parameters:

a demodulation reference signal pattern;
a channel state information reference signal pattern;
a resource location of feedback information; or
a period of a feedback channel.

**11.** The method according to claim 9 or 10, wherein the transmission parameter further indicates a location of the resource for transmitting the reference signal.

**12.** The method according to any one of claims 9 to 11, wherein the reference signal comprises at least one of a demodulation reference signal, a channel state information reference signal, a beam management reference signal, or a sidelink positioning reference signal.

**13.** The method according to any one of claims 9 to 12, wherein the method further comprises:

obtaining second configuration information, wherein
the second configuration information comprises: indication information of a signal type that is allowed to be used as the reference signal, and/or indication information of a signal type that is not allowed to be used as the reference signal.

**14.** The method according to any one of claims 9 to 13, wherein the location of the resource for transmitting the reference signal comprises a location of a resource for the demodulation reference signal and/or the channel state information reference signal used as the reference signal in the physical sidelink shared channel; and/or
information about the quantity of resources for transmitting the reference signal comprises a quantity of resources for the demodulation reference signal and/or the channel state information reference signal used as the reference signal in the physical sidelink shared channel.

**15.** The method according to any one of claims 9 to 14, wherein the location of the resource for transmitting the reference signal comprises a location of a resource that is punctured in the physical sidelink shared channel and to which the reference signal needs to be mapped;
and/or
the quantity of resources for transmitting the reference signal comprises a quantity of resources that are punctured in the physical sidelink shared channel and to which the reference signal needs to be mapped.

**16.** The method according to any one of claims 9 to 15, wherein the first configuration information comprises indication information of M reference signal sending manners corresponding to the transmission parameter of the reference signal, and M is an integer greater than 1; and
the method further comprises:
sending sidelink control information, wherein the sidelink control information comprises first indication information, and the first indication information indicates that one of the M reference signal sending manners is used as a sending manner of the reference signal.

**17.** The method according to any one of claims 9 to 16, wherein the method further comprises:

obtaining configuration information indicating the following content:

information about a measurement window for the terminal apparatus to measure the reference signal; and/or a location of a resource for transmitting a positioning measurement report associated with the measurement window.

**18.** The method according to any one of claims 9 to 17, wherein the method further comprises:
obtaining configuration information indicating the following content:
identification information of a transmit end of the reference signal that needs to be measured by the second terminal apparatus.

**19.** A communication method, wherein the method is applicable to a second terminal apparatus, and the method comprises:

obtaining fifth configuration information, wherein the fifth configuration information indicates a transmission parameter of a reference signal used for sidelink positioning, the transmission parameter indicates a type of the reference signal, and a transmission type of the reference signal comprises a reference signal of a physical sidelink shared channel used to transmit data; and
receiving the reference signal based on the transmission parameter, wherein a resource for the reference signal is located in the physical sidelink shared channel for transmitting the data, and the resource for transmitting the reference signal is different from a resource for transmitting the data.

**20.** A communication method, wherein the method is applicable to a network apparatus, and the method comprises:

determining configuration information, wherein the configuration information indicates a transmission parameter of a reference signal used for sidelink positioning, the transmission parameter indicates a quantity of resources for transmitting the reference signal, and the quantity of resources for transmitting the reference signal is associated with a quantity of resources for transmitting data; and
sending the configuration information.

**21.** A communication method, wherein the method is applicable to a network apparatus, and the method comprises:

determining configuration information, wherein the configuration information indicates a transmission parameter of a reference signal used for sidelink positioning, the transmission parameter indicates a type of the reference signal, and a transmission type of the reference signal comprises a reference signal of a physical sidelink shared channel used to transmit data; and
sending the configuration information.

**22.** A communication method, wherein the method is applicable to a first terminal apparatus, and the method comprises:

obtaining fourth configuration information, wherein the fourth configuration information indicates a transmission manner of data, the transmission manner is rate matching or puncturing, and the data and a reference signal used for sidelink positioning are located in a same slot; and
sending the data according to the transmission manner.

**23.** A communication method, wherein the method is applicable to a second terminal apparatus, and the method comprises:

obtaining fourth configuration information, wherein the fourth configuration information indicates a transmission manner of data, the transmission manner is rate matching or puncturing, and the data and a reference signal used for sidelink positioning are located in a same slot; and
receiving the data according to the transmission manner.

**24.** A communication method, wherein the method is applicable to a network apparatus, and the method comprises:

determining fourth configuration information, wherein the fourth configuration information indicates a transmission manner of data, the transmission manner is rate matching or puncturing, and the data and a reference signal used for sidelink positioning are located in a same slot; and

sending the fourth configuration information.

**25.** A communication apparatus, comprising a processor and a communication interface, wherein the communication interface is configured to receive and send signaling, and the processor is configured to perform the method according to any one of claims 1 to 24 through the communication interface.

**26.** A communication apparatus, comprising a processor and a memory, wherein

the memory is configured to store a computer program or instructions; and
the processor is configured to execute the computer program or the instructions in the memory, to perform the method according to any one of claims 1 to 24.

**27.** A communication apparatus, comprising a processing module and a communication module, wherein the processing module is configured to perform the method according to any one of claims 1 to 24 through the communication module.

**28.** A computer-readable storage medium, wherein the computer-readable storage medium stores computer-executable instructions, and when the computer-executable instructions are invoked by a computer, the method according to any one of claims 1 to 24 is performed.

**29.** A chip system, comprising a communication interface and a processor, wherein

the communication interface is configured to input and/or output signaling or data; and
the processor is configured to execute a computer-executable program, to enable a device on which the chip system is installed to perform the method according to any one of claims 1 to 24.

**30.** A computer program product, wherein the computer program product stores computer-executable instructions, and when the computer-executable instructions are invoked by a computer, the method according to any one of claims 1 to 24 is performed.

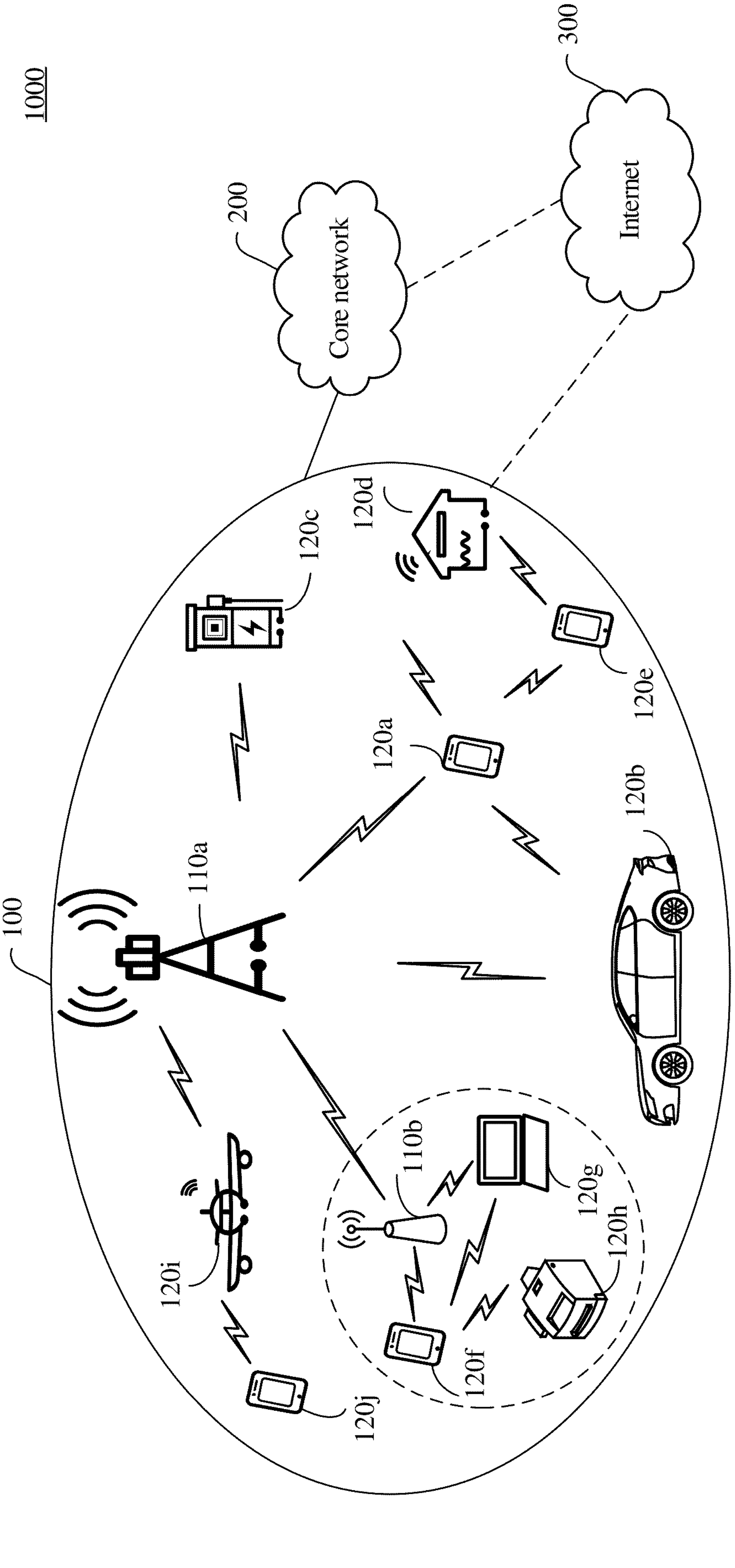
1000
200
Core network
300
Internet
100
110a
120c
120d
120a
120e
120b
110b
120g
120h
120i
120f
120j

FIG. 1

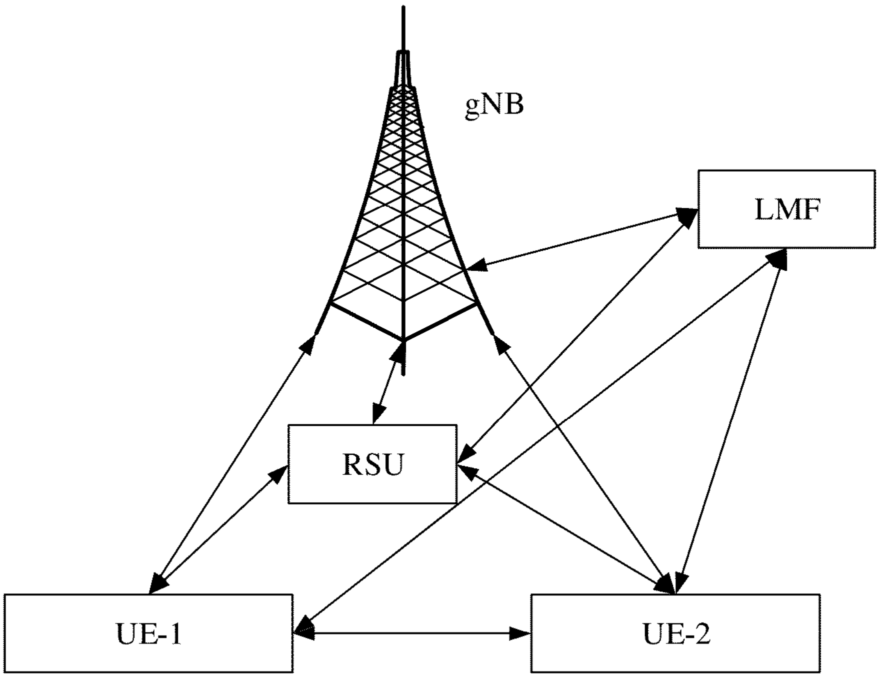
gNB
LMF
RSU
UE-1
UE-2

FIG. 2

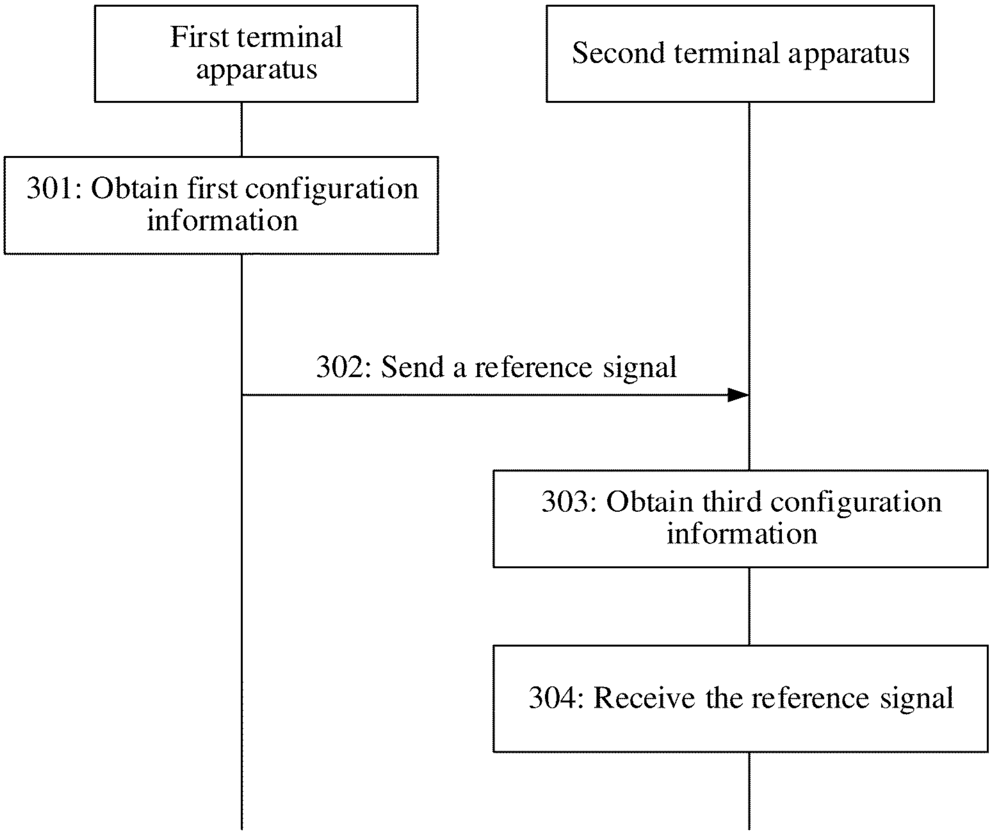
First terminal apparatus
Second terminal apparatus
301: Obtain first configuration information
302: Send a reference signal
303: Obtain third configuration information
304: Receive the reference signal

FIG. 3

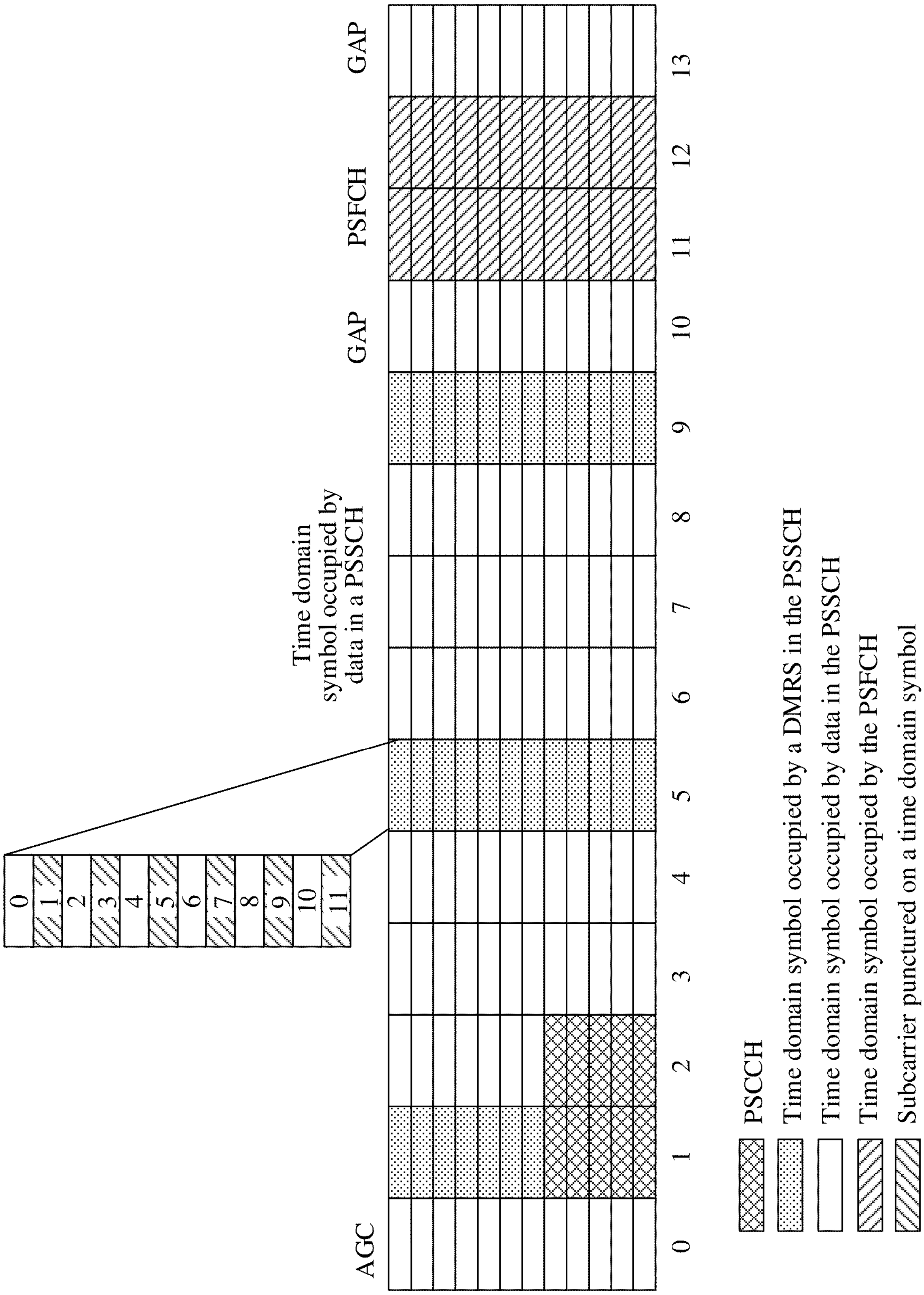

AGC
GAP
PSFCH
GAP
Time domain symbol occupied by data in a PSSCH
0
1
2
3
4
5
6
7
8
9
10
11
12
13
0
1
2
3
4
5
6
7
8
9
10
11
PSCCH
Time domain symbol occupied by a DMRS in the PSSCH
Time domain symbol occupied by data in the PSSCH
Time domain symbol occupied by the PSFCH
Subcarrier punctured on a time domain symbol


FIG. 4A

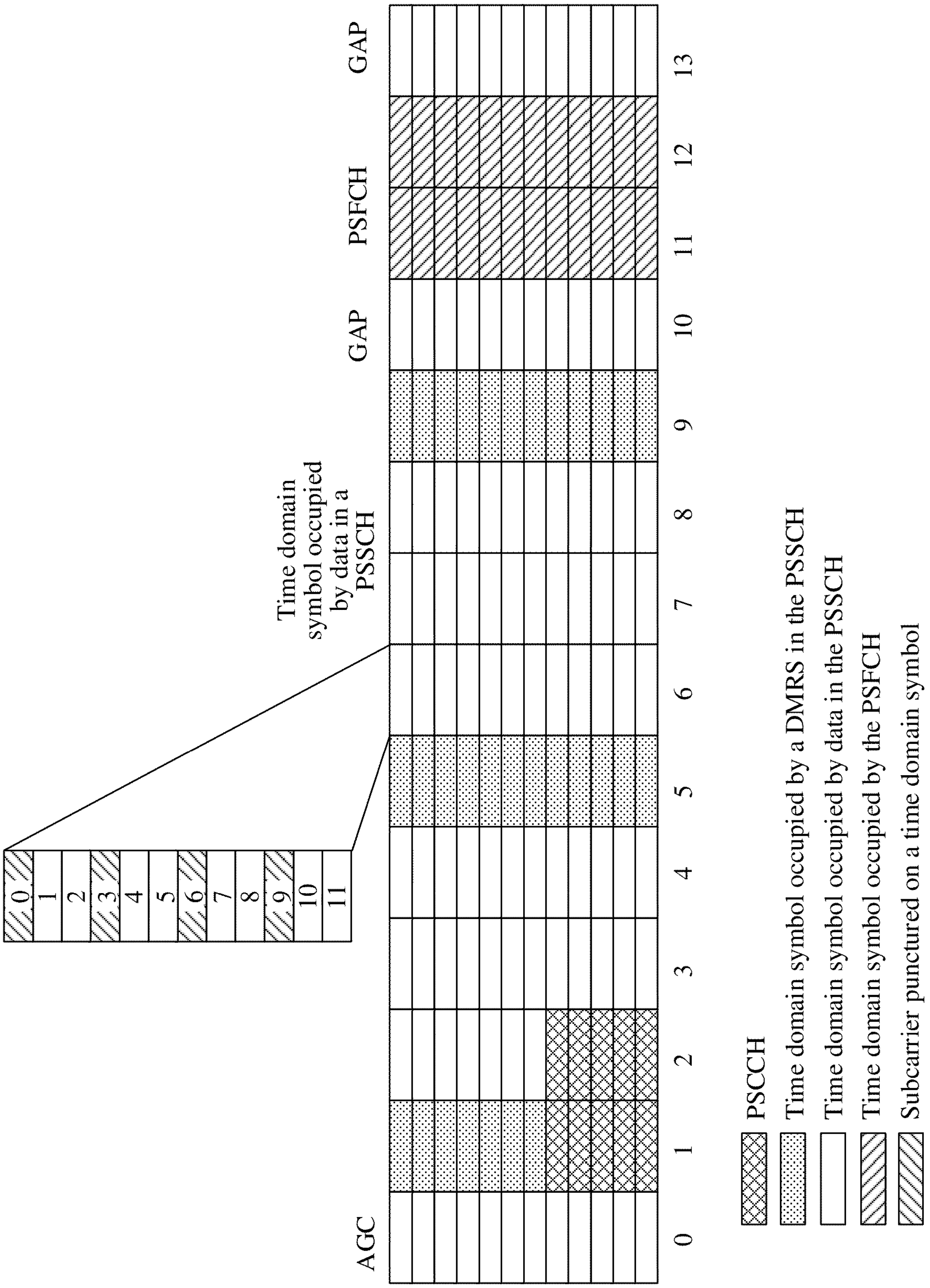
AGC
GAP
PSFCH
GAP
Time domain symbol occupied by data in a PSSCH
0
1
2
3
4
5
6
7
8
9
10
11
12
13
0
1
2
3
4
5
6
7
8
9
10
11
PSCCH
Time domain symbol occupied by a DMRS in the PSSCH
Time domain symbol occupied by data in the PSSCH
Time domain symbol occupied by the PSFCH
Subcarrier punctured on a time domain symbol

FIG. 4B

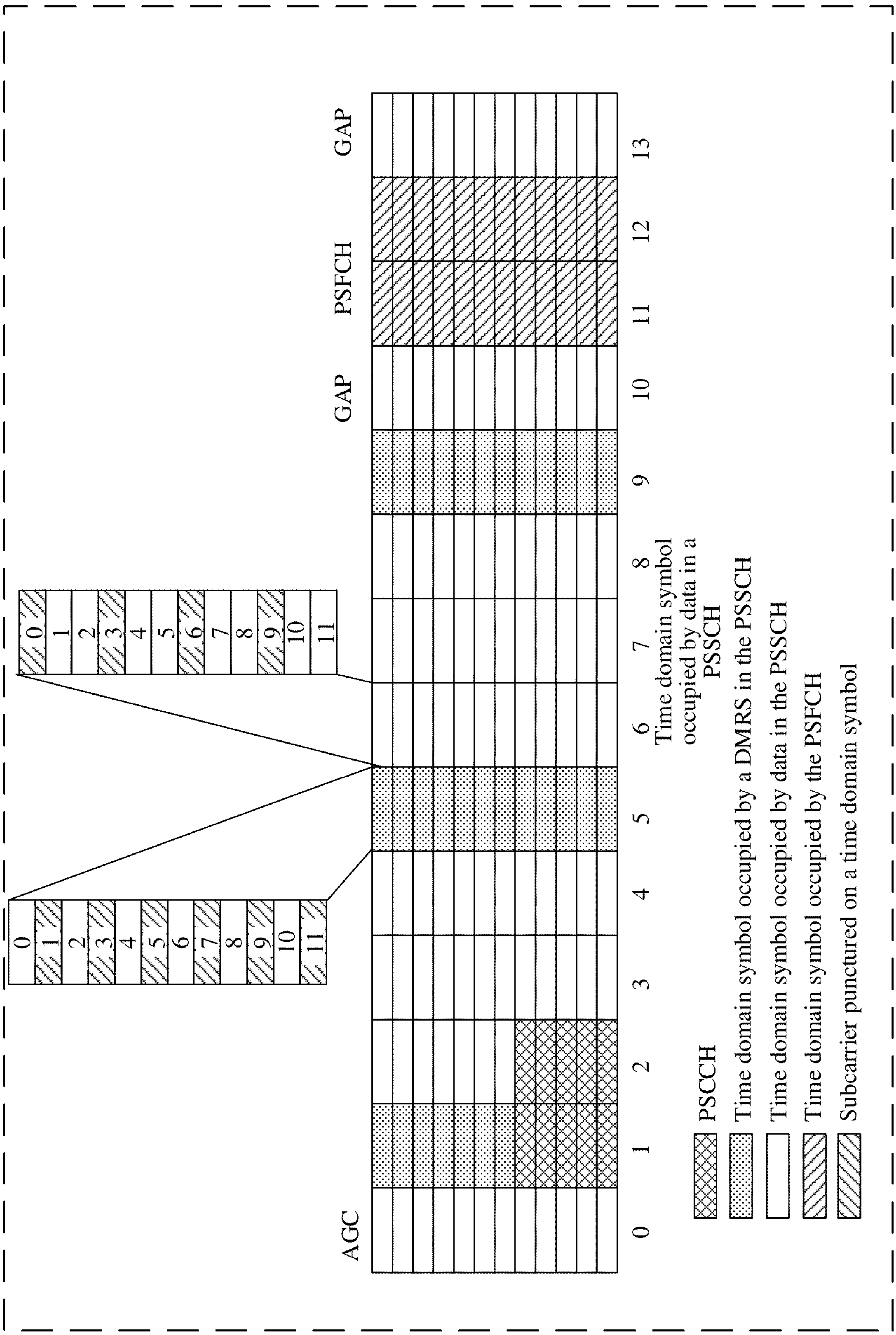
AGC
GAP
PSFCH
GAP
0
1
2
3
4
5
6
7
8
9
10
11
12
13
0
1
2
3
4
5
6
7
8
9
10
11
0
1
2
3
4
5
6
7
8
9
10
11
Time domain symbol occupied by data in a PSSCH
PSCCH
Time domain symbol occupied by a DMRS in the PSSCH
Time domain symbol occupied by data in the PSSCH
Time domain symbol occupied by the PSFCH
Subcarrier punctured on a time domain symbol

FIG. 4C

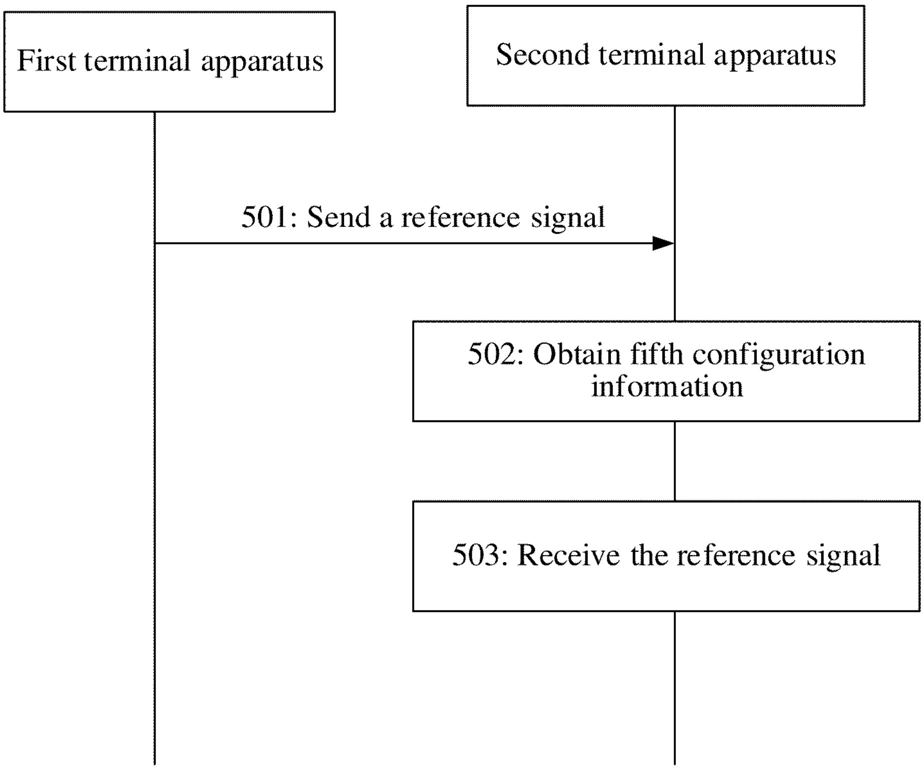
First terminal apparatus
Second terminal apparatus
501: Send a reference signal
502: Obtain fifth configuration information
503: Receive the reference signal

FIG. 5

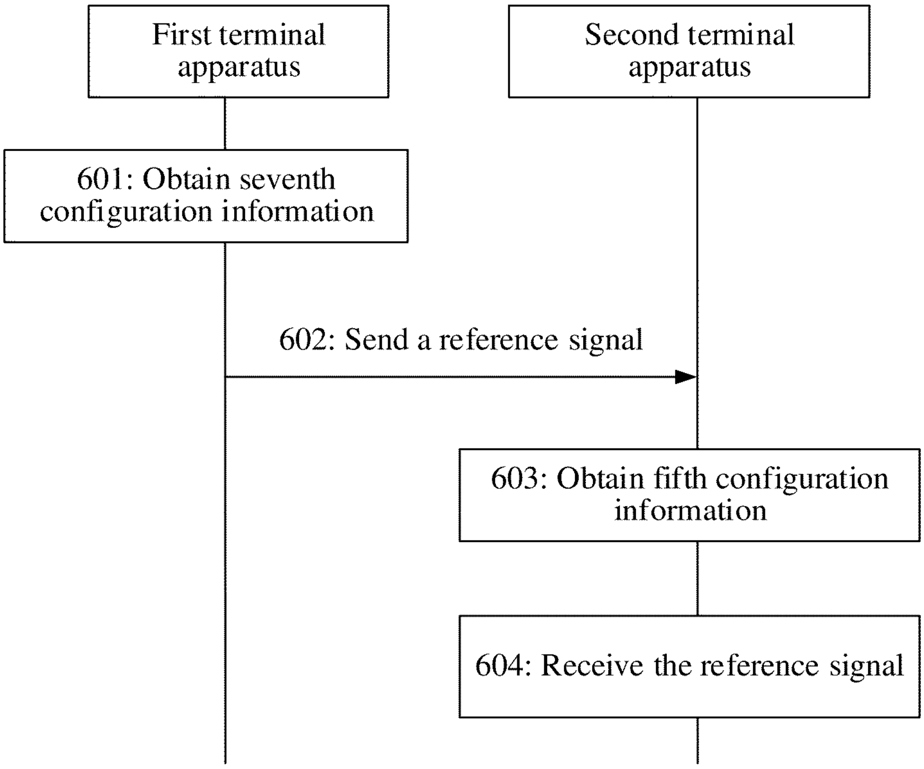
First terminal apparatus
Second terminal apparatus
601: Obtain seventh configuration information
602: Send a reference signal
603: Obtain fifth configuration information
604: Receive the reference signal

FIG. 6

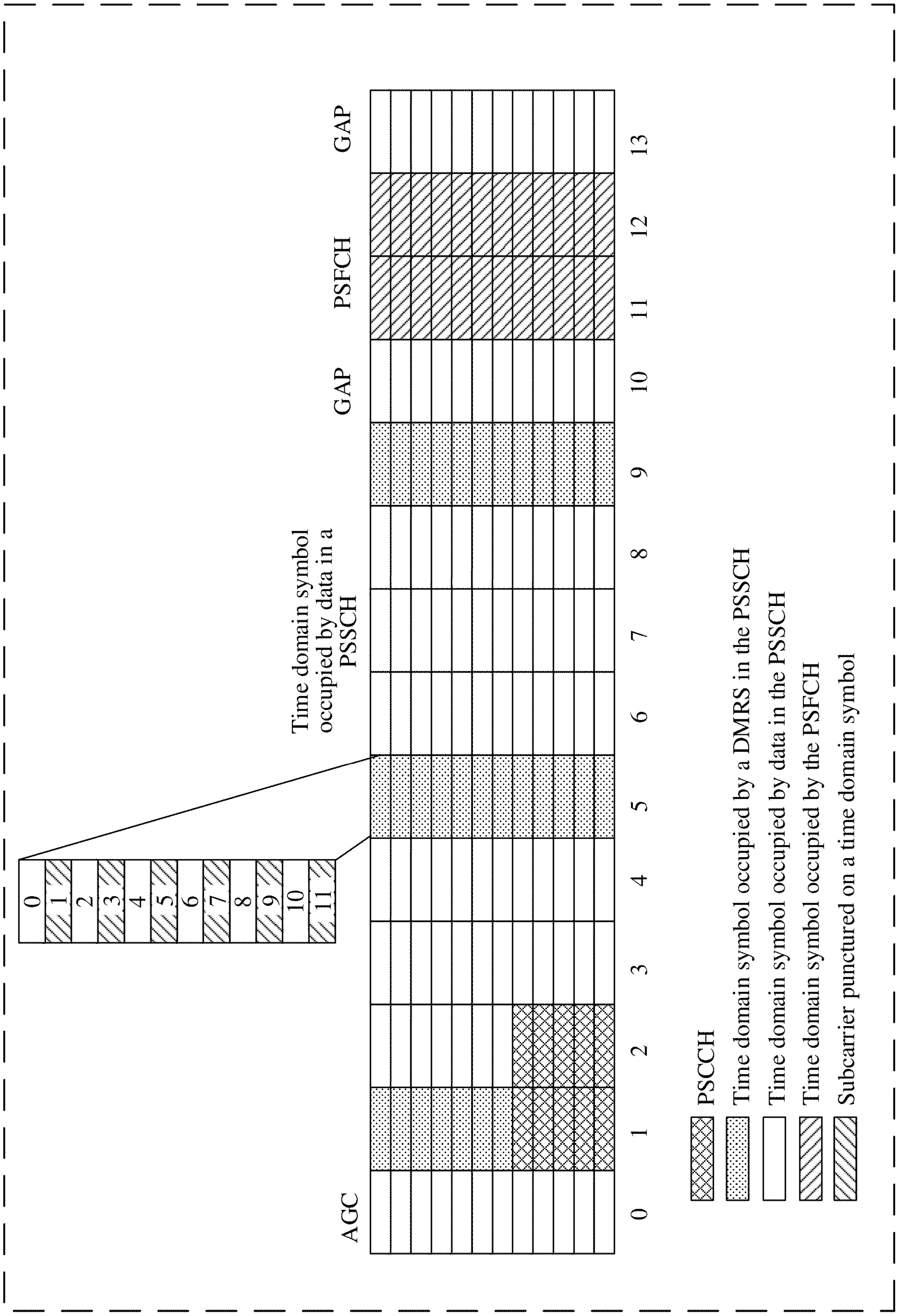
AGC
GAP
PSFCH
GAP
Time domain symbol occupied by data in a PSSCH
0
1
2
3
4
5
6
7
8
9
10
11
0
1
2
3
4
5
6
7
8
9
10
11
12
13
PSCCH
Time domain symbol occupied by a DMRS in the PSSCH
Time domain symbol occupied by data in the PSSCH
Time domain symbol occupied by the PSFCH
Subcarrier punctured on a time domain symbol

FIG. 7

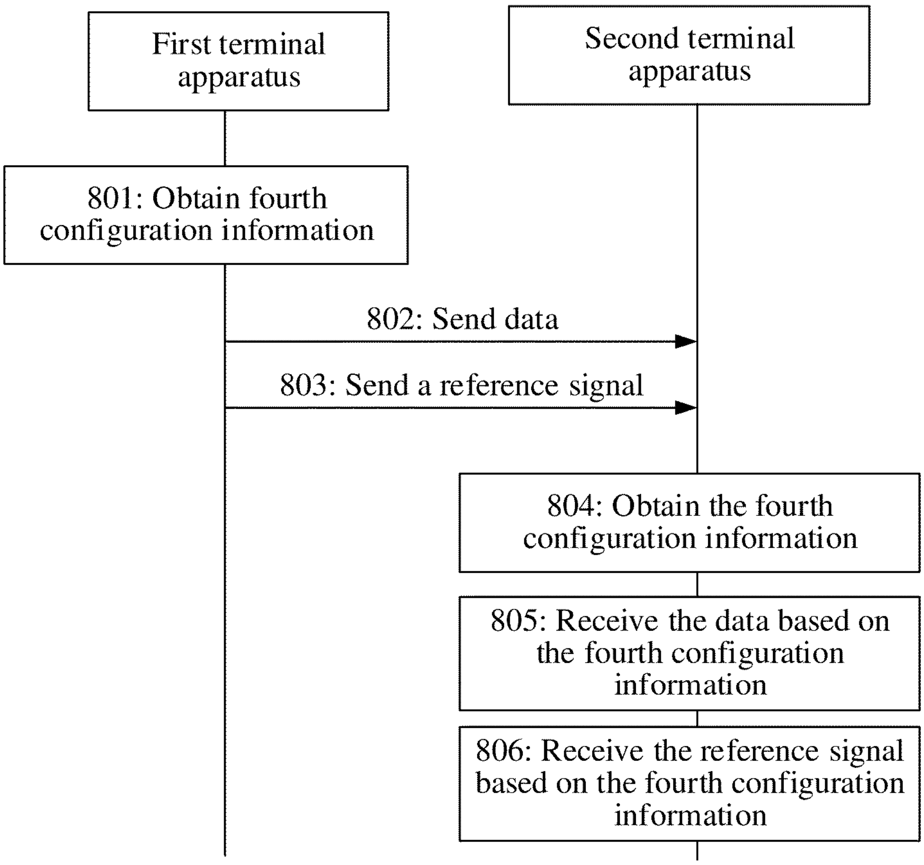
First terminal apparatus
Second terminal apparatus
801: Obtain fourth configuration information
802: Send data
803: Send a reference signal
804: Obtain the fourth configuration information
805: Receive the data based on the fourth configuration information
806: Receive the reference signal based on the fourth configuration information

FIG. 8

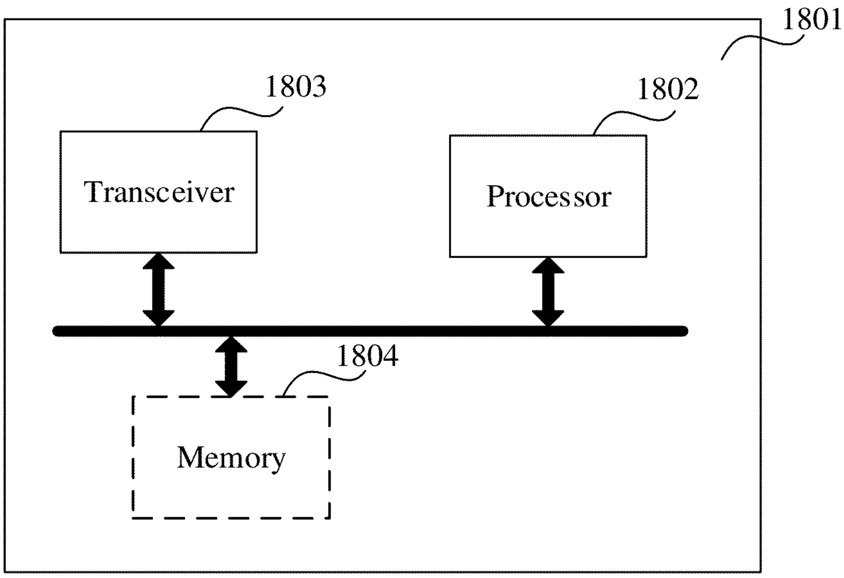
1801
1803
1802
Transceiver
Processor
1804
Memory

FIG. 9

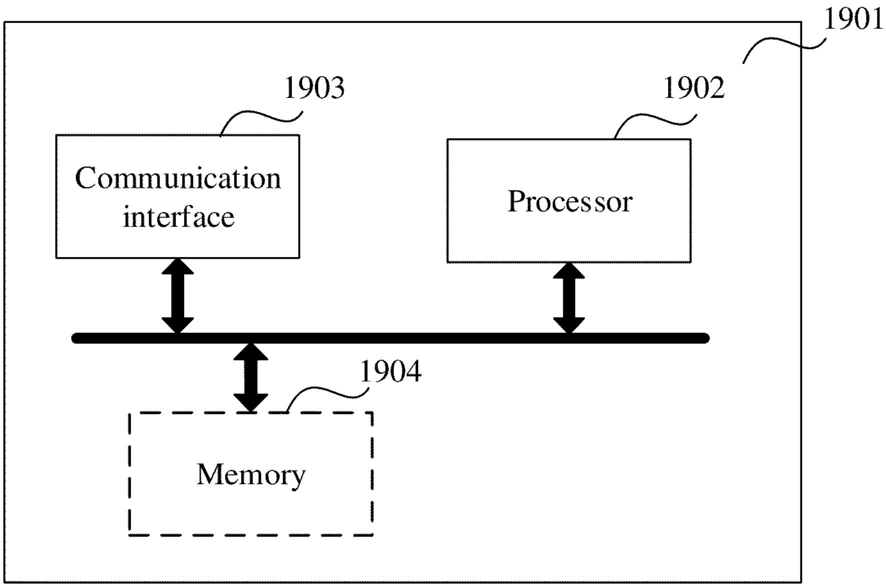
1901
1903
1902
Communication interface
Processor
1904
Memory

FIG. 10

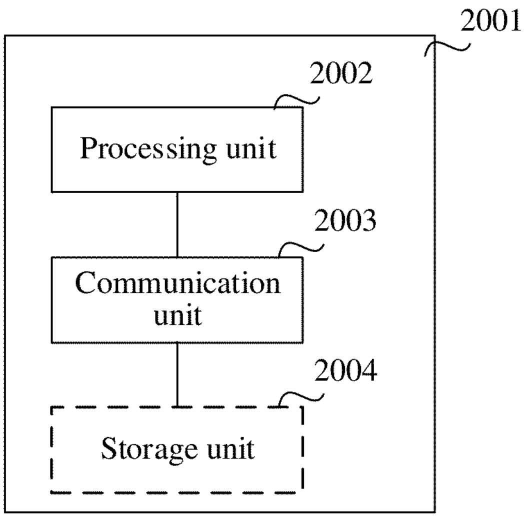
2001
2002
Processing unit
2003
Communication unit
2004
Storage unit

FIG. 11

**INTERNATIONAL SEARCH REPORT**

International application No. **PCT/CN2024/070618**

**A. CLASSIFICATION OF SUBJECT MATTER**

H04W64/00(2009.01)i; H04W72/25(2023.01)i

According to International Patent Classification (IPC) or to both national classification and IPC

**B. FIELDS SEARCHED**

Minimum documentation searched (classification system followed by classification symbols)

H04W64/-; H04W72/-

Documentation searched other than minimum documentation to the extent that such documents are included in the fields searched

Electronic data base consulted during the international search (name of data base and, where practicable, search terms used)

CNABS; CNTXT; CNKI; ENTXTC: 侧链, 侧行, 旁链路, 链路, 直连链路, 直通链路, 边链路, 辅链路, sidelink, SL, 定位, 参考信号, 相关, 关联, 有关, 匹配, 数据, 数量, 数目, 物理侧行共享信道, 时隙, 打孔, 速率, 传输, 发送; VEN; ENTXT; USTXT; EPTXT; WOTXT; 3GPP: sidelink, SL, PRS, SL-PRS, DMRS, Position+, Reference Signal, number?, associate+, physical sidelink shared channel, PSSCH, slot?

**C. DOCUMENTS CONSIDERED TO BE RELEVANT**

| Category* | Citation of document, with indication, where appropriate, of the relevant passages | Relevant to claim No. |
|---|---|---|
| X | NTT DOCOMO, INC. "R1-2204385 Discussions on Potential Solutions for SL Positioning" *3GPP TSG RAN WG1 #109-e,* 29 April 2022 (2022-04-29), sections 2.3-3, and figure 7 | 1-30 |
| A | CN 113543314 A (HUAWEI TECHNOLOGIES CO., LTD.) 22 October 2021 (2021-10-22) entire document | 1-30 |
| A | CN 114257355 A (SPREADTRUM COMMUNICATIONS (SHANGHAI) CO., LTD.) 29 March 2022 (2022-03-29) entire document | 1-30 |
| A | CN 114339987 A (SPREADTRUM COMMUNICATIONS (SHANGHAI) CO., LTD.) 12 April 2022 (2022-04-12) entire document | 1-30 |
| A | CN 115136674 A (QUALCOMM INC.) 30 September 2022 (2022-09-30) entire document | 1-30 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 March 2024** | **07 April 2024** |

| Name and mailing address of the ISA/CN | Authorized officer |
|---|---|
| **China National Intellectual Property Administration (ISA/CN)<br>China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2024/070618**

**C. DOCUMENTS CONSIDERED TO BE RELEVANT**

| Category* | Citation of document, with indication, where appropriate, of the relevant passages | Relevant to claim No. |
|---|---|---|
| A | CN 111436131 A (HUAWEI TECHNOLOGIES CO., LTD.) 21 July 2020 (2020-07-21)<br>entire document | 1-20 |
| A | US 2022416976 A1 (LG ELECTRONICS INC.) 29 December 2022 (2022-12-29)<br>entire document | 1-30 |

Form PCT/ISA/210 (second sheet) (July 2022)

**INTERNATIONAL SEARCH REPORT**

International application No.
**PCT/CN2024/070618**

**Box No. III Observations where unity of invention is lacking (Continuation of item 3 of first sheet)**

This International Searching Authority found multiple inventions in this international application, as follows:

Claims 1-21 relate to a sidelink reference signal and transmission data multiplexing a physical sidelink shared channel.

Claims 22-24 relate to the selection of a data transmission method.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/CN2024/070618**

| Patent document cited in search report | Publication date (day/month/year) | Patent family member(s) | Publication date (day/month/year) |
|---|---|---|---|
| CN 113543314 A | 22 October 2021 | WO 2021204128 A1 | 14 October 2021 |
| | | EP 4132171 A1 | 08 February 2023 |
| | | EP 4132171 A4 | 04 October 2023 |
| CN 114257355 A | 29 March 2022 | CN 114257355 B | 19 January 2024 |
| | | WO 2022062891 A1 | 31 March 2022 |
| | | EP 4221033 A1 | 02 August 2023 |
| | | US 2023362868 A1 | 09 November 2023 |
| CN 114339987 A | 12 April 2022 | CN 114339987 B | 24 October 2023 |
| | | WO 2022068836 A1 | 07 April 2022 |
| CN 115136674 A | 30 September 2022 | TW 202137786 A | 01 October 2021 |
| | | KR 20220155996 A | 24 November 2022 |
| | | JP 2023519116 A | 10 May 2023 |
| | | BR 112022018116 A2 | 25 October 2022 |
| | | US 2023056831 A1 | 23 February 2023 |
| | | EP 4122256 A1 | 25 January 2023 |
| | | WO 2021188220 A1 | 23 September 2021 |
| | | IN 202247042807 A | 05 August 2022 |
| | | VN 91328 A | 25 November 2022 |
| CN 111436131 A | 21 July 2020 | EP 3905817 A1 | 03 November 2021 |
| | | EP 3905817 A4 | 16 March 2022 |
| | | KR 20210111845 A | 13 September 2021 |
| | | KR 102603072 B1 | 15 November 2023 |
| | | US 2021337514 A1 | 28 October 2021 |
| | | WO 2020143750 A1 | 16 July 2020 |
| | | VN 81336A A | 25 October 2021 |
| US 2022416976 A1 | 29 December 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310200744
- CN 202310155852